# EUROPÄISCHE PATENTSCHRIFT

(11) **EP 4 258 966 B1**
(45) Veröffentlichungstag und Bekanntmachung des Hinweises auf die Patenterteilung: **01.01.2025**
(21) Anmeldenummer: 21811281.1
(22) Anmeldetag: 10.11.2021
(51) Int. Cl.: A47L 9/28, A47L 5/36, A47L 9/12

(54) **SAUGGERÄT MIT VERSCHLUSS FÜR BATTERIEEINHEIT-AUFNAHME**
SUCTION DEVICE WITH A CLOSURE FOR A BATTERY UNIT RECEIVING AREA
DISPOSITIF D'ASPIRATION COMPRENANT UNE FERMETURE POUR UNE ZONE DE RÉCEPTION D'UNITÉ DE BATTERIE

(30) Priorität: 08.12.2020 DE 102020132583
(43) Veröffentlichungstag der Anmeldung: 18.10.2023
(73) Patentinhaber: Alfred Kärcher SE & Co. KG, 71364 Winnenden (DE)
(72) Erfinder: FRANK, Jürgen, 71364 Winnenden (DE)
(74) Vertreter: Hoeger, Stellrecht & Partner Patentanwälte mbB
(86) Internationale Anmeldenummer: PCT/EP2021/081273
(87) Internationale Veröffentlichungsnummer: WO 2022/122287

(56) Entgegenhaltungen:
- EP-A2- 2 907 439
- WO-A1-2014/119160
- US-A1- 2017 245 716

## Beschreibung

Die Erfindung betrifft ein Sauggerät, umfassend einen Gerätekörper, eine Gebläseeinrichtung zur Erzeugung eines Saugstroms, eine Batterieeinrichtung mit mindestens einer Batterieeinheit zur Bereitstellung elektrischer Energie, und mindestens eine Aufnahme für eine Batterieeinheit, welche an dem Gerätekörper angeordnet ist.

Die WO 2014/044296 A1 offenbart einen Staubsauger, umfassend einen Schmutzsammelbehälter für eingesaugtes Sauggut, ein Saugaggregat zum Beaufschlagen des Schmutzsammelbehälters mit Unterdruck über einen Absaugraum, mindestens ein in Strömungsrichtung der vom Saugaggregat abgesaugten Luft zwischen dem Schmutzsammelbehälter und dem Absaugraum angeordnetes Filterelement und eine das Filterelement reinraumseitig abdeckende Filterabdeckung, mindestens eine wiederaufladbare Batterie zum Bereitstellen elektrischer Energie für das Saugaggregat und mindestens eine Batterieaufnahme zum Haltern der mindestens einen Batterie am Staubsauger. Der Staubsauger weist einen Batteriedeckel auf, der die mindestens eine Batterieaufnahme umfasst, und der, bezogen auf eine Positionierung des Staubsaugers auf einer Bodenfläche in einer Betriebsstellung, oberhalb der Filterabdeckung angeordnet ist, wobei der Batteriedeckel von einer Schließstellung, in der er die Filterabdeckung überdeckt, in eine Öffnungsstellung, in der ein Benutzer reinraumseitig Zugriff auf die Filterabdeckung hat, und umgekehrt überführbar ist.

Die DE 10 2012 100 047 A1 offenbart einen Akkutischsauger.

Die US 4,640,106 offenbart ein Gerät zur Verhinderung der Verwendung eines Kassettenbanddecks.

Die DE 20 2011 052 208 U1 offenbart eine Haltevorrichtung für einen Staubsaugerbeutel.

Die WO 2012/107595 A1 offenbart einen Staubsauger, umfassend einen Saugeinlass, einen Schmutzsammelbehälter, eine Filtereinrichtung, eine Absaugleitung, ein Saugaggregat, wobei der Schmutzsammelbehälter über die Filtereinrichtung und die Absaugleitung mit dem Saugaggregat in Strömungsverbindung steht und die Filtereinrichtung vom Saugaggregat mit Unterdruck beaufschlagt ist, und eine Fremdluftventileinrichtung, wobei die Filtereinrichtung reinseitig über die Fremdluftventileinrichtung mit Fremdluft beaufschlagbar ist und die Fremdluftventileinrichtung zur Abreinigung der Filtereinrichtung aus einer geschlossenen Ventilstellung in eine geöffneten Ventilstellung und wieder zurück aus der geöffneten Ventilstellung in eine geschlossene Ventilstellung bringbar ist. Eine Batterieeinrichtung ist zur Energieversorgung der Fremdluftventileinrichtung vorgesehen.

Die WO 2012/107103 A1 offenbart ein Verfahren zur Abreinigung eines Filters eines Staubsaugers.

Die WO 2015/139751 A1 offenbart ebenfalls ein Verfahren zum Abreinigen eines Filters einer Stabsaugvorrichtung.

Die EP 3 162 267 A1 offenbart einen Staubsauger.

Die CN 209996199 U, die JP 2018 186931 A, die CN 107198495 A, die CN 206293491 U, die CN 206285056 U und die CN 106175601 A offenbaren ebenfalls Sauger.

Die WO 2014/119160 A1 offenbart einen Staubsauger mit einer Batterieeinrichtung.

Die WO 00/36969 A1 offenbart einen Sauger mit einem Batteriepack.

Die US 2005/0155177 A1 offenbart einen Staubsauger, wobei ein Batteriepack benachbart zu der Unterseite eines Tanks angeordnet ist.

Die JP 1-209038 offenbart einen Staubsauger.

Die EM 006934220-0001 offenbart einen Akku-Staubsauger.

Der Erfindung liegt die Aufgabe zugrunde, ein Sauggerät der eingangs genannten Art bereitzustellen, welches sich auf einfache Weise bedienen lässt.

Diese Aufgabe wird bei dem eingangs genannten Sauggerät erfindungsgemäß dadurch gelöst, dass die mindestens eine Aufnahme eine Kammer umfasst, dass an der Kammer ein beweglicher Verschluss angeordnet ist, wobei der Verschluss eine erste Stellung aufweist, in welcher die Kammer durch den Verschluss geschlossen ist, und eine zweite Stellung aufweist, wenn die Batterieeinheit an der mindestens einen Aufnahme elektrisch wirksam positioniert ist, und dass der Verschluss so angeordnet und ausgebildet ist, dass bei Entnahme der Batterieeinheit von der mindestens einen Aufnahme der Verschluss automatisch von der zweiten Stellung in die erste Stellung geht, und beim Einführen der Batterieeinheit in die mindestens eine Aufnahme der Verschluss automatisch von der ersten Stellung in die zweite Stellung geht.

Durch die Bereitstellung einer Kammer mit Verschluss an einer Aufnahme lässt sich beispielsweise eine elektrische Kontakteinrichtung an dem Gerätekörper, welche zur Bereitstellung eines elektrischen Kontakts mit einer entsprechenden Batterieeinheit vorgesehen ist, geschützt und insbesondere staubgeschützt anordnen.

Wenn die entsprechende Batterieeinheit nicht an der Aufnahme elektrisch wirksam positioniert ist, dann ist die Kammer durch den Verschluss geschlossen. Dadurch lässt sich insbesondere ein Staubschutz für den Innenraum der Kammer und insbesondere die elektrische Kontakteinrichtung erreichen.

Ein Bediener muss bei der erfindungsgemäßen Lösung nicht direkt den Verschluss bewegen. Die Bewegung des Verschlusses beim Einsetzen einer Batterieeinheit erfolgt automatisch, um den Verschluss zu öffnen. Beim Herausnehmen einer Batterieeinheit erfolgt die Bewegung des Verschlusses wiederum automatisch, um die Kammer zu schließen. Es ergibt sich dadurch ein hoher Bed ien u ngskomfort.

Durch die erfindungsgemäße Lösung ist es auch auf einfache Weise möglich, die Batterieeinheit nur mit einem Teilbereich in der Kammer elektrisch wirksam zu positionieren. Dadurch kann diese auf einfache Weise eingesetzt werden und entnommen werden. Beispielsweise ist es dadurch auf einfache Weise realisierbar, einem Bediener einen Zugang für einen Griffbereich der Batterieeinheit zu ermöglichen, wenn diese eingesetzt ist.

Weiterhin ist dadurch beispielsweise eine Ladezustandsanzeige an der entsprechenden Batterieeinheit für einen Bediener auf einfache Weise zugänglich.

Weiterhin lässt sich dadurch auch auf effektive Weise eine Kühlung (insbesondere Luftkühlung) der Batterieeinheit erreichen.

Günstig ist es, wenn die Kammer einen Innenraum aufweist, und wenn in der zweiten Stellung der Verschluss in dem Innenraum positioniert ist. Dadurch bildet der Verschluss in der zweiten Stellung kein "abstehendes Teil" an dem Sauggerät. Die Beschädigungsgefahr ist dadurch stark verringert.

Ganz besonders vorteilhaft ist es, wenn eine Bewegung des Verschlusses von der ersten Stellung in die zweite Stellung durch eine Bewegung der Batterieeinheit angetrieben ist. Die Bewegung der Batterieeinheit ist dabei insbesondere eine Einsetzbewegung der Batterieeinheit an der entsprechenden Aufnahme. Dadurch lässt sich auf einfache Weise ein automatischer Übergang des Verschlusses von der ersten Stellung in die zweite Stellung erreichen.

Es ist dann günstig, wenn der Verschluss mindestens eine Angriffsfläche für die Batterieeinheit aufweist, wobei bei Anlage der Batterieeinheit an die mindestens eine Angriffsfläche und Bewegung der Batterieeinheit in die Kammer der Verschluss von der ersten Stellung in die zweite Stellung übergeht. Die Batterieeinheit liegt an dem Verschluss an, und eine Bewegung (und insbesondere Translationsbewegung) der Batterieeinheit beim Einsetzen sorgt für die entsprechende automatische Bewegung des Verschlusses.

Günstig ist es ferner, wenn eine Rückstelleinrichtung vorgesehen ist, welche eine Bewegung des Verschlusses von der zweiten Stellung in die erste Stellung antreibt. Durch die Rückstelleinrichtung lässt es sich auf einfache Weise erreichen, dass bei Entfernen einer Batterieeinheit der Verschluss automatisch von seiner zweiten Stellung in die erste Stellung übergeht.

Bei einer konstruktiv einfachen Ausführungsform ist die Rückstelleinrichtung eine Federeinrichtung oder umfasst eine solche. Die Federeinrichtung ist so angeordnet und ausgebildet, dass deren Federkraft bestrebt ist, den Verschluss von der zweiten Stellung in die erste Stellung zu bringen.

Es ist dann günstig, wenn der Verschluss mindestens eine Anlagefläche für die Batterieeinheit aufweist, wobei in der zweiten Stellung der Verschluss mit der mindestens einen Anlagefläche an der Batterieeinheit anliegt und durch die Anlage eine Beweglichkeit des Verschlusses zu der Batterieeinheit gesperrt ist. Es wird dadurch die Rückstelleinrichtung gewissermaßen unwirksam gemacht; die Batterieeinheit bildet eine Sperre für eine Herausbewegung des Verschlusses aus der zweiten Stellung. Wenn dann die Batterieeinheit entfernt ist, dann ist keine Gegenanlagefläche für den Verschluss mehr vorhanden, und dieser kann angetrieben durch eine Rückstelleinrichtung automatisch von der zweiten Stellung in die erste Stellung übergehen. Der entsprechende Rückstellmechanismus lässt sich auf konstruktiv einfache Weise realisieren.

Günstigerweise ist an der Kammer eine elektrische Kontakteinrichtung für die Batterieeinheit angeordnet, und bei elektrisch wirksamer Positionierung der Batterieeinheit an der Kammer ist eine elektrische Verbindung zwischen der Batterieeinheit und der elektrischen Kontakteinrichtung hergestellt, insbesondere mit mindestens einem der Folgenden:
- die elektrische Kontakteinrichtung weist in einen Innenraum der Kammer und/oder ist in dem Innenraum der Kammer angeordnet;
- die elektrische Kontakteinrichtung ist in einem Bereich eines Endes der Kammer angeordnet, welches abgewandt ist zu einem Ende der Kammer, an welchem der Verschluss angeordnet ist.

Die elektrische Kontakteinrichtung lässt sich dadurch geschützt in der Kammer anordnen. Es lässt sich auf einfache Weise eine elektrische Verbindung zwischen der elektrischen Kontakteinrichtung und der Batterieeinheit herstellen.

Vorteilhafterweise ist an dem Verschluss mindestens ein Sammelelement und/oder Abführungselement für Fluid angeordnet, welches insbesondere mit dem Verschluss beweglich ist. An dem Verschluss und insbesondere der Außenseite eines Verschlusses kann sich Fluid ansammeln wie beispielsweise Staub oder auch Wassertropfen usw. Wenn der Verschluss beim Übergang von der ersten Stellung in die zweite Stellung in die Kammer gebracht wird, besteht die grundsätzliche Gefahr, dass Fluid von dem Verschluss abtropft und insbesondere auf eine elektrische Kontakteinrichtung in dem Innenraum der Kammer gelangt. Durch das Sammelelement und/oder Abführungselement wird Fluid gesammelt, um zumindest eine direkte Beaufschlagung einer elektrischen Kontakteinrichtung in der Kammer zu verhindern. Über das Sammelelement und/oder Abführungselement kann gezielt ein Strömungspfad oder es können gezielt mehrere Strömungspfade bereitgestellt werden, welche dafür sorgen, dass, wenn Fluid von dem Verschluss "abtropft", dies gezielt an der elektrischen Kontakteinrichtung vorbeigeführt wird.

Es ist dann günstig, wenn mindestens eines der Folgenden vorgesehen ist:
- das mindestens eine Sammelelement und/oder Abführungselement ist als Rinne ausgebildet;
- das mindestens eine Sammelelement und/oder Abführungselement sitzt an einer Außenseite des Verschlusses;
- das mindestens eine Sammelelement und/oder Abführungselement weist mindestens einen Aufnahmeraum für Fluid auf;
- das mindestens eine Sammelelement und/oder Abführungselement ist so an dem Verschluss angeordnet, dass eine oder mehrere Öffnungen des mindestens einen Sammelelements und/oder Abführungselements, über die Fluid abströmen kann, in der zweiten Stellung des Verschlusses beabstandet zu einer elektrischen Kontakteinrichtung, welche an der Kammer sitzt, positioniert sind, und insbesondere ein direkter Strömungspfad für Fluid, welches über eine Öffnung des mindestens einen Sammelelements und/oder Abführungselements abströmt, beabstandet zu der elektrischen Kontakteinrichtung ist;
- das mindestens eine Sammelelement und/oder Abführungselement ist mindestens einseitig seitlich offen.

Durch die Ausbildung des Sammelelements und/oder Abführungselements als Rinne bzw. mit einem Aufnahmeraum lässt sich gezielt Fluid sammeln und es lässt sich dann auch gezielt abführen. Es lässt sich auf effektive Weise verhindern, dass insbesondere in der zweiten Stellung oder bei Stellungen zwischen der ersten Stellung und der zweiten Stellung Fluid (Schmutzfluid, Wassertropfen) direkt auf die elektrische Kontakteinrichtung in der Kammer gelangen können. Durch die Öffnung oder Öffnungen lässt sich entsprechend gezielt Fluid von dem Sammelelement und/oder Abführungselement abführen.

Ganz besonders vorteilhaft ist es, wenn bei an der mindestens einen Aufnahme positionierter Batterieeinheit die Batterieeinheit mit einem ersten Teilbereich innerhalb der Kammer positioniert ist, und mit einem zweiten Teilbereich außerhalb der Kammer positioniert ist. Dadurch ergibt sich eine konstruktiv einfache Ausbildung der mindestens einen Aufnahme. Wenn eine Batterieeinheit an der entsprechenden Aufnahme eingesetzt ist, dann ragt sie über den zweiten Teilbereich über die Kammer hinaus. Sie kann dadurch für einen Bediener auf einfache Weise gegriffen werden, um sie zu entfernen. Entsprechend ist auch das Einsetzen erleichtert. Der Mechanismus mit dem automatischen Übergang von der ersten Stellung in die zweite Stellung des Verschlusses und mit dem Übergang von der zweiten Stellung in die erste Stellung des Verschlusses lässt sich auf konstruktiv einfache Weise ausbilden. Eine Ladezustandsanzeige, welche an der Batterieeinheit angeordnet ist, lässt sich für einen Bediener auf einfache Weise erkennen. Über den zweiten Teilbereich ist ein Teil der Batterieeinheit außerhalb der geschlossenen Kammer angeordnet. Dadurch ergibt sich eine effektive Kühlbarkeit der Batterieeinheit bzw. ein effektiver Schutz vor Überhitzung.

Der Verschluss kann einteilig oder mehrteilig ausgebildet sein. Er kann beispielsweise als einteilige oder mehrteilige Klappe ausgebildet sein. Er kann als einteiliger Schieber ausgebildet sein, oder er kann als mehrteilige Jalousie usw. ausgebildet sein.

Bei einer konstruktiv einfachen Ausführungsform ist der Verschluss mindestens eine Klappe oder weist eine solche auf, welche um eine Schwenkachse schwenkbar an der Kammer angeordnet ist. Es lässt sich dadurch auf konstruktiv einfache Weise ein Verschluss realisieren, welcher in der ersten Stellung effektiv die Kammer verschließt, und bei welchem auf einfache Weise ein automatischer Übergang von der ersten Stellung in die zweite Stellung und auf einfache Weise ein automatischer Übergang von der zweiten Stellung in die erste Stellung erreichbar ist.

Bei einer Ausführungsform ist die Schwenkachse quer zu einer Einführrichtung der Batterieeinheit in die Kammer orientiert. Es lässt sich dadurch auf günstige Weise ein Übergang von der ersten Stellung des Verschlusses in die zweite Stellung angetrieben durch das Einsetzen der Batterieeinheit erreichen.

Ganz besonders vorteilhaft ist es, wenn die mindestens eine Klappe einen Schwenkbereich aufweist, welcher in einem Innenraum der Kammer liegt. Dadurch bildet die mindestens eine Klappe insbesondere in der zweiten Stellung kein von dem Sauggerät hervorstehendes Teil, und die Beschädigungsgefahr ist stark verringert.

Günstigerweise ist mindestens eines der Folgenden vorgesehen:
- die mindestens eine Klappe ist an einer Seite der Kammer angeordnet, welche gegenüberliegend zu einer Seite ist, an welcher eine elektrische Kontakteinrichtung an der Kammer sitzt;
- bezogen auf eine Höhenachse des Gerätekörpers ist die mindestens eine Klappe in der zweiten Stellung entweder oberhalb oder unterhalb der Batterieeinheit positioniert;
- eine Anlagefläche der Batterieeinheit, an welcher die mindestens eine Klappe in der zweiten Stellung anliegt, liegt an einer Oberseite oder einer Unterseite der Batterieeinheit;
- es gibt genau eine Klappe.

Es lässt sich dann entsprechend die Batterieeinheit auf einfache Weise in die Kammer einsetzen, wobei insbesondere am Ende einer Bewegung (und vorzugsweise Translationsbewegung) der Batterieeinheit ein elektrischer Kontakt mit der elektrischen Kontakteinrichtung hergestellt ist. Es lässt sich dadurch ferner auf einfache Weise ein automatischer Übergang von der ersten Stellung der Klappe in die zweite Stellung der Klappe angetrieben durch die Bewegung der Batterieeinheit erreichen. Die Klappe behindert eine Führungsbahn der Batterieeinheit an der mindestens einen Aufnahme nicht, wobei diese Führungsbahn auf die elektrische Kontakteinrichtung ausgerichtet ist. Die Batterieeinheit selber lässt über ihre Oberseite oder Unterseite eine Anlage der Klappe zu, um so eine entsprechende Bewegung der mindestens einen Klappe von der ersten Stellung in die zweite Stellung zu ermöglichen, und auf einfache Weise einen automatischen Übergang von der zweiten Stellung in die erste Stellung zu erreichen.

Bei einer konstruktiv günstigen Ausführungsform ist genau eine Klappe vorgesehen.

Es kann dabei vorgesehen sein, dass die Schwenkachse der mindestens einen Klappe quer und insbesondere senkrecht zu der Höhenachse orientiert ist und/oder die Schwenkachse mindestens näherungsweise parallel zu einer Radachse orientiert ist. Es ergibt sich dadurch eine konstruktiv einfache Ausführungsform.

Es ist alternativ auch möglich, dass die mindestens eine Klappe bezogen auf eine Höhenachse des Gerätekörpers in der zweiten Stellung neben der Batterieeinheit positioniert ist und/oder eine Anlagefläche der Batterieeinheit, an welcher die mindestens eine Klappe in der zweiten Stellung anliegt, an einer Längsseite der Batterieeinheit liegt. Bei der entsprechenden Ausbildung können beispielsweise genau eine Klappe oder zwei Teilklappen vorgesehen sein.

Es ist dann vorteilhaft, wenn bei dieser Ausführungsform mindestens eines der Folgenden vorgesehen ist:
- die Schwenkachse ist mindestens näherungsweise parallel oder in einem spitzen Winkel kleiner 60° zu der Höhenachse orientiert;
- die Schwenkachse ist quer zu der Radachse orientiert.

Es ergibt sich dann ein einfacher konstruktiver Aufbau.

Bei einer Ausführungsform sind eine erste Klappe und eine zweite Klappe vorgesehen, zwischen welchen die Batterieeinheit durchführbar ist und in die Kammer bringbar ist. Es lässt sich auf einfache Weise ein entsprechender Verschluss realisieren.

Bei einer weiteren alternativen Ausführungsform ist der Verschluss als Jalousie ausbildet. Diese umfasst insbesondere eine Mehrzahl von Lamellen. Es ist ein Bewegungsmechanismus vorgesehen, welcher an eine Bewegung der Batterieeinheit gekoppelt ist. Wenn die Batterieeinheit an der entsprechenden Aufnahme eingesetzt wird, dann sorgt dieser Bewegungsmechanismus dafür, dass die Jalousie geöffnet wird und insbesondere in den Innenraum der Kammer gebracht wird. Entsprechend ist ein Rückstellmechanismus vorgesehen, welcher dann die Jalousie aus der zweiten Stellung automatisch in die erste Stellung bringt.

Bei einer weiteren alternativen Ausführungsform ist der Verschluss als Schieber ausbildet. Dieser ist verschieblich an der Kammer angeordnet. Wenn eine Batterieeinheit in die Kammer eingesetzt wird, dann wird durch eine Bewegung und insbesondere Translationsbewegung der Batterieeinheit der Schieber in Richtung eines Endes der Kammer geschoben, bis elektrischer Kontakt zwischen der Batterieeinheit und einer elektrischen Kontakteinrichtung hergestellt ist. In dieser zweiten Stellung ist der Schieber dann zwischen der Batterieeinheit und einer Endwandung der Kammer angeordnet. Wenn die Batterieeinheit entnommen wird, dann sorgt eine Rückstelleinrichtung dafür, dass der Schieber wieder in seine erste Stellung gebracht wird, in welcher er die Kammer an einer Öffnung verschließt.

Ganz besonders vorteilhaft ist es, wenn die Kammer als Aufnahmeschacht für die Batterieeinheit ausgebildet ist. Es lässt sich dadurch beispielsweise auf konstruktiv einfache Weise eine elektrische Kontakteinrichtung geschützt an dem Gerätekörper positionieren.

Günstig ist es, wenn der Gerätekörper eine Aussparung oder einen Freiraum aufweist, welcher der mindestens einen Aufnahme zugeordnet ist, wobei die mindestens eine Aufnahme sich an den zugeordneten Freiraum oder der zugeordneten Aussparung in einer Einführrichtung für die Batterieeinheit in die zugeordnete Aufnahme anschließt. Die Aussparung bzw. der Freiraum kann dazu verwendet werden, einen Teilbereich der Batterieeinheit aufzunehmen, wenn diese an der zugeordneten mindestens einen Aufnahme positioniert ist. Dieser Teilbereich liegt dann außerhalb der Kammer. Es lässt sich dadurch die Batterieeinheit auf einfache Weise in die zugeordnete mindestens eine Aufnahme bringen bzw. von dieser entfernen. Ein Bediener hat einen einfachen Zugriff auf die Batterieeinheit. Die Batterieeinheit ist dann auch nicht vollständig in einem geschlossenen Raum untergebracht, so dass eine effektive Kühlbarkeit vorliegt bzw. die Gefahr einer Überhitzung vermieden ist. Ferner kann ein Bediener auf einfache Weise eine Ladezustandsanzeige erkennen, welche an der Batterieeinheit angeordnet ist. Ferner lässt es sich auf konstruktiv einfache Weise erreichen, dass eine an dem Gerätekörper angeordnete Batterieeinheit nicht über eine Außenhülle der Batterieeinheit hinausragt. Dadurch ist wiederum eine entsprechende Anstoßgefahr vermieden.

Günstig ist es, wenn insbesondere mindestens eines der Folgenden vorgesehen ist:
- der Freiraum oder die Aussparung liegt vor der zugeordneten mindestens einen Aufnahme;
- der Freiraum oder die Aussparung ist durch einen Boden und insbesondere durch einen ebenen Boden an dem Gerätekörper nach unten begrenzt;
- der Freiraum oder die Aussparung ist zu einer ersten Seite hin durch einen Mittelblock begrenzt;
- der Freiraum oder die Aussparung ist zu einer zweiten Seite hin, welche eine Längsseite des Gerätekörpers ist, offen, wobei die Längsseite quer zu einer Querseite orientiert ist;
- eine Batterieeinheit ist mit einer Griffeinrichtung versehen, wobei bei an der mindestens einen Aufnahme positionierter Batterieeinheit die Griffeinrichtung in dem Freiraum oder der Aussparung positioniert ist und insbesondere über den Freiraum oder die Aussparung für einen Bediener zugänglich ist;
- die Griffeinrichtung ist an einer Längsseite oder einer Oberseite der Batterieeinheit angeordnet, wobei die Längsseite bei an der mindestens einen Aufnahme positionierter Batterieeinheit quer zu der Querseite des Gerätekörpers orientiert ist und insbesondere nach außen weist;
- an einer ersten Längsseite und an einer gegenüberliegenden zweiten Längsseite der Batterieeinheit ist jeweils eine Griffeinrichtung angeordnet und insbesondere ist die Batterieeinheit bezüglich ihrer äußeren Form spiegelsymmetrisch ausgebildet.

Es lässt sich dann die Batterieeinheit platzoptimiert an dem Gerätekörper anordnen. Durch die Griffeinrichtung der Batterieeinheit lässt sich diese für einen Bediener auf einfache Weise greifen und einsetzen bzw. aus der zugeordneten mindestens einen Aufnahme entnehmen. Durch eine entsprechende Ausbildung mit mehreren Griffeinrichtungen der Batterieeinheit lässt diese sich an unterschiedlich angeordneten Aufnahmen an dem Gerätekörper positionieren.

Bei einer vorteilhaften Ausführungsform weist das Sauggerät eine Standebene auf, und der Gerätekörper weist eine Höhenachse auf, welche senkrecht zu der Standebene orientiert ist, und wobei der mindestens einen Aufnahme eine Einführrichtung für eine entsprechende Batterieeinheit zugeordnet ist, mit mindestens einem der Folgenden:
- die mindestens eine Aufnahme ist so angeordnet, dass die Einführrichtung quer zu der Höhenachse oder parallel zu der Höhenachse orientiert ist;
- die mindestens eine Aufnahme ist so angeordnet, dass die Einführrichtung parallel oder in einem spitzen Winkel oder senkrecht zu der Standebene liegt;
- in der ersten Stellung ist der Verschluss quer und insbesondere senkrecht zu der Einführrichtung ausgerichtet;
- die Einführrichtung ist quer oder parallel zu einer Querseite des Gerätekörpers orientiert;
- die Einführrichtung ist quer und insbesondere senkrecht zu einer Radachse einer Radeinrichtung orientiert, wobei die Radeinrichtung an dem Gerätekörper angeordnet ist;
- die Einführrichtung ist parallel zu einer geometrischen Mittelebene des Gerätekörpers orientiert;
- die Einführrichtung ist parallel oder liegt in einem spitzen Winkel oder ist senkrecht zu einer Einsteckrichtung eines Saugschlauchs in einen Sauganschluss.

Es lässt sich dadurch eine platzsparende Unterbringung von ein oder mehreren Batterieeinheiten an dem Gerätekörper erreichen. Es ergibt sich eine einfache Bedienbarkeit. Wenn in der ersten Stellung der Verschluss quer zu der Einführrichtung ausgerichtet ist, dann lässt sich auf einfache Weise ein "Angriff" der Batterieeinheit an dem Verschluss erreichen, um diesen zu bewegen und in die zweite Stellung zu bringen.

Wenn die Einführrichtung parallel oder in einem spitzen Winkel zu der Standebene liegt, lässt sich die Fluidbeaufschlagung des Verschlusses bzw. der Kammer geringhalten.

Bei einer Ausführungsform ist die Einführrichtung senkrecht zu der Höhenachse oder parallel zu der Standebene. Es ergibt sich so eine platzsparende Anordnung für Batterieeinheiten an dem Sauggerät.

Bei einer alternativen Ausführungsform ist es vorgesehen, dass ein spitzer Winkel der Einführrichtung zu der Standebene im Bereich zwischen 30° und 60° liegt und insbesondere im Bereich zwischen 40° und 50° liegt. Es lässt sich so auf effektive Weise erreichen, dass beim Einsetzen einer Batterieeinheit an der zugeordneten mindestens einen Aufnahme das Sauggerät als Ganzes nicht verschoben wird oder weniger weit verschoben wird. Es ergibt sich dadurch eine einfache Bedienbarkeit.

Günstig ist es, wenn die mindestens eine Aufnahme eine Einführrichtung für eine Batterieeinheit aufweist, welche in einem spitzen Winkel zu einer Verschiebungsrichtung des Sauggeräts an einem Untergrund liegt, wobei insbesondere der Gerätekörper über eine Radeinrichtung mit einer Radachse an einem Untergrund abgestützt ist, und wobei die Verschiebungsrichtung senkrecht zu der Radachse orientiert ist. Es ist dadurch die Gefahr verringert bzw. aufgehoben, dass beim Einsetzen einer Batterieeinheit das Sauggerät als Ganzes auf dem Untergrund verschoben wird. Es ergibt sich so eine verbesserte Bedienbarkeit.

Es ist dann insbesondere günstig, wenn der spitze Winkel im Bereich zwischen 30° und 60° liegt und insbesondere im Bereich zwischen 40° und 50° liegt.

Es ergibt sich ein einfacher konstruktiver Aufbau des Sauggeräts mit optimierter Platznutzung, wenn mindestens eines der Folgenden vorgesehen ist:
- eine Bedienungstafel, welche an einer Querseite des Gerätekörpers angeordnet ist,
- einen Sauganschluss, welcher an einer Querseite des Gerätekörpers angeordnet ist;
- die mindestens eine Aufnahme an dem Gerätekörper ist bezüglich der Querseite so angeordnet, dass die der mindestens einen Aufnahme zugeordnete Batterieeinheit von der Querseite her in die mindestens eine Aufnahme bringbar ist;
- die mindestens eine Aufnahme ist an dem Gerätekörper so bezüglich der Querseite angeordnet, dass eine Ladezustandsanzeige von einer Querseite her durch einen Bediener ablesbar ist, wobei die Ladezustandsanzeige an der Batterieeinheit angeordnet ist oder an der mindestens einen Aufnahme angeordnet ist.

Ein Bediener, der sich vor der Querseite des Sauggeräts befindet, hat Zugriff auf die Bedienungstafel, auf den Sauganschluss, kann von seiner Position her eine oder mehrere Batterieeinheiten einsetzen bzw. entnehmen, und/oder kann eine Ladezustandsanzeige erkennen.

Es ist dann ferner günstig, wenn mindestens eines der Folgenden vorgesehen ist:
- eine Batterieeinheit ist in einer Einführrichtung lösbar an der zugeordneten mindestens einen Aufnahme positionierbar und in einer Gegenrichtung zu der Einführrichtung von der mindestens einen Aufnahme entnehmbar;
- die mindestens eine Aufnahme umfasst eine Fixierungseinrichtung für die zugeordnete Batterieeinheit;
- die mindestens eine Aufnahme umfasst eine Führungsbahn für die zugeordnete Batterieeinheit;
- durch die mindestens eine Aufnahme ist eine Batterieeinheit aufnehmbar, welche ein Ausgleichsgewicht für eine elektrisch wirksame Batterieeinheit ist und gewichtsmäßig der elektrisch wirksamen Batterieeinheit entspricht;
- die Bedienungstafel und der Sauganschluss sind an der gleichen Querseite angeordnet.

Es ergibt sich dadurch eine einfache Bedienbarkeit. Durch die Führungsbahn kann ein Bediener auf einfache Weise eine Batterieeinheit einsetzen bzw. entnehmen. Wenn eine Mehrzahl von Aufnahmen vorgesehen sind, kann ein Ausgleichsgewicht eingesetzt werden, um ein Kippmoment zu verhindern.

Bei einer vorteilhaften Ausführungsform sind mindestens eine erste Aufnahme und eine zweite Aufnahme vorgesehen. Es können dann eine Mehrzahl von Batterieeinheiten verwendet werden. Es ergibt sich dadurch eine verlängerte Betriebsdauer.

Ganz besonders vorteilhaft ist es dabei, wenn
- die erste Aufnahme und die zweite Aufnahme symmetrisch und insbesondere spiegelsymmetrisch zu einer geometrischen Mittelebene des Gerätekörpers an dem Gerätekörper angeordnet sind oder an der Mittelebene an dem Gerätekörper angeordnet sind, wobei die Mittelebene quer zu einer Querseite orientiert ist;
- die erste Aufnahme und die zweite Aufnahme beabstandet sind in einer Querrichtung zu einer geometrischen Mittelebene des Gerätekörpers;
- die Gebläseeinrichtung mindestens mit einem Teilbereich zwischen der ersten Aufnahme und der zweiten Aufnahme an dem Gerätekörper angeordnet ist;
- eine Steuerungseinrichtung zwischen der ersten Aufnahme und der zweiten Aufnahme an dem Gerätekörper angeordnet ist.

Es ergibt sich dadurch eine Positionierung von Komponenten des Sauggeräts an dem Gerätekörper, welche eine optimierte Raumnutzung erlaubt. Dadurch lassen sich die äußeren Abmessungen des Sauggeräts geringhalten. Ferner lässt sich auf effektive Weise ein Kippmoment insbesondere durch das Vorsehen von Batterieeinheiten verhindern.

Aus dem gleichen Grund ist es günstig, wenn die Bedienungstafel zwischen der ersten Aufnahme und der zweiten Aufnahme an dem Gerätekörper angeordnet ist und/oder der Sauganschluss zwischen der ersten Aufnahme und der zweiten Aufnahme an dem Gerätekörper angeordnet ist.

Weiterhin ist es dann günstig, wenn die erste Aufnahme und die zweite Aufnahme an einem Saugkopf des Gerätekörpers angeordnet sind, insbesondere mit mindestens einem der Folgenden:
- eine Bedienungstafel ist an dem Saugkopf angeordnet;
- ein Sauganschluss ist an dem Saugkopf oder an einem Sauggutbehälter angeordnet.

Es ergibt sich dadurch eine optimierte Raumnutzung, und das entsprechende Sauggerät lässt sich kompakt ausbilden.

Bei einer konstruktiv günstigen Ausführungsform ist an dem Gerätekörper ein Mittelblock angeordnet, an welchem eine Bedienungstafel positioniert ist, und beidseitig zu dem Mittelblock ist an dem Gerätekörper jeweils eine Aufnahme angeordnet. Es ergibt sich eine optimierte Platznutzung. Es lässt sich ein Kippmoment geringhalten bzw. verhindern. Auf die Batterieeinheiten kann auf einfache Weise zugegriffen werden, bzw. eine Batterieeinheit lässt sich auf einfache Weise an der jeweiligen Aufnahme einsetzen.

Konstruktiv günstig ist es, wenn mindestens eines der Folgenden vorgesehen ist:
- an dem Mittelblock sitzt ein Sauganschluss;
- der Mittelblock weist eine Außenseite auf, welche einen Teil einer Querseite bildet;
- der Mittelblock umfasst einen Steg, welcher bezogen auf eine Höhenachse des Gerätekörpers über den Aufnahmen positioniert ist;
- der Mittelblock ist I förmig oder T förmig;
- der Mittelblock sitzt an einem Saugkopf des Gerätekörpers;
- an dem Mittelblock ist eine Steuerungseinrichtung angeordnet;
- der Mittelblock ist spiegelsymmetrisch zu einer geometrischen Mittelebene des Gerätekörpers ausgebildet;
- ein beweglicher Deckel für einen Aufnahmeraum des Gerätekörpers, in welchem eine Filterabreinigungseinrichtung für eine Filtereinrichtung und/oder die Filtereinrichtung angeordnet sind, ist an dem Mittelblock abgestützt;
- an dem beweglichen Deckel ist ein Tragegriff angeordnet;
- die mindestens eine Aufnahme erstreckt sich in einen Bereich unterhalb des Deckels;
- die mindestens eine Aufnahme ist mindestens in einem Teilbereich seitlich zu der Gebläseeinrichtung an dem Gerätekörper positioniert.

Es ergibt sich eine konstruktiv günstige Ausführungsform. Das Sauggerät lässt sich kompakt ausbilden.

Bei einer alternativen Ausführungsform ist mindestens eine Aufnahme bezogen auf eine Höhenachse des Gerätekörpers zwischen einem Sauganschluss und einer Bedienungstafel angeordnet.

Es ist dabei vorzugsweise vorgesehen, dass die Bedienungstafel an einem Saugkopf des Gerätekörpers angeordnet ist und der Sauganschluss an einem Sauggutbehälter des Gerätekörpers angeordnet ist.

Es ist dann vorteilhaft, wenn die mindestens eine Aufnahme von der Batterieeinheit an einem Zwischenring angeordnet ist, welcher zwischen dem Sauggutbehälter und dem Saugkopf angeordnet ist, insbesondere mit mindestens einem der Folgenden:
- der Zwischenring ist lösbar von dem Sauggutbehälter;
- der Zwischenring ist lösbar von dem Saugkopf;
- an dem Zwischenring ist ein Aufnahmeraum angeordnet, an welchem eine Mehrzahl von Aufnahmen sitzen, wobei insbesondere der Aufnahmeraum zur Aufnahme einer Mehrzahl von Batterieeinheiten ausgebildet ist.

Das entsprechende Sauggerät lässt sich "schlank" ausbilden.

Insbesondere ist an einer geometrischen Mittelebene des Gerätekörpers, welche zwischen einer ersten Aufnahme und einer zweiten Aufnahme liegt, eine Filterabreinigungseinrichtung für eine Filtereinrichtung und/oder die Filtereinrichtung angeordnet. Dadurch ergibt sich ein kompakter Aufbau. Es lässt sich ein Kippmoment geringhalten.

Ganz besonders vorteilhaft ist es, wenn eine Filtereinrichtung und eine Filterabreinigungseinrichtung für die Filtereinrichtung vorgesehen sind, wobei dem Gerätekörper eine geometrische Mittelebene zugeordnet ist, welche senkrecht zu einer Standebene des Gerätekörpers orientiert ist, wobei ein Massenschwerpunkt des Gerätekörpers mindestens näherungsweise auf der Mittelebene liegt, wobei die Filterabreinigungseinrichtung so an dem Gerätekörper angeordnet ist, dass ein Massenschwerpunkt der Filterabreinigungseinrichtung mindestens näherungsweise auf der Mittelebene liegt, und wobei die Batterieeinrichtung so an dem Gerätekörper angeordnet ist, dass mindestens näherungsweise ein Massenschwerpunkt der Batterieeinrichtung auf der Mittelebene liegt. Insbesondere ist es dann vorgesehen, dass eine Fahreinrichtung spiegelsymmetrisch zu der Mittelebene ausgebildet ist. Es lässt sich so ein Kippmoment geringhalten. Auch durch die Aufnahme einer relativ schweren Batterieeinrichtung entsteht keine erhöhte Kippgefahr für das Sauggerät.

Günstig ist es dann, wenn mindestens eines der Folgenden vorgesehen ist:
- die Batterieeinrichtung ist an der Mittelebene angeordnet und/oder ist symmetrisch zu der Mittelebene an dem Gerätekörper angeordnet;
- die Batterieeinrichtung weist eine Mehrzahl von Batterieeinheiten auf, welche an der Mittelebene angeordnet sind und/oder symmetrisch zu der Mittelebene angeordnet sind;
- die Filterabreinigungseinrichtung ist an der Mittelebene angeordnet und/oder symmetrisch zu der Mittelebene ausgebildet;
- die Filterabreinigungseinrichtung weist eine Mehrzahl von Fremdluftventilen auf, welche an der Mittelebene angeordnet sind und/oder symmetrisch zu der Mittelebene an dem Gerätekörper angeordnet sind.

Es lässt sich dadurch ein Kippmoment geringhalten bzw. verhindern.

Es kann vorgesehen sein, dass der Gerätekörper einen Sauggutbehälter und einen Saugkopf umfasst, wobei der Saugkopf lösbar mit dem Sauggutbehälter verbunden ist, insbesondere mit mindestens einem der Folgenden:
- die Batterieeinrichtung ist an dem Saugkopf angeordnet;
- die Gebläseeinrichtung ist an dem Saugkopf angeordnet;
- eine Filterabreinigungseinrichtung ist an dem Saugkopf positioniert;
- eine Filtereinrichtung ist an dem Saugkopf gehalten;
- eine Bedienungstafel ist an dem Saugkopf angeordnet;
- ein Sauganschluss ist an dem Saugkopf oder an dem Sauggutbehälter angeordnet.

Es lässt sich ein kompakt ausgebildetes Sauggerät bereitstellen, welches über eine Batterieeinrichtung betrieben ist.

Bei einem Ausführungsbeispiel ist das Sauggerät als Stand-alone-Sauger ausgebildet.

Die nachfolgende Beschreibung bevorzugter Ausführungsformen der Erfindung dient im Zusammenhang mit den Zeichnungen der näheren Erläuterung der Erfindung. Es zeigen:
- Figur 1: eine perspektivische Darstellung eines ersten Ausführungsbeispiels eines Sauggeräts mit einer ersten Aufnahme und einer zweiten Aufnahme für eine Batterieeinheit, wobei in der zweiten Aufnahme eine Batterieeinheit eingesetzt ist und ein Verschluss an der ersten Aufnahme geschlossen ist;
- Figur 2: eine seitliche Schnittansicht des Sauggeräts gemäß Figur 1;
- Figur 3: eine perspektivische Darstellung des Sauggeräts gemäß Figur 1, wobei der Zustand des Einsetzens einer Batterieeinheit in die erste Aufnahme gezeigt ist;
- Figur 4: eine seitliche Schnittansicht des Sauggeräts gemäß Figur 3 während des Einsetzens der Batterieeinheit in die erste Aufnahme;
- Figur 5: eine perspektivische Darstellung eines zweiten Ausführungsbeispiels eines Sauggeräts, wobei in einer zweiten Aufnahme eine Batterieeinheit eingesetzt ist und eine erste Aufnahme batteriefrei ist und ein Verschluss an der ersten Aufnahme geschlossen ist;
- Figur 6: eine seitliche Teilschnittansicht des Sauggeräts gemäß Figur 5;
- Figur 7: eine ähnliche Ansicht wie Figur 6 beim Einsetzen einer Batterieeinheit;
- Figur 8: eine perspektivische Darstellung eines dritten Ausführungsbeispiels eines erfindungsgemäßen Sauggeräts, wobei in einer zweiten Aufnahme eine Batterieeinheit eingesetzt ist und eine erste Aufnahme batteriefrei ist und ein Verschluss an der ersten Aufnahme geschlossen ist;
- Figur 9: eine Teil-Schnittansicht des Sauggeräts gemäß Figur 8 beim Einsetzen einer Batterieeinheit;
- Figur 10: eine perspektivische Darstellung eines vierten Ausführungsbeispiels eines erfindungsgemäßen Sauggeräts, wobei an einer zweiten Aufnahme eine Batterieeinheit eingesetzt ist, und eine erste Aufnahme batteriefrei ist, und wobei ein Verschluss an der ersten Aufnahme geschlossen ist;
- Figur 11: eine seitliche Schnittansicht des Sauggeräts gemäß Figur 10 beim Einsetzen einer Batterieeinheit in die erste Aufnahme;
- Figur 12: eine perspektivische Ansicht eines fünften Ausführungsbeispiels eines erfindungsgemäßen Sauggeräts, wobei an einer ersten Aufnahme und einer zweiten Aufnahme jeweils eine Batterieeinheit eingesetzt ist;
- Figur 13: eine perspektivische Darstellung eines sechsten Ausführungsbeispiels eines erfindungsgemäßen Sauggeräts, wobei ein Verschluss geschlossen ist;
- Figur 14: das Sauggerät gemäß Figur 13, wobei Batterieeinheiten eingesetzt sind; und
- Figur 15: eine Schnittansicht längs der Linie 15-15 gemäß Figur 14.

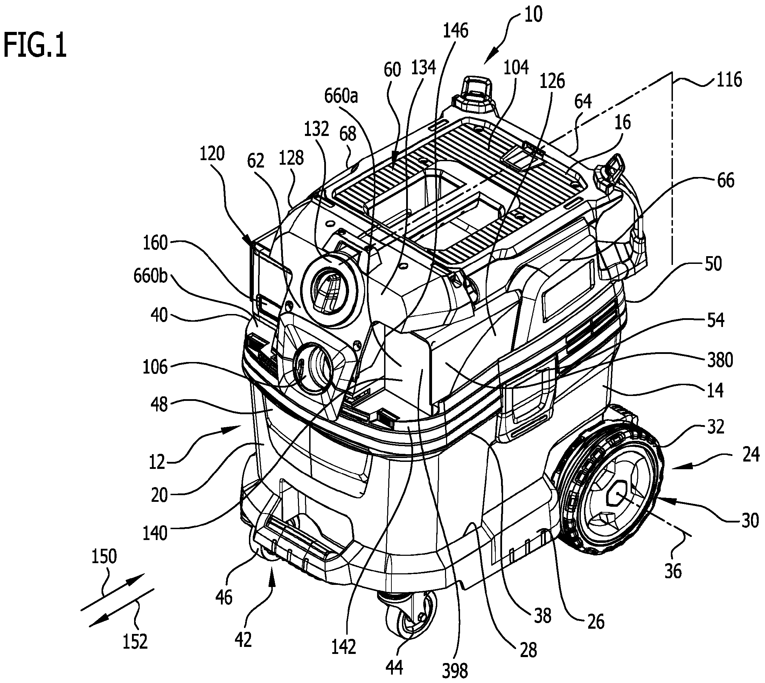

Ein erstes Ausführungsbeispiel eines erfindungsgemäßen Sauggeräts, welches in den Figuren 1 bis 4 gezeigt und mit 10 bezeichnet ist, ist ein Stand-alone-Sauger.

Das Sauggerät 10 umfasst einen Gerätekörper 12. Der Gerätekörper 12 wiederum weist einen Sauggutbehälter 14 auf, und einen Saugkopf 16, welcher lösbar an dem Sauggutbehälter 14 sitzt.

Der Sauggutbehälter 14 hat einen Boden 18, an welchem eine umlaufende Wandung 20 angeordnet ist. Zwischen dem Boden 18 und der Wandung 20 ist ein Innenraum 22 gebildet, welcher zur Aufnahme von Sauggut dient. Das Sauggut kann dabei in den Innenraum 22 direkt aufgenommen werden, oder es kann entsprechend ein Filterbeutel in dem Innenraum 22 zur Aufnahme von Sauggut positioniert werden.

An dem Gerätekörper 12 ist eine als Ganzes mit 24 bezeichnete Fahreinrichtung angeordnet.

Es ist dazu ein Rahmen 26 vorgesehen, an welchem die Fahreinrichtung 24 sitzt. Dieser Rahmen 26 hat eine Aufnahme 28, in welcher der Gerätekörper 12 mit dem Sauggutbehälter 14 lösbar positioniert ist. Grundsätzlich ist es auch möglich, dass der Gerätekörper 12 mit dem Sauggutbehälter 14 direkt auf eine Unterlage 29 aufgestellt wird.

Die Fahreinrichtung 24 umfasst eine Radeinrichtung 30, welche an dem Rahmen 26 sitzt. Die Radeinrichtung 30 ist eine Hinterradeinrichtung. Sie umfasst ein linkes (Hinter-)Rad 32 und ein rechtes (Hinter-)Rad 34. Das linke Rad 32 und das rechte Rad 34 sind um eine gemeinsame Radachse 36 drehbar. Diese Radachse 36 ist bei korrekter Aufstellung des Sauggeräts 10 auf einer ebenen Unterlage 29 parallel zu dieser Unterlage 29.

Der Gerätekörper 12 weist eine erste Längsseite 38 auf und eine dieser gegenüberliegende zweite Längsseite 40 auf. Die Radachse 36 ist jeweils quer zu der ersten Längsseite 38 und der zweiten Längsseite 40 orientiert.

Das linke Rad 32 liegt vor der ersten Längsseite 38 und das rechte Rad 34 liegt vor der zweiten Längsseite 40. Insbesondere liegen dabei jeweils das linke Rad 32 und das rechte Rad 34 seitlich vor der Wandung 20 des Sauggutbehälters 14, wenn dieser in den Rahmen 26 eingesetzt ist.

Die Fahreinrichtung 24 umfasst ferner eine Rolleneinrichtung 42. Bei dem gezeigten Ausführungsbeispiel weist die Rolleneinrichtung 42 eine erste Lenkrolle 44 und eine zweite Lenkrolle 46 auf.

Die erste Lenkrolle 44 und die zweite Lenkrolle 46 sind so an dem Rahmen 26 angeordnet, dass sie unterhalb des Sauggutbehälters 14 positioniert ist, wenn dieser an dem Rahmen 26 sitzt.

Der Gerätekörper 12 weist eine erste Querseite 48 und beabstandet zu dieser und gegenüberliegend eine zweite Querseite 50 auf. Die erste Querseite 48 und die zweite Querseite 50 sind jeweils quer zu der ersten Längsseite 38 bzw. zweiten Längsseite 40 angeordnet.

Die Rolleneinrichtung 42 ist, wenn der Gerätekörper 12 an dem Rahmen 26 positioniert ist, in einem vorderen Bereich des Gerätekörpers 12 angeordnet; die Rolleneinrichtung 42 liegt näher zu der ersten Querseite 48 als zu der zweiten Querseite 50.

Die Radeinrichtung 30 ist an einem hinteren Bereich des Gerätekörpers 12 positioniert. Sie liegt näher zu der zweiten Querseite 50 als zu der ersten Querseite 48.

Bei einem Ausführungsbeispiel ist an dem Rahmen 26 eine Aufnahme 52 angeordnet, an welcher eine Saugdüse oder dergleichen fixierbar ist.

Der Sauggutbehälter 14 ist tonnenförmig über seine Wandung 20 und den Boden 18 ausgebildet. Er ist beispielsweise zylindrisch oder quaderförmig (insbesondere mit abgerundeten Kanten).

Der Saugkopf 16 des Gerätekörpers 12 ist beispielsweise über eine Rastklappeneinrichtung 54 lösbar an dem Sauggutbehälter 14 fixierbar.

Wenn der Saugkopf 16 von dem Sauggutbehälter 14 abgenommen ist, dann ist auf den Sauggutbehälter 14 von einer Oberseite her, welche abgewandt zu dem Boden 18 ist, ein Zugang zu dem Innenraum 22 möglich. Es kann dann eine Entleerung von Sauggut aus dem Innenraum 22 erfolgen bzw. es kann ein Filterbeutel aus dem Innenraum 22 entnommen werden.

Der Saugkopf 16 bildet einen Deckel für den Sauggutbehälter 14.

Das Sauggerät 10 weist über die Fahreinrichtung 24 eine Standebene 56 auf. Die Standebene 56 ist definiert durch die Räder 32 und die Lenkrollen 44, 46. Über diese ist das Sauggerät 10 beim Aufstellen auf der Unterlage 29 abgestützt.

Wenn die Unterlage 29 eine Ebene ist, dann fällt die Standebene 56 mit dieser Ebene zusammen.

Bei einem alternativen Ausführungsbeispiel ist es vorgesehen, dass der Sauggutbehälter 14 über seinen Boden 18 auf der Unterlage 29 stabil aufsetzbar ist. Die entsprechende Standebene ist dann über eine Unterseite dieses Bodens 18 gebildet.

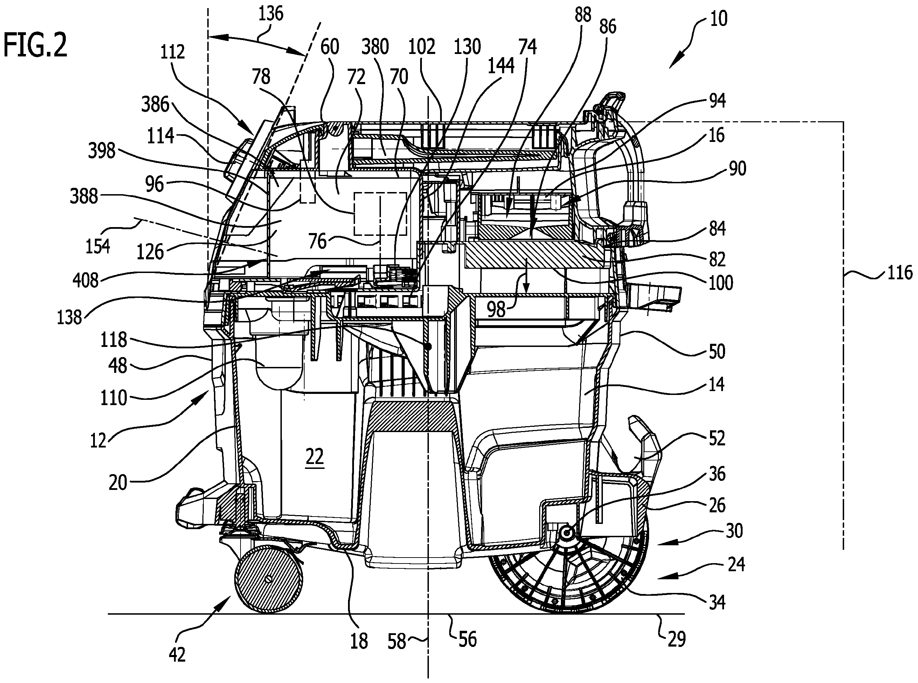

Der Gerätekörper 12 hat eine Höhenachse 58 (vergleiche beispielsweise Figur 2). Diese Höhenachse 58 ist quer und insbesondere senkrecht zu der Standebene 56 orientiert. Die Höhenachse 58 ist quer und insbesondere senkrecht zu der Radachse 36 orientiert.

Der Saugkopf 16 umfasst einen Saugkopfkörper 60. Dieser Saugkopfkörper 60 ist als Gehäuse ausgebildet. Er weist eine erste Saugkopf-Querseite 62 auf und eine diese gegenüberliegende zweite Saugkopf-Querseite 64.

Zwischen der ersten Saugkopf-Querseite 62 und der zweiten Saugkopf-Querseite 64 erstreckt sich eine erste Saugkopf-Längsseite 66 und eine zweite Saugkopf-Längsseite 68.

Die erste Saugkopf-Querseite 62 bildet mit dem zugehörigen Bereich der Wandung 20 des Saugkopfs 16 die erste Querseite 48 des Gerätekörpers 12. Die zweite Saugkopf-Querseite 64 bildet mit dem zugehörigen Bereich der Wandung 20 die zweite Querseite 50 des Gerätekörpers 12. Die erste Saugkopf-Längsseite 66 bildet mit dem zugehörigen Bereich der Wandung 20 die erste Längsseite 38 des Gerätekörpers 12. Die zweite Saugkopf-Längsseite 68 bildet mit dem zugehörigen Wandungsbereich der Wandung 20 die zweite Längsseite 40 des Gerätekörpers 12.

An dem Saugkopf 16 ist in einem entsprechenden Aufnahmeraum 70 des Saugkopfkörpers eine Gebläseeinrichtung 72 angeordnet. Die Gebläseeinrichtung 72 umfasst (mindestens) ein Laufrad 74. Dieses Laufrad 74 ist um eine Drehachse 76 rotierbar gelagert. Diese Drehachse 76 liegt quer und insbesondere senkrecht zu der Radachse 36. Die Drehachse 76 ist parallel oder in einem kleinen spitzen Winkel (insbesondere kleiner 30°) zu der Höhenachse 58 orientiert.

Es ist grundsätzlich auch möglich, dass die Drehachse 76 bei einem "liegend" angeordneten Laufrad 74 quer und insbesondere näherungsweise senkrecht zu der Höhenachse 58 orientiert ist (in den Zeichnungen nicht gezeigt).

Die Gebläseeinrichtung 72 weist ferner einen Gebläsemotor 78 auf. Der Gebläsemotor 78 ist ein Elektromotor. Er umfasst eine Welle, an welcher drehfest das Laufrad 74 sitzt. Eine Drehachse dieser Welle fällt mit der Drehachse 76 des Laufrads 74 zusammen.

Die Gebläseeinrichtung 72 erzeugt einen Saugstrom.

Das Sauggerät 10 weist eine Filtereinrichtung 82 auf. Die Filtereinrichtung 82 ist an einem Filterhalter 84 gehalten. Die Filtereinrichtung 82 umfasst beispielsweise einen Flachfaltenfilter oder Kerzenfilter.

Bei dem gezeigten Ausführungsbeispiel sitzt der Filterhalter 84 und damit die Filtereinrichtung 82 an dem Saugkopf 16; wenn der Saugkopf 16 von dem Sauggutbehälter 14 abgenommen wird, dann wird auch die Filtereinrichtung 82 mit abgenommen.

Es ist grundsätzlich auch möglich, dass die Filtereinrichtung 82 an dem Sauggutbehälter 14 gehalten ist. Dementsprechend sitzt dann bei dieser Ausführungsform der Filterhalter an dem Sauggutbehälter 14 (in den Zeichnungen nicht gezeigt).

In dem Saugkopfkörper 60 ist ein weiterer Aufnahmeraum 86 gebildet. In dem Aufnahmeraum 86 ist eine Filterabreinigungseinrichtung 88 angeordnet. Die Filterabreinigungseinrichtung 88 ist so zu der Filtereinrichtung 82 positioniert, dass die Filtereinrichtung 82 abreinigbar ist.

Im Laufe des Betriebs des Sauggeräts 10 sammelt sich Staub an der Filtereinrichtung 82 an. Dadurch vergrößert sich der Strömungswiderstand für die Durchströmung der Filtereinrichtung 82. Die Filterabreinigungseinrichtung 88 sorgt durch eine mechanische Einwirkung auf die Filtereinrichtung 82 für eine Abreinigung.

Die Filterabreinigung kann dabei manuell ausgelöst werden, oder sie kann automatisch durchgeführt werden. Beispielsweise ist eine bedarfsgerechte Filterabreinigung durch die Filterabreinigungseinrichtung 88 durchgeführt. Diese wird automatisch eingeleitet, wenn entsprechende Messungen eine diesbezügliche Notwendigkeit erkennen.

Ein Beispiel für ein Verfahren zur Abreinigung eines Filters, welches bedarfsgerecht ist, ist in der WO 2015/139751 A1 beschrieben, wobei auf dieses Dokument ausdrücklich und vollinhaltlich Bezug genommen wird.

Bei einem Ausführungsbeispiel ist die Filterabreinigungseinrichtung 88 als Fremdluftventileinrichtung 90 ausgebildet. Über diese Fremdluftventileinrichtung 90 lässt sich die Filtereinrichtung 82 mit Fremdluft beaufschlagen, um anhaftende Feststoffpartikel zu lösen und dabei gewissermaßen abzublasen.

Es sind dazu am Saugkopf 16 in dem Aufnahmeraum 86 ein oder mehrere Fremdluftventile 92 angeordnet. Es umfasst eine ortsfest im Saugkopf 16 angeordnete Ventilhalterung, die einen Ventilsitz ausbildet für einen beweglichen Ventilkörper in Form eines Ventiltellers. Der Ventilteller ist mittels einer Schließfeder mit einer Schließkraft in Richtung auf die Ventilhalterung beaufschlagt. Die Schließfeder ist zwischen einer plattenartig, eine Mehrzahl von Strömungsdurchlässen aufweisenden, ortsfest im Saugkopf 16 angeordneten Filterhalterung und dem Ventilteller eingespannt. Zusätzlich zur Schließfeder trägt die Filterhalterung ein federndes Anschlagelement in Form einer Anschlagfeder. Diese weist insbesondere (vorzugsweise ebenso wie die Schließfeder) eine lineare Kennlinie auf. Sie ist beispielsweise als Schraubenfeder ausgebildet. Im Gegensatz zur Schließfeder steht die Anschlagfeder in der Schließstellung des Ventiltellers nicht unter Vorspannung. Erst wenn sich der Ventilteller vom Ventilsitz der Ventilhalterung abhebt, gelangt die Anschlagfeder an der Unterseite des Ventiltellers zur Anlage und wird bei einer weiteren Bewegung des Ventiltellers etwas zusammengedrückt. Sie übt dadurch eine zunehmende Rückstellkraft auf den Ventilteller aus und beschleunigt die Bewegung des Ventiltellers ausgehend von einer geschlossenen Ventilstellung über eine geöffnete Ventilstellung wieder zurück in die geschlossene Ventilstellung. In der geschlossenen Ventilstellung nimmt der Ventilteller einen Abstand zu der Ventilhalterung ein, die den Ventilsitz ausbildet. Die Ventilhalterung weist eine Vielzahl von Durchgangsöffnungen auf, deren Mündungsbereiche vom Ventilteller verschlossen werden, wenn dieser seine geschlossene Ventilstellung einnimmt. In Höhe der Ventilhalterung weist der Saugkopf 16 eine seitliche Öffnung auf. Über die seitliche Öffnung kann Fremdluft in die Durchgangsöffnung in der Ventilhalterung einströmen. Nimmt der Ventilteller seine zur Ventilhalterung beabstandete offene Ventilstellung ein, so steht die seitliche Öffnung über die Durchgangsöffnung in der Ventilhalterung mit einer Absaugleitung in Strömungsverbindung und Fremdluft kann eine Reinseite 94 der Filtereinrichtung 82 beaufschlagen. Die Reinseite 94 ist dabei dem Sauggutbehälter 14 abgewandt.

Nimmt der Ventilteller seine geschlossene Ventilstellung ein, so ist die Strömungsverbindung zwischen der seitlichen Öffnung und der Absaugleitung unterbrochen.

In einem zentralen Bereich trägt die Ventilhalterung einen Elektromagneten. In Umfangsrichtung ist der Elektromagnet von einem Ringraum umgeben, in den eine oberseitig an dem Ventilteller angeformte Führungshülse eintaucht. Die Führungshülse nimmt ein magnetisierbares Element beispielsweise in Form einer Eisenplatte auf, die in der geschlossenen Ventilstellung des Ventiltellers an einer freien Stirnkante des Elektromagneten anliegt und in Kombination mit dem Elektromagneten einen geschlossenen Magnetkreis ausbildet.

In dem Saugkopf 16 ist eine (elektronische) Steuerungseinrichtung 96 angeordnet.

Der Elektromagnet steht über eine Stromversorgungsleitung mit der Steuerungseinrichtung 96 in elektrischer Verbindung. Von der Steuerungseinrichtung 96 wird der Elektromagnet während des normalen Saugbetriebs des Sauggeräts 10 mit einem Versorgungsstrom beaufschlagt. Aufgrund des sich ausbildenden Magnetfelds wird der Ventilteller zuverlässig in seiner Schließstellung gehalten. Die Haltekraft des Elektromagneten wird von der Federkraft der Schließfeder unterstützt.

Wird die Stromversorgung des Elektromagneten von der Steuerungseinrichtung 96 unterbrochen, so entfällt die auf den Ventilteller einwirkende magnetische Haltekraft und der Ventilteller wird aufgrund der auf ihn einwirkenden Druckdifferenz, die sich aus dem Außendruck der im Bereich der Ventilhalterung vorliegenden Fremdluft und dem Innendruck innerhalb der Absaugleitung ergibt, entgegen der Wirkung der Schließfeder vom Ventilsitz abgehoben. Fremdluft kann dann schlagartig durch die Durchgangsöffnung in der Ventilhalterung hindurch in die Absaugleitung einströmen und die Filtereinrichtung 82 wird auf ihrer Reinseite 94 schlagartig mit Fremdluft beaufschlagt. Dies führt zu einer mechanischen Erschütterung der Filtereinrichtung 82. Außerdem wird die Filtereinrichtung 82 in Gegenstromrichtung, das heißt entgegen der während des normalen Saugbetriebs herrschenden Strömungsrichtung 98 von Fremdluft durchströmt. Das hat eine wirkungsvolle Abreinigung der Filtereinrichtung 82 durch die Filterabreinigungseinrichtung 88 zur Folge.

Bezüglich der beispielhaften Ausbildung einer Filterabreinigungseinrichtung 88 und insbesondere Fremdluftventileinrichtung 90 wird auf die WO 2015/139751 A1, die WO 2012/107103 A1, die WO 2012/107595 A1 oder auf die nicht vorveröffentlichte internationale Anmeldung PCT/EP2020/066794 vom 17. Juni 2020 verwiesen. Auf diese Dokumente wird ausdrücklich Bezug genommen.

Die Filtereinrichtung 82 weist eine Schmutzseite 100 auf, welche in den Innenraum 22 des Saugbehälters 14 weist. Sie ist der Reinseite 94 abgewandt, welche der Filterabreinigungseinrichtung 88 zugewandt ist.

Bei einem Ausführungsbeispiel sind die Filterabreinigungseinrichtung 88 und auch die Filtereinrichtung 82 an dem Gerätekörper 12 näher zu der zweiten Querseite 50 als zu der ersten Querseite 48 positioniert.

Die Gebläseeinrichtung 72 ist an dem Saugkopf 16 näher zu der ersten Querseite 48 als zu der zweiten Querseite 50 positioniert (vergleiche Figur 2), oder liegt mittig zwischen der ersten Querseite 48 und der zweiten Querseite 50.

Der Gerätekörper 12 hat eine Oberseite 102. Diese Oberseite 102 liegt an dem Saugkopf 16.

An der Oberseite 102 ist ein beweglicher Deckel 104 angeordnet. Dieser bewegliche Deckel 104 schließt den Aufnahmeraum 86 nach oben. Der Deckel 104 kann entfernt werden (beispielsweise als Ganzes, oder über eine Klappbarkeit oder dergleichen), um einen Zugang zu der Filterabreinigungseinrichtung 88 zu ermöglichen. Gegebenenfalls kann bei geöffnetem Deckel 104 auch die Filtereinrichtung 82 ausgetauscht werden.

Das Sauggerät 10 weist einen Sauganschluss 106 auf. An den Sauganschluss 106 ist ein Saugschlauch oder ein Saugrohr anschließbar. Der Sauganschluss 106 ist an dem Gerätekörper 12 angeordnet.

Bei dem gezeigten Ausführungsbeispiel 10 ist der Sauganschluss 106 an dem Saugkopf 16 angeordnet. Von dem Sauganschluss 106 führt ein Rohr durch den Saugkopf 16 hindurch zu dem Innenraum 22 des Saugbehälters 14. Mit dem Rohr ist ein Stutzen 110 verbunden, welcher in den Innenraum 22 ragt, wenn der Saugkopf 16 auf dem Sauggutbehälter 14 sitzt. Über den Stutzen 110 lässt sich ein Saugstrom bereitstellen, um dann über das Saugrohr oder den Saugschlauch, welcher an dem Sauganschluss 106 sitzt, Sauggut einzusaugen.

Der Stutzen 110 kann auch als Halter für einen Filterbeutel ausgebildet sein.

Der Sauganschluss 106 ist an der ersten Querseite 48 des Gerätekörpers 12 angeordnet. Bei dem gezeigten Ausführungsbeispiel 10 ist er an der ersten Saugkopf-Querseite 62 angeordnet.

Grundsätzlich ist es auch möglich, dass der Sauganschluss an dem Sauggutbehälter 14 sitzt.

An dem Saugkopf 16 ist eine Bedienungstafel 112 angeordnet. Die Bedienungstafel 112 umfasst ein oder mehrere Bedienelemente für einen Benutzer des Sauggeräts 10.

Bei dem gezeigten Ausführungsbeispiel 10 ist als Bedienelement ein Drehknopf 114 vorgesehen. Über diesen Drehknopf 114 lässt sich das Sauggerät 10 für einen Saugbetrieb aktivieren bzw. deaktivieren. Gegebenenfalls lässt sich eine Saugstärke einstellen.

Bei einer Ausführungsform kann über diesen Drehknopf 114 auch eingestellt werden, ob eine automatische Filterabreinigung durch die Filterabreinigungseinrichtung 88 durchgeführt werden soll.

Die Bedienungstafel 112 kann auch zusätzliche oder alternative Elemente umfassen, wie einen separaten Ein-/Aus-Schalter, oder einen Schalter zur Aktivierung einer automatischen Filterabreinigung, oder einen Schalter zur (instantanen) Aktivierung einer Filterabreinigung.

Die Bedienungstafel 112 steht mit ihren wirksamen Komponenten in elektrischer bzw. signalwirksamer Verbindung mit der Steuerungseinrichtung 96.

Die Bedienungstafel 112 sitzt an dem Gerätekörper 12 an dem Saugkopf 16 und dabei an der ersten Querseite 48; die Bedienungstafel 112 ist an der ersten Saugkopf-Querseite 62 angeordnet.

Bei dem gezeigten Ausführungsbeispiel stehen die Bedienungstafel 112 und der Sauganschluss 106 in unmittelbarer Nachbarschaft. Die Bedienungstafel 112 ist dabei bezogen auf die Höhenachse 58 (in einer Richtung von dem Boden 18 des Sauggutbehälters 14 weg) oberhalb des Sauganschlusses 106 angeordnet.

Insbesondere sind die Bedienungstafel 112 und der Sauganschluss 106 an einer Mittelebene 116 des Gerätekörpers 12 angeordnet (vergleiche Figur 1).

Der Sauganschluss 106 und die Bedienungstafel 112 sind entsprechend an der Mittelebene 116 bzw. fluchtend aufeinander ausgerichtet.

Die Mittelebene 116 ist eine geometrische Mittelebene des Gerätekörpers 12. Sie liegt mittig zwischen der ersten Längsseite 38 und der zweiten Längsseite 40. Sie ist quer zu der ersten Querseite 48 und zu der zweiten Querseite 50 orientiert.

Die geometrische Mittelebene 116 des Gerätekörpers 12 ist senkrecht zu der Radachse 36 orientiert.

Die Drehachse 76 liegt auf der Mittelebene 116 oder ist parallel zu dieser.

Insbesondere liegt die Höhenachse 58 in der Mittelebene 116.

Der Gerätekörper 12 und insbesondere auch das Sauggerät 10 ist näherungsweise spiegelsymmetrisch zu der Mittelebene 116 ausgebildet.

Die Fahreinrichtung 24 ist insbesondere spiegelsymmetrisch zu der Mittelebene 116 ausgebildet.

Insbesondere liegt ein Zentrum (und insbesondere Massenschwerpunkt) der Filterabreinigungseinrichtung 88 mit dem (mindestens einen) Fremdluftventil 92 auf der Mittelebene 116.

Das Zentrum der Filterabreinigungseinrichtung 88 ist ein Massenschwerpunkt der Filterabreinigungseinrichtung 88, und/oder ist ein geometrisches Zentrum. Insbesondere liegt das Zentrum der Filterabreinigungseinrichtung 88 an dem Fremdluftventil 92. Es ist vorgesehen, dass der Massenschwerpunkt der Filterabreinigungseinrichtung 88 mindestens näherungsweise auf der Mittelebene 116 liegt. Mindestens näherungsweise bedeutet dabei, dass der Massenschwerpunkt der Filterabreinigungseinrichtung 88 genau auf der Mittelebene 116 liegt oder in einem kleinen Abstand zu dieser ist, wobei dieser kleine Abstand höchstens 10 cm und insbesondere höchstens 5 cm beträgt, um kein Kippmoment zu erzeugen.

Bei einer Ausführungsform liegt ferner ein Zentrum der Gebläseeinrichtung 72 an der Mittelebene 116. Das Zentrum der Gebläseeinrichtung 72 ist ein Massenschwerpunkt der Gebläseeinrichtung 72, und/oder ist ein geometrischer Mittelpunkt der Gebläseeinrichtung 72.

Ein Massenschwerpunkt 118 (Figur 2) des Sauggeräts 10 und dabei insbesondere des Gerätekörpers 12 liegt auf der Mittelebene 116 oder in einem kleinen Abstand zu dieser (wobei dieser kleine Abstand höchstens 10 cm und insbesondere höchstens 5 cm beträgt).

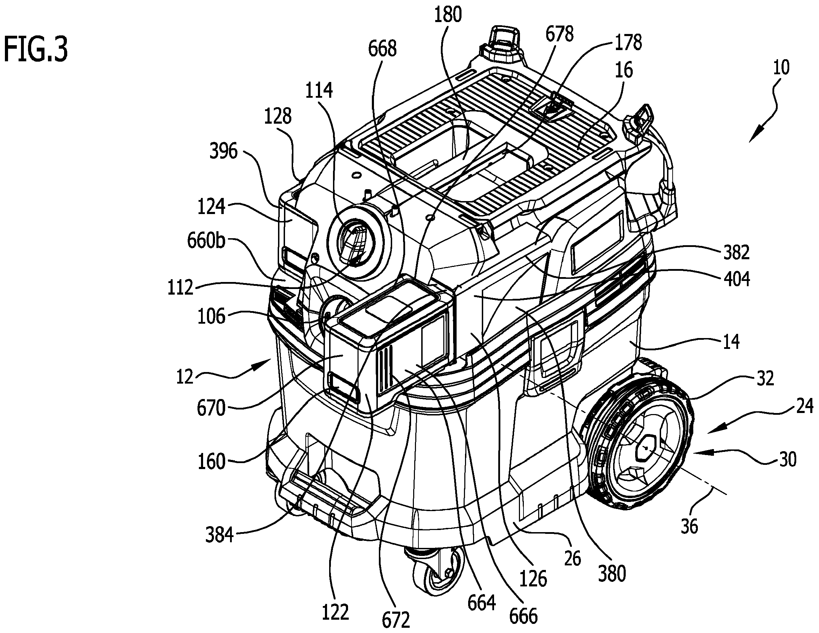

Zur Bereitstellung der elektrischen Energie, die zum Betrieb des Sauggeräts 10 notwendig ist, und insbesondere zur Bereitstellung der elektrischen Energie, welche für den Gebläsemotor 78, die Steuerungseinrichtung 96 und die Filterabreinigungseinrichtung 88 notwendig ist, ist eine Batterieeinrichtung 120 vorgesehen. Die Batterieeinrichtung 120 umfasst mindestens eine wiederaufladbare Batterieeinheit. Bei dem gezeigten Ausführungsbeispiel sind eine erste Batterieeinheit 122 und eine zweite Batterieeinheit 124 vorgesehen (vergleiche Figur 3), welche jeweils eine wiederaufladbare Batterie (ein Akkumulator) ist.

Es ist grundsätzlich auch möglich, wie untenstehend noch näher erläutert wird, dass eine Batterieeinheit batterielos ist und ein Ausgleichsgewicht für eine elektrisch wirksame Batterieeinheit umfasst, wobei dieses Gewicht dem Gewicht einer elektrisch wirksamen Batterie entspricht. Die Batterieeinheit mit Ausgleichsgewicht ist in ihren äußeren Abmessungen gleich ausgebildet wie eine elektrisch wirksame Batterieeinheit, um sie in eine entsprechende Aufnahme einsetzen zu können.

Für jede Batterieeinheit 122 ist eine Aufnahme vorgesehen. Bei der gezeigten Ausführungsform ist für die erste Batterieeinheit 122 eine erste Aufnahme 126 und für die zweite Batterieeinheit 124 eine zweite Aufnahme 128 vorgesehen.

Die erste Aufnahme 126 und die zweite Aufnahme 128 sind an dem Gerätekörper 12 und dabei an dem Saugkopf 16 angeordnet.

An einer jeweiligen Aufnahme 126, 128 ist eine jeweilige Batterieeinheit 122, 124 lösbar einsetzbar.

Der ersten Aufnahme 126 und der zweiten Aufnahme 128 ist jeweils eine elektrische Kontakteinrichtung 130 zugeordnet, welche fest an dem Saugkopfkörper 60 angeordnet ist. Die elektrische Kontakteinrichtung 130 steht in elektrischer Verbindung mit der Steuerungseinrichtung 96.

Wenn eine Batterieeinheit 122 bzw. 124 an der zugeordneten Aufnahme 126 bzw. 128 korrekt ("elektrisch wirksam") eingesetzt und fixiert ist, dann ist ein elektrischer Kontakt mit der elektrischen Kontakteinrichtung 130 hergestellt, sodass die entsprechende Batterieeinheit 122 bzw. 124 die notwendige elektrische Energie zum Betrieb des Sauggeräts 10 bereitstellen kann.

Der Saugkopfkörper 60 umfasst einen Mittelbock 132. Dieser Mittelblock 132 ist an der ersten Querseite 48 angeordnet. Er sitzt mittig zwischen der ersten Längsseite 38 und der zweiten Längsseite 40. Er liegt an der Mittelebene 116.

An dem Mittelblock 132 ist der Sauganschluss 106 angeordnet und ist die Bedienungstafel 112 angeordnet.

Bei einer Ausführungsform ist die Steuerungseinrichtung 96 an bzw. in dem Mittelblock 132 positioniert.

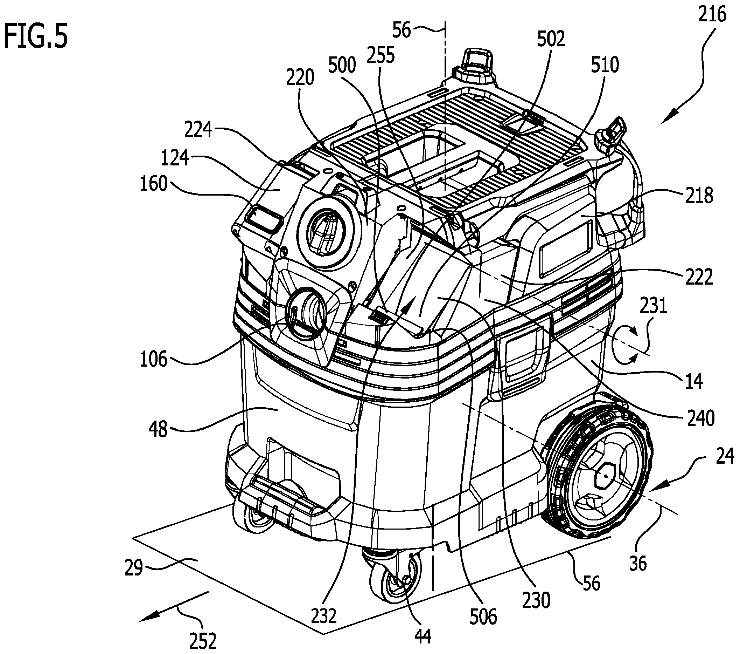

Der Mittelblock 132 hat eine I-Gestalt (vergleiche Figur 5), oder bei dem Ausführungsbeispiel gemäß Figur 1 eine T-Gestalt.

Die Aufnahmen 126 und 128 sind seitlich zu dem Mittelblock 132 an dem Saugkopf 16 angeordnet. Der Mittelblock 132 trennt die erste Aufnahme 126 von der zweiten Aufnahme 128.

Bei der T-förmigen Ausbildung des Mittelblocks 132 bei dem Sauggerät 10 umfasst dieser einen Steg 134, welcher jeweils über die erste Aufnahme 126 und die zweite Aufnahme 128 ragt.

An dem Steg 134 ist mindestens teilweise die Bedienungstafel 112 mit dem Drehknopf 114 angeordnet.

Wenn der Deckel 104 geschlossen ist (vergleiche Figur 1), stützt er sich insbesondere an dem Mittelblock 132 und dabei an dem Steg 134 ab.

Bei einer Ausführungsform ist der Mittelblock 132 gegenüber der Wandung 20 an der ersten Querseite 48 mit einem spitzen Winkel geneigt. Ein entsprechender Winkel 136 (vergleiche Figur 2) zu der Wandung 100 liegt beispielsweise im Bereich von ca. 25°.

Die erste Aufnahme 126 und die zweite Aufnahme 128 umfassen jeweils eine Führungsbahn 138 für die entsprechende Batterieeinheit 122 bzw. 124.

Der Saugkopf 16 weist für die erste Aufnahme 126 und die zweite Aufnahme 128 jeweils eine Ausnehmung oder einen Ausschnitt 140 auf. Diese ist durch einen Boden 142 begrenzt. Der Boden 142 liegt dem Steg 134 gegenüber. Der Ausschnitt bzw. die Ausnehmung 140 liegt zwischen dem Boden 142 und dem Steg 134 und erstreckt sich in einer Richtung zu der zweiten Querseite 50 hin.

An dem Boden 142 ist die Führungsbahn 138 positioniert.

Die Führungsbahn 138 ist angepasst an eine entsprechende Gegenführung der ersten Batterieeinheit 122 bzw. der zweiten Batterieeinheit 124.

Es ist eine Fixierungseinrichtung zugeordnet, welche beispielsweise als Rastverbindung ausgebildet ist. Wenn eine Batterieeinheit 122 bzw. 124 an der entsprechenden Aufnahme 126 bzw. 128 in der Führungsbahn 138 ihre Endposition erreicht hat (bei der eine Kontaktierung mit der elektrischen Kontakteinrichtung 130 vorliegt, das heißt die Positionierung ist elektrisch wirksam), dann wird diese Endposition beispielsweise durch eine lösbare Rastverbindung gehalten.

Der Ausschnitt bzw. die Ausnehmung 140 ist bei einem Ausführungsbeispiel mindestens näherungsweise (hohl-)quaderförmig ausgebildet.

Der Ausschnitt bzw. die Ausnehmung 140 ist in Richtung zu der zweiten Querseite 50 hin durch eine Wandung 144 begrenzt. Die Wandung 144 ist insbesondere eine Begrenzungswandung des Aufnahmeraums 86, in welchem die Filtereinrichtung 82 sitzt.

Der Ausschnitt bzw. die Ausnehmung 140 ist quer zu der Wandung 144 durch eine weitere Wandung 146 begrenzt. Diese Wandung 146 ist beabstandet zu der Mittelebene 116. Sie liegt parallel zu der Mittelebene 116 oder in einem kleinen spitzen Winkel (insbesondere kleiner 20°) zu dieser Mittelebene 116.

Die Wandung 146 ist insbesondere eine Wandung, welche den Aufnahmeraum 70 für die Gebläseeinrichtung 72 seitlich begrenzt.

Bei dem Ausführungsbeispiel des Sauggeräts 10 ist der Ausschnitt bzw. die Ausnehmung 140 seitlich, das heißt zu der ersten Längsseite 38 bzw. zu der zweiten Längsseite 40 hin offen.

Die Ausnehmung bzw. der Ausschnitt 140 ist zu der ersten Querseite 48 hin offen.

Der Gerätekörper 12 weist gegenüberliegende Aussparungen bzw. Freiräume 660a, 660b auf. Die Freiräume 660a, 660b sind jeweils ein Teil der Ausnehmung bzw. des Ausschnitts 140. Die Freiräume 660a, 660b liegen vor der jeweiligen zugeordneten Aufnahme 126, 128; die Aussparung bzw. der Freiraum 660a liegt vor der ersten Aufnahme 126 und ist dieser zugeordnet; die Aussparung bzw. der Freiraum 660b liegt vor der zweiten Aufnahme 128.

Die jeweilige Aussparung bzw. der jeweilige Freiraum 660a, 660b ist nach unten (bezogen auf die Höhenachse 58) durch den Boden 142 begrenzt. Insbesondere ist der Boden 142 im Bereich der Aussparung bzw. des Freiraums 660a, 660b eben ausgebildet.

Nach vorne ist die Aussparung bzw. der Freiraum 660a, 660b zu der ersten Querseite 48 hin offen. Seitlich nach außen (bei der Aussparung bzw. dem Freiraum 660a zu der ersten Längsseite 38 hin, bei der Aussparung bzw. dem Freiraum 660b zu der zweiten Längsseite 40 hin) ist die Aussparung bzw. der Freiraum 660a, 660b offen. Gegenüberliegend dazu ist die Aussparung bzw. der Freiraum 660a, 660b jeweils durch den Mittelblock 132 begrenzt. Nach hinten ist die Aussparung bzw. der Freiraum 660a, 660b durch die zugeordnete erste Aufnahme 126 bzw. durch die zugeordnete zweite Aufnahme 128 begrenzt.

Nach oben ist die Aussparung bzw. ist der Freiraum 660a, 660b bei dem Sauggerät 10 durch den Steg 134 begrenzt.

Um die jeweilige Batterieeinheit 122 bzw. 124 in die zugeordnete Aufnahme 126, 128 zu bringen, wird diese durch die entsprechende Aussparung oder den Freiraum 660a bzw. 660b durchgeschoben.

Da die Aussparung bzw. der Freiraum 660a, 660b zu der ersten Querseite 48 hin offen ist, erfolgt ein Durchschub durch die Aussparung bzw. den Freiraum 660a, 660b von der ersten Querseite 48 her.

Die jeweilige Batterieeinheit 122 bzw. 124 weist ein Gehäuse 664 auf. Das Gehäuse 664 hat eine erste Längsseite 666 und eine gegenüberliegende zweite Längsseite 668. Es hat ferner eine Vorderseite 670. An der Vorderseite 670 ist eine Ladezustandsanzeige 160 angeordnet.

An der ersten Längsseite 666 und an der zweiten Längsseite 668 sind jeweils eine Griffeinrichtung 672 an dem Gehäuse 664 der jeweiligen Batterieeinheit 122, 124 angeordnet. Die Griffeinrichtung 672 umfasst insbesondere eine Mehrzahl von parallel angeordneten Stegen.

Wenn die jeweilige Batterieeinheit 122, 124 an dem Gerätekörper 12 positioniert ist, dann sind bei der gezeigten Ausführungsform der Aufnahmen 126, 128 die entsprechenden Stege insbesondere quer und vorzugsweise senkrecht zu dem Boden 142 ausgerichtet.

Insbesondere ist die erste Batterieeinheit 122 und ist die zweite Batterieeinheit 124 bezüglich ihres Gehäuses 664 (das heißt bezüglich ihrer äußeren Form) spiegelsymmetrisch ausgebildet. An der ersten Längsseite 666 und an der zweiten Längsseite 668 sitzt jeweils die entsprechende Griffeinrichtung 672, sodass die jeweilige Batterieeinheit 122 bzw. 124 für beide Aufnahmen 126, 128 geeignet ist.

Wenn die entsprechende Batterieeinheit 122 bzw. 124 an der zugeordneten Aufnahme 126 bzw. 128 sitzt, dann ist die Griffeinrichtung 672 in der Aussparung bzw. in dem Freiraum 660a, 660b positioniert. Sie weist insbesondere nach außen zu der entsprechenden ersten Längsseite 38 bzw. zu der zweiten Längsseite 40.

Ein Bediener kann die entsprechende Batterieeinheit 122, 124 an der außenliegenden Griffeinrichtung 672 fassen und die entsprechende Batterieeinheit 122, 124 aus der entsprechenden Aufnahme 126 bzw. 128 herausziehen.

Die Aussparung bzw. der Freiraum 660a, 660b ist bezogen auf die Einführrichtung 150 der jeweiligen Aufnahme 126 bzw. 128 vorgeschaltet.

Die Aufnahmen 126, 128 und die zugeordneten Aussparungen bzw. die Freiräume 660a, 660b sind so ausgebildet, dass bei an der entsprechenden Aufnahme 126, 128 positionierter Batterieeinheit 122, 124 die jeweilige Batterieeinheit 122, 124 nicht über die erste Querseite 48 hinausragt und auch nicht über die erste Längsseite 38 bzw. die zweite Längsseite 40 hinausragt.

Es ist alternativ oder zusätzlich möglich, dass an einer Oberseite 678 des Gehäuses 664 eine Griffeinrichtung entsprechend der Griffeinrichtung 672 angeordnet ist. Die Oberseite 678 liegt zwischen der ersten Längsseite 666 und der zweiten Längsseite 668.

Eine Griffeinrichtung, welche an der Oberseite 678 angeordnet ist, weist Stege auf, welche beabstandet sind und insbesondere mindestens näherungsweise parallel zu dem Boden 142 sind, wenn die Batterieeinheit elektrisch wirksam positioniert ist.

Die erste Aufnahme 126 und die zweite Aufnahme 128 umfassen jeweils eine Kammer 380. Die Kammer 380 bildet eine Art von Gehäuse. Sie weist eine Wandung 382 auf, welche bis auf eine Öffnung 384 geschlossen ist. Die Öffnung 384 weist dabei zu dem jeweiligen Freiraum bzw. zu der jeweiligen Aussparung 660a bzw. 660b. Sie ist eine Einführöffnung für die jeweilige Batterieeinheit.

Die Wandung 382 ist beispielsweise mindestens in einem Teilbereich durch die Wandungen 144 und 146 gebildet.

Die Kammer 380 weist einen Innenraum 386 auf, welcher durch die Wandung 382 begrenzt ist (vergleiche Figur 2).

In dem Innenraum 386 ist die elektrische Kontakteinrichtung 130 positioniert bzw. sie weist in den Innenraum 386.

Der Innenraum 386 bildet einen Aufnahmeschacht 388 für die entsprechende Batterieeinheit 122 bzw. 124.

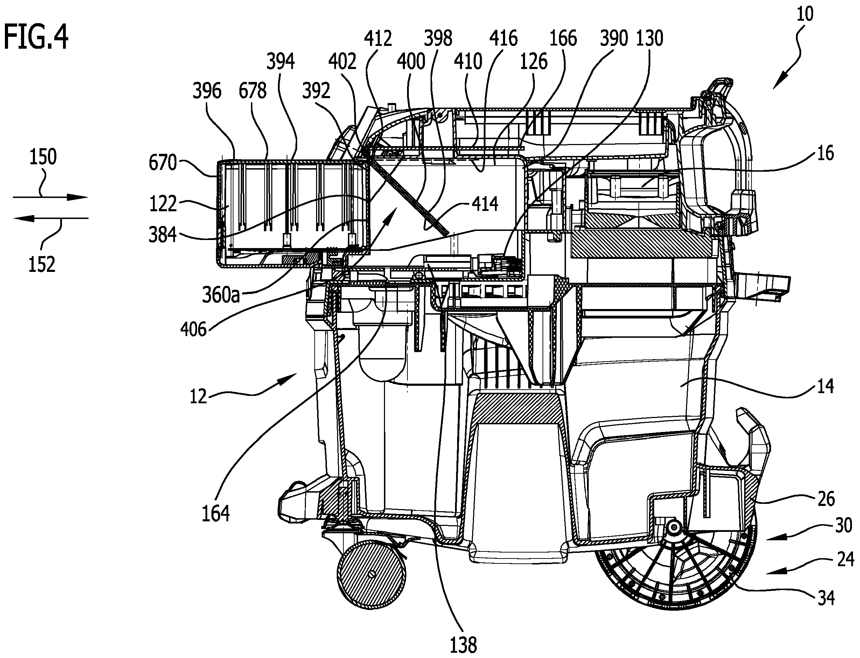

Die Kammer 380 hat ein erstes Ende 390 und ein gegenüberliegendes zweites Ende 392 (vergleiche Figur 4). Die Öffnung 384 liegt an dem zweiten Ende 392.

Die elektrische Kontakteinrichtung 130 ist im Bereich des ersten Endes 390 angeordnet und dabei an der Führungsbahn 138 angeordnet.

Die Kammer 380 ist mit dem Aufnahmeschacht 388 so dimensioniert, dass bei elektrisch wirksamer Positionierung der entsprechenden Batterieeinheit 122 bzw. 124 an der Kammer (wobei dann ein elektrischer Kontakt mit der elektrischen Kontakteinrichtung 130 vorliegt), diese mit einem ersten Teilbereich 394 in dem Innenraum 386 positioniert ist, und mit dem zweiten Teilbereich 396 außerhalb der Kammer 380 positioniert ist. Der zweite Teilbereich 396 liegt dabei wiederum in dem Freiraum oder Aussparung 660a bzw. 660b, und zwar derart, dass die Griffeinrichtung 672 für einen Bediener zugänglich ist.

Die Kammer 380 umfasst einen Verschluss 398. Dieser Verschluss 398 ist im Bereich der Öffnung 384 an der Kammer 380 und insbesondere an einer Wandung 382 der Kammer 380 angeordnet.

Alternativ ist es beispielsweise auch möglich, dass der Verschluss 398 an dem Mittelblock 132 sitzt.

Der Verschluss 398 verschließt die Kammer 380 an der Öffnung 384, wenn keine Batterieeinheit eingesetzt ist. Über den Verschluss 398 ist die Kammer 380, wenn keine Batterieeinheit 122 bzw. 124 eingesetzt ist, gegenüber dem Eindringen von Staub und dergleichen geschützt.

Bei dem Sauggerät 10 ist der Verschluss 398 als schwenkbare Klappe 400 ausgebildet. Diese Klappe 400 ist an einem Schwenklager 402 schwenkbar gelagert.

Das Schwenklager 402 ist beabstandet zu der Führungsbahn 138 an der Wandung 382 angeordnet.

Alternativ ist es auch möglich, dass das Schwenklager 402 beispielsweise an dem Mittelblock 132 angeordnet ist.

Das Schwenklager 402 ist beispielsweise an einem Deckenteil der Wandung 382, oder an gegenüberliegenden Seitenteilen der Wandung 382 angeordnet.

Dem Schwenklager 402 ist eine Schwenkachse 404 (vergleiche Figur 3) zugeordnet. Diese Schwenkachse 404 liegt quer und insbesondere senkrecht zu einer Einführrichtung der jeweiligen Batterieeinheit 122 bzw. 124 in den Aufnahmeschacht 388 (siehe unten).

Insbesondere liegt die Schwenkachse 404 quer und vorzugsweise senkrecht zu der Höhenachse 58.

Bei einem Ausführungsbeispiel ist die Schwenkachse 404 mindestens näherungsweise parallel zu der Radachse 36.

Weiterhin ist es insbesondere vorgesehen, dass die Schwenkachse 404 quer und vorzugsweise senkrecht zu der Mittelebene 116 liegt.

Dem Verschluss 398 (als Klappe 400) ist ein Schwenkbereich 406 zugeordnet, innerhalb welchem die Klappe 400 schwenkbeweglich ist.

Der Schwenkbereich 406 geht aus von der Öffnung 384 und liegt in dem Innenraum 386 der Kammer 380 (vergleiche Figur 4).

Bei dem Sauggerät 10 ist der Verschluss 400 durch eine einteilige Klappe bzw. durch eine einzige Klappe gebildet.

Der Verschluss 398 weist eine erste Stellung 408 auf (vergleiche die Figuren 1 und 2).

In dieser ersten Stellung 408 ist der Verschluss 398 in einer solchen Position, dass über den Verschluss 398 die Kammer 380 an der Öffnung 384 geschlossen ist und ein Staubschutz erreicht ist.

Bei der Klappe 400 ist die erste Stellung 408 eine entsprechende Schwenkstellung, in welcher die Öffnung 384 geschlossen ist.

Die erste Stellung 408 ist gewissermaßen eine erste Endstellung in dem Schwenkbereich 406.

Der Verschluss 398 weist ferner eine zweite Stellung 410 auf. In Figur 4 ist diese in durchbrochenen Linien angedeutet.

Wenn die entsprechende Batterieeinheit 122 bzw. 124 elektrisch wirksam in der Kammer 380 positioniert ist (mit elektrischem Kontakt zu der elektrischen Kontakteinrichtung 130), dann liegt der Verschluss 398 in der zweiten Stellung 410 und ist dabei in dem Innenraum 386 positioniert.

Bei der Klappe 400 ist die zweite Stellung 410 eine weitere Endstellung im Schwenkbereich 406. Zwischen diesen Endstellungen 408 und 410 liegt der Schwenkbereich 406.

In Figur 4 ist eine Zwischenstellung des Verschlusses 398 (der Klappe 400) zwischen der erste Stellung 408 und der zweiten Stellung 410 angedeutet, welche beim Einschieben der Batterieeinheit 122 in den entsprechenden Aufnahmeschacht 388 vorliegt.

Dem Verschluss 398 ist eine Rückstelleinrichtung 412 zugeordnet. Die Rückstelleinrichtung 412 ist insbesondere eine Federeinrichtung.

Die Rückstelleinrichtung 412 ist bestrebt, sofern es keine Hindernisse gibt (siehe unten), den Verschluss 398 in die erste Stellung 408 zu bringen und in der ersten Stellung zu halten. Es ist ein Anschlag für den Verschluss 398 vorgesehen, um die erste Stellung 408 festzulegen.

Die Rückstelleinrichtung 412 sorgt, wenn keine Hindernisse vorliegen, für eine Verschwenkung der Klappe 400 in die erste Stellung 408 und dafür, dass die Klappe 400 in der ersten Stellung 408 gehalten wird. Die Rückstelleinrichtung 412 sorgt dafür, dass die Kammer 380 an der Öffnung 384 durch den Verschluss 398 geschlossen ist.

Die Rückstelleinrichtung 412 sorgt dafür, dass, wenn kein Hindernis vorliegt, der Verschluss 398 automatisch in die erste Stellung 408 übergeht und dort verbleibt.

Der Verschluss 398 (die Klappe 400) weist eine Angriffsfläche 414 für die entsprechende Batterieeinheit 122 bzw. 124 auf (vergleiche Figur 4). Die Angriffsfläche 414 ist bei dem Ausführungsbeispiel der Klappe 400 durch eine Außenseite der Klappe 400 gebildet, welche dem Innenraum 386 (bezogen auf die erste Stellung 408) abgewandt ist.

Wenn die Batterieeinheit 122 bzw. 124 in den Aufnahmeschacht 388 geschoben wird (vergleiche Figur 4), dann liegt die Batterieeinheit an der Angriffsfläche 414 des Verschlusses 398 (der Klappe 400) an.

Eine Verschiebung der entsprechenden Batterieeinheit 122, 124 in den Aufnahmeschacht 388 sorgt dann für einen Übergang des Verschlusses 398 von der ersten Stellung 408 in die zweite Stellung 410. Die Translationsbewegung der Batterieeinheit 122 bzw. 124 treibt eine Bewegung des Verschlusses 398 von der ersten Stellung 408 in die zweite Stellung 410 an. Die Batterieeinheit 122 bzw. 124 wirkt auf die Angriffsfläche 414 der Klappe 400 und treibt die Schwenkbewegung von der ersten Stellung 408 in die zweite Stellung 410 an.

Wenn die Batterieeinheit 122 bzw. 124 elektrisch wirksam in dem Aufnahmeschacht 388 positioniert ist, liegt der Verschluss 398 (die Klappe 400) mit einer Anlagefläche 416 an der entsprechenden Batterieeinheit 122 bzw. 124 an und dabei insbesondere an der Oberseite 678 an. Die Batterieeinheit 122 bzw. 124 bildet gewissermaßen ein Hindernis für die Schwenkbeweglichkeit der Klappe 400. Diese bleibt in der zweiten Stellung 410, und die Rückstelleinrichtung 412 ist durch die Anlage der Klappe 400 an der Batterieeinheit 122 bzw. 124 nicht wirksam.

Wenn die Batterieeinheit 122 bzw. 124 in den Aufnahmeschacht 388 gebracht wird, und dabei in diesem verschoben wird, bis der elektrisch wirksame Kontakt mit der elektrischen Kontakteinrichtung 130 hergestellt wird, dann wird gleichzeitig die Klappe 400 ausgehend von der ersten Stellung 408 in die zweite Stellung 410 gebracht.

Wenn die Endposition erreicht ist, dann liegt der zweite Teilbereich 396 außerhalb des Aufnahmeschachts 388. Die Klappe 400 befindet sich in der zweiten Stellung 410.

Wenn die entsprechende Batterieeinheit 122 bzw. 124 wieder von dem Aufnahmeschacht 388 entnommen wird, dann fällt die Batterieeinheit 122 bzw. 124 als Sperre für die Klappe 400 weg und angetrieben durch die Rückstelleinrichtung 412 geht der Verschluss 398 von der zweiten Stellung 410 (allmählich) und dabei automatisch in die erste Stellung 408 über.

In der ersten Stellung 408 ist wiederum die Kammer 380 staubgeschützt geschlossen.

Bei dem Sauggerät 10 ist eine einteilige Klappe 400 vorgesehen, welche einer Oberseite der Kammer 380 zugeordnet ist bzw. an der Oberseite angeordnet ist. Die elektrische Kontakteinrichtung 130 ist an einer Unterseite der Kammer 380 angeordnet. Die Oberseite 678 liegt bezogen auf die Höhenachse 58 oberhalb der Unterseite.

Das Schwenklager 402 liegt bezogen auf die Höhenachse 58 oberhalb der elektrischen Kontakteinrichtung 130 bzw. liegt bezogen auf die Höhenachse 58 oberhalb der Führungsbahn 138.

Eine Batterieeinheit 122 bzw. 124 lässt sich in die zugeordnete Aufnahme 126 bzw. 128 in einer Einführrichtung 150 einführen und dabei insbesondere einschieben. Die Gegenrichtung zu der Einführrichtung 150 ist eine Ausführrichtung. In dieser Richtung lässt sich die entsprechende Batterieeinheit 122 bzw. 124 von der entsprechenden Aufnahme 126 bzw. 128 entnehmen.

Die Einführrichtung 150 ist durch die Führungsbahn 138 und dabei durch deren Anordnung an dem Boden 142 vorgegeben.

Die Einführrichtung 150 liegt quer zu der ersten Querseite 48. Über die erste Querseite 48 her lässt sich die entsprechende Batterieeinheit 122 bzw. 124 in die jeweilige Aufnahme 126 bzw. 128 einschieben.

Die Einführrichtung 150 liegt quer zu der Höhenachse 58.

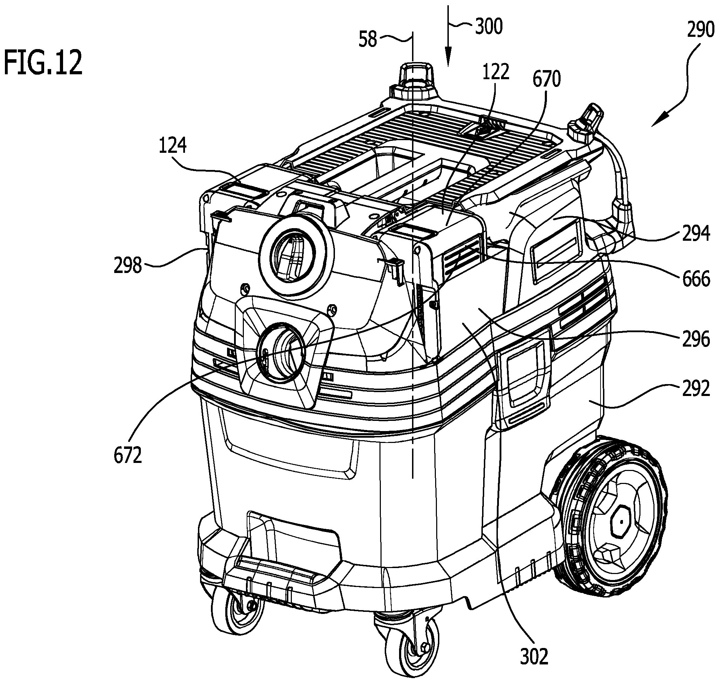

Bei dem Sauggerät 10 gemäß dem ersten Ausführungsbeispiel liegt die Einführrichtung 150 senkrecht zu der Höhenachse 58. Sie kann auch in einem spitzen Winkel zu der Höhenachse liegen (vergleiche die Figuren 5 bis 7) oder parallel zur Höhenachse (vergleiche Figur 12).

Die Einführrichtung 150 liegt quer und insbesondere senkrecht zu der Radachse 36.

Die Einführrichtung 150 liegt bei dem Sauggerät 10 mindestens näherungsweise parallel zu der Standebene 56. "Näherungsweise" bedeutet dabei, dass höchstens ein kleiner spitzer Winkel beispielsweise kleiner als 15° zwischen der Einführrichtung 150 und der Standebene 56 vorliegt.

Entsprechendes gilt dann auch für die Ausführrichtung als Gegenrichtung zu der Einführrichtung 150. In Figur 1 ist diese Ausführrichtung mit dem Bezugszeichen 152 angedeutet.

In der ersten Stellung 408 des Verschlusses 398 (der Klappe 400) ist die Einführrichtung 150 quer und insbesondere senkrecht zu der Klappe 400 orientiert.

Die Einführrichtung 150 ist quer und insbesondere senkrecht zu der Schwenkachse 404 orientiert.

Bei einem Ausführungsbeispiel ist der Sauganschluss 106 mit einer Mittelachse 154 gegenüber der Höhenachse 58 in einem spitzen Winkel angeordnet. Entsprechend ist er in einem spitzen Winkel zu der Standebene 56 angeordnet. Insbesondere ist der Sauganschluss 106 so angeordnet, dass die Mittelachse 154 mindestens näherungsweise senkrecht auf eine Außenseite des Mittelblocks 132 trifft. Entsprechend liegt der spitze Winkel betragsmäßig gleich oder ungefähr gleich bei dem Winkel 136.

Eine Einführrichtung für eine Hülse eines Saugschlauchs liegt parallel zur Mittelachse 154. Entsprechend liegt die Einführrichtung 158 in einem spitzen Winkel zu der Höhenachse 58 bzw. in einem spitzen Winkel zu dem Sauganschluss 106.

Bei dem gezeigten Ausführungsbeispiel liegt entsprechend die Einführrichtung 158 für einen Saugschlauch an den Sauganschluss 106 in einem spitzen Winkel, welcher betragsmäßig dem oben genannten spitzen Winkel entspricht, zu der Einführrichtung 150 für die jeweilige Batterieeinheit 122, 124 in die jeweilige Aufnahme 126 bzw. 128.

Der Batterieeinrichtung 120 ist eine Ladezustandsanzeige 160 zugeordnet. Die Ladezustandsanzeige 160 zeigt für die jeweilige Batterieeinheit 122 bzw. 124 deren Ladezustand an.

Die Ladezustandsanzeige 160 ist bei dem gezeigten Ausführungsbeispiel an der jeweiligen Batterieeinheit 122 bzw. 124 angeordnet.

Es ist aber grundsätzlich auch möglich, dass eine Ladezustandsanzeige 160 an dem Saugkopf 16 angeordnet ist und dabei jeweils der ersten Aufnahme 126 und der zweiten Aufnahme 128 eine eigene Ladezustandsanzeige 160 zugeordnet ist. Wenn eine Batterieeinheit 122, 124 an der entsprechenden Aufnahme 126 bzw. 128 sitzt, kann über die Ladezustandsanzeige 160 an der jeweiligen Batterieeinheit 122 bzw. 124, oder an der jeweiligen Aufnahme 126 bzw. 128 optisch der Ladezustand detektiert werden.

Durch die Anordnung der Aufnahme 126 bzw. 128 an dem Saugkopf 16 ist die Ladezustandsanzeige 160 für einen Bediener von der ersten Querseite 48 hin ablesbar.

Die Ladezustandsanzeige 160 ist dann entsprechend an der jeweiligen Batterieeinheit 122, 124 an einer Querseite angeordnet, welche bei fixierter Batterieeinheit 122 bzw. 124 an der entsprechenden Aufnahme 126 bzw. 128 zu der Querseite 48 hin neben dem Mittelblock 132 liegt.

Ein Bediener, der sich vor der ersten Querseite 48 befindet, kann von dieser Position her über die erste Querseite die jeweilige Batterieeinheit 122, 124 an der zugeordneten Aufnahme 126, 128 einsetzen bzw. entnehmen.

Er kann von dieser Position aus einen Saugschlauch mit einer entsprechenden Hülse an dem Sauganschluss 106 fixieren.

Von dieser Position aus hat der Bediener über die erste Querseite 48 Zugriff auf die Bedienungstafel 112 und kann entsprechende Bedienvorgänge durchführen.

Die Ladezustandsanzeigen 160 der Batterieeinrichtung 120 liegen in seinem Sichtfeld, wenn er sich vor der ersten Querseite 48 befindet.

Wenn ein Saugschlauch an dem Sauganschluss 106 fixiert ist, kann ein Bediener auch durch Ziehen an dem Saugschlauch das Sauggerät 10 zu sich herfahren.

Die Aufnahmen 126, 128 sind zu der ersten Querseite 48 offen, um ein Einschieben der jeweiligen Batterieeinheit 122, 124 in der Einführrichtung 150 von der ersten Querseite 48 her zu ermöglichen.

Die erste Aufnahme 126 und die zweite Aufnahme 128 sind symmetrisch und dabei spiegelsymmetrisch zu der Mittelebene 116 an dem Saugkopf 16 angeordnet. Sie liegen dabei auf der gleichen Höhe bezogen auf die Höhenachse 58 bzw. bezogen auf die Standebene 56.

Die erste Aufnahme 126 und die zweite Aufnahme 128 und dabei auch die jeweiligen Batterieeinheiten 122, 124, wenn diese an der Aufnahme 126 bzw. 128 fixiert sind, sind quer beabstandet zu der Mittelebene 116.

Die Gebläseeinrichtung 72 ist mindestens mit einem Teilbereich an dem Saugkopf 16 zwischen der ersten Aufnahme 126 und der zweiten Aufnahme 128 angeordnet. Die erste Aufnahme 126 und die zweite Aufnahme 128 und damit auch die erste Batterieeinheit 122 und die zweite Batterieeinheit 124 sind in einer Querrichtung zu der Mittelebene 116 beabstandet zueinander. Diese Querrichtung ist senkrecht zur Höhenachse 58 und insbesondere mindestens näherungsweise parallel zu der Standebene 56.

Weiterhin ist die Steuerungseinrichtung 96 an dem Saugkopf 16 mindestens mit einem Teilbereich zwischen der ersten Aufnahme 126 und der zweiten Aufnahme 128 positioniert.

Die Bedienungstafel 112 und der Sauganschluss 146 liegt zwischen der ersten Aufnahme 126 und der zweiten Aufnahme 128 an der ersten Querseite 48.

Die erste Aufnahme 126 und die zweite Aufnahme 128 sind bezogen auf diese Querrichtung seitlich zu der Gebläseeinrichtung 72 an dem Saugkopf 16 positioniert.

Die erste Aufnahme 126 und die zweite Aufnahme 128 weisen jeweils eine Unterseite 164 bezogen auf die Höhenachse 58 auf. Diese Unterseite 164 ist im Wesentlichen durch den Boden 142 gebildet.

Die Aufnahmen 126, 128 weisen weiterhin eine Oberseite 166 bezogen auf die Höhenachse 58 auf. Die Oberseite 166 und die Unterseite 164 liegen in der Höhenachse 58 beabstandet zueinander.

Die Oberseite 166 ist im Wesentlichen durch eine Unterseite des Stegs 134 gebildet.

Die Unterseite der jeweiligen Aufnahme 126, 128 liegt bezogen auf die Höhenachse 58 auf gleicher Höhe wie der Sauganschluss 106. Der Sauganschluss 106 weist eine Höhenerstreckung auf. Die Unterseite 164 liegt innerhalb dieser Höhenerstreckung.

Die Oberseite 166 der jeweiligen Aufnahme 126, 128 liegt bezogen auf die Höhenachse 58 auf gleicher Höhe wie die Bedienungstafel 112. Die Bedienungstafel 112 weist ebenfalls eine Erstreckung in einer Höhenrichtung auf, und die Oberseite 166 liegt bezogen auf die Höhenachse 58 innerhalb dieser Erstreckung.

Dies gilt dann auch für entsprechende Batterieeinheiten 122, 124, wenn sie an der jeweiligen Aufnahme 126, 128 positioniert sind. Eine Unterseite der jeweiligen Batterieeinheit 122 bzw. 124 liegt auf gleicher Höhe wie der Sauganschluss 106. Eine Oberseite der jeweiligen Batterieeinheit 122, 124 liegt auf gleicher Höhe wie die Bedienungstafel 112.

Der Bedienungstafel 112 kann ein Zentrum zugeordnet werden, welches auf der Mittelebene 116 liegt.

Eine erste Linie von diesem Zentrum zu einem geometrischen Zentrum der ersten Aufnahme 126, eine zweite Linie von diesem Zentrum zu einem entsprechenden (geometrischen) Zentrum der zweiten Aufnahme 128 und eine dritte Linie von diesem Zentrum der zweiten Aufnahme 128 zu dem Zentrum 126 bilden zusammen eine Gerade, oder wie bei dem Sauggerät 10 ein Dreieck. Dieses Dreieck ist aufgrund der symmetrischen Anordnung der ersten Aufnahme 126 und der zweiten Aufnahme 128 zu der Mittelebene 116 ein gleichseitiges Dreieck.

Wenn die jeweiligen Batterieeinheiten 122, 124 an den Aufnahmen 126, 128 angeordnet sind, und den Batterieeinheiten 122, 124 ein Zentrum zugeordnet wird, welches ein Massenzentrum oder ein geometrisches Zentrum sein kann, dann bilden entsprechende Linie zu dem Zentrum ebenfalls ein Dreieck.

Eine erste Linie von einem Zentrum der ersten Aufnahme 126 zu einem Zentrum des Sauganschlusses 106, eine zweite Linie von diesem Zentrum zu einem Zentrum der zweiten Aufnahme 128, und eine dritte Linie von dem Zentrum der zweiten Aufnahme 128 zu dem Zentrum der ersten Aufnahme 126 bilden zusammen ebenfalls ein Dreieck, oder eine Gerade.

Dieses Dreieck ist ebenfalls gleichseitig.

Das Zentrum des Sauganschlusses 106 liegt auf der Mittelebene 116. Es entspricht im Wesentlichen einem Schnittpunkt der Mittelachse 154 mit der ersten Saugkopf-Querseite 62.

Wenn die Batterieeinheiten 122, 124 an den jeweiligen Aufnahmen 126, 128 eingesetzt sind, dann bilden die entsprechenden Linien zwischen dem Zentrum der ersten Batterieeinheit 122 und dem Zentrum des Sauganschlusses 106, dem Zentrum des Sauganschlusses 106 und der zweiten Batterieeinheit 124, und zwischen den Zentren der zweiten Batterieeinheit 124 und der ersten Batterieeinheit 122 zusammen ebenfalls ein Dreieck.

Es ist grundsätzlich auch möglich, dass durch Näherrücken des Sauganschlusses 106 zu der Bedienungstafel 112 das entsprechende Dreieck zu einer Geraden entartet.

Wenn die erste Batterieeinheit 122 und die zweite Batterieeinheit 124 eingesetzt sind, dann liegt ihr gemeinsamer Massenschwerpunkt auf der Mittelebene 116. Der Massenschwerpunkt 118 liegt an der Mittelebene 116, oder in einem kleinen Abstand (insbesondere kleiner 10 cm und vorzugsweise kleiner 5 cm) zu der Mittelebene 116. Es entsteht dann durch die Batterieeinrichtung 120 kein Kippmoment an dem Gerätekörper 12.

Es kann dabei grundsätzlich vorgesehen sein, um ein Kippmoment zu verhindern, wenn nur eine elektrisch wirksame Batterieeinheit eingesetzt ist, dass die andere Batterieeinheit 122 ein Ausgleichsgewicht bildet, welche gewissermaßen ein "Batterie-Dummy" ist, und welches dafür sorgt, dass der Massenschwerpunkt der Batterieeinrichtung auf der Mittelebene 116 liegt.

An dem Deckel 104 ist ein Tragegriff 178 insbesondere in Bügelform angeordnet. Bei einem Ausführungsbeispiel ist der Tragegriff 178 so angeordnet, dass er nicht über eine Deckeloberfläche des Deckels 104 hinausragt. Die Deckeloberfläche 104 kann insbesondere als Ablagefläche verwendet werden.

Der Tragegriff 178 liegt an der Mittelebene 116.

Bei fixiertem Deckel 104 kann der Gerätekörper 12 über den Tragegriff 178 gehalten und insbesondere gehoben werden.

Durch die symmetrische Anordnung, wobei insbesondere der Massenschwerpunkt 118 des Gerätekörpers einschließlich der Batterieeinrichtung 120 auf der Mitteleben 116 liegt, entsteht kein Kippmoment.

Der Tragegriff 178 weist insbesondere einen Steg 180 zum Halten auf, welcher eine Erstreckung in einer Richtung aufweist, welche zwischen der ersten Querseite 48 und der zweiten Querseite 50 verläuft. Ferner liegt der Steg 180 auf der Mittelebene 116.

Beim Hochheben entsteht dadurch kein Kippmoment. Dazu kann beispielsweise auf einfache Weise der Gerätekörper 12 aus der Aufnahme 28 herausgehoben werden bzw. in diese eingesetzt werden.

Um den Massenschwerpunkt 118 an der Mittelebene 116 zu "positionieren" bzw. in einem kleinen Abstand zu dieser zu "positionieren", ist es vorgesehen, dass die Gebläseeinrichtung 72 an der Mittelebene 116 liegt. Ferner liegt die Filterabreinigungseinrichtung 88 an der Mittelebene.

Wenn entsprechende Batterieeinheiten 122, 124 an den Aufnahmen 126, 128 eingesetzt sind, dann hat eine Linienkontur 182, welche Linien zwischen dem Zentrum der ersten Batterieeinheit 122, einem Zentrum der Filterabreinigungseinrichtung 88, zwischen dem Zentrum und dem Zentrum der zweiten Batterieeinheit 124 und zwischen den Zentren der ersten Batterieeinheit 122 und der zweiten Batterieeinheit 124 die Form eines Dreiecks und dabei insbesondere eines gleichseitigen Dreiecks.

Das genannte Zentrum ist ein geometrisches Zentrum oder ein Massenschwerpunkt der Filterabreinigungseinrichtung 88.

Die Dreiecksspitze dieser Dreiecks-Linienkontur liegt auf der Mittelebene 116.

Eine Projektion dieses Dreiecks auf die Standebene 56 ist ebenfalls ein Dreieck. Eine Projektion des Massenschwerpunkts 118 auf die Standebene 56 liegt innerhalb dieses projizierten Dreiecks.

Dadurch ergibt sich eine hohe Standsicherheit mit minimierten Kippmomenten.

Bei einem Ausführungsbeispiel liegt die Gebläseeinrichtung 72 mindestens mit einem Teilbereich und dabei vorzugsweise größtenteils innerhalb dieses Dreiecks.

Dem Gerätekörper 12 kann ein erster Teil 186 und ein sich daran anschließender zweiter Teil zugeordnet werden. Die erste Querseite 48 ist an dem ersten Teil angeordnet. Die zweite Querseite 50 ist an dem zweiten Teil angeordnet. Der erste Teil und der zweite Teil "teilen" sich die erste Längsseite 38 und die zweite Längsseite 40.

Die Aufnahmen 126, 128 sind an dem ersten Teil angeordnet. Entsprechend ist die Batterieeinrichtung 120 an dem ersten Teil angeordnet.

Die Filterabreinigungseinrichtung 88 ist an dem zweiten Teil angeordnet.

Die Batterieeinrichtung 120 mit der ersten Batterieeinheit 122 und der zweiten Batterieeinheit 124 ist dabei bei Positionierung an dem Saugkopf 16 näher zu der ersten Querseite 48 liegend als zu der zweiten Querseite 50.

Die Filterabreinigungseinrichtung 88 an dem zweiten Teil liegt näher zu der zweiten Querseite 50 als zu der ersten Querseite 48.

Die Gebläseeinrichtung 72 ist bei einem Ausführungsbeispiel an dem ersten Teil angeordnet.

Die Gebläseeinrichtung liegt näher zu der ersten Querseite 48 als zu der zweiten Querseite 50, oder liegt mittig zwischen der ersten Querseite 48 und der zweiten Querseite 50.

Wenn der Gerätekörper 12 in der Aufnahme 28 positioniert ist, dann ist geometrisch die Radeinrichtung 30 an dem zweiten Teil angeordnet und die Rolleneinrichtung 42 ist an dem ersten Teil angeordnet.

Die Radachse 36 liegt senkrecht zu der Mittelebene 116.

Dadurch ist auch ein Kippmoment um eine fiktive Kippachse, welche senkrecht zur Mittelebene 116 orientiert ist, verhindert.

Insgesamt ergibt sich eine stabile Aufstellung des Sauggeräts 10 auf einem Untergrund 29, auch wenn die relativ schwere Batterieeinrichtung 120 an dem Saugkopf 16 und damit an dem Gerätekörper 12 fixiert ist.

Wenn die entsprechende Batterieeinheit 122 bzw. 124 nicht in dem jeweiligen Aufnahmeschacht 388 eingesetzt ist, dann ist dieser durch den Verschluss 398 (die Klappe 400) an der Öffnung 384 geschlossen. Dadurch liegt ein Staubschutz des Innenraums 386 und insbesondere der elektrischen Kontakteinrichtung 130 vor.

Wenn eine entsprechende Batterieeinheit 122, 124 eingesetzt wird, dann geht der Verschluss 398 (die Klappe 400) von einer ersten Stellung 408 in die zweite Stellung 410, wobei die entsprechende Kraftausübung beim Einsetzen der Batterieeinheit 122, 124 die Kraft der Rückstelleinrichtung 412 überwindet.

Wenn entsprechend die Batterieeinheit 122 bzw. 124 aus dem Aufnahmeschacht 388 herausgenommen wird, dann sorgt die Rückstelleinrichtung 412 dafür, dass der Verschluss 398 (die Klappe 400) von der zweiten Stellung 410 automatisch in die erste Stellung 408 geht und dabei dann ein Staubschutz der Kammer 380 erreicht wird.

Es kann vorgesehen sein, dass die Filterabreinigungseinrichtung 88 bezogen auf die Höhenachse 58 auf gleicher Höhe wie die Aufnahmen 126, 128 angeordnet ist, insbesondere auch im Vergleich des entsprechenden Zentrums der Filterabreinigungseinrichtung 88 und Zentren (geometrischen Zentren) der ersten Aufnahme 126 und der zweiten Aufnahme 128.

Insbesondere liegen dann Zentren der Batterieeinheiten 122, 124 auf gleicher Höhe wie das Zentrum der Filterabreinigungseinrichtung 88.

Es ist auch möglich, dass das Zentrum der Filterabreinigungseinrichtung 88 bezogen auf Zentren der ersten Batterieeinheit 122, 124 (und damit bezogen auf ein Zentrum der Batterieeinrichtung 120) ein Höhenabstand in der Höhenachse 58 aufweist.

Bei einem Ausführungsbeispiel ist das Laufrad 74 der Gebläseeinrichtung 72 bezogen auf die Höhenachse 58 niedriger positioniert als die erste Aufnahme 126 und die zweite Aufnahme 128, das heißt bezogen auf die Höhenachse 58 liegt das Laufrad 74 unterhalb des jeweiligen Bodens 142.

Es ergibt sich dadurch eine optimierte Platznutzung.

Bei dem Sauggerät 10 sind für eine vereinfachte Bedienbarkeit durch einen Bediener der Sauganschluss 106 und die Bedienungstafel 112 an der ersten Querseite 48 angeordnet.

Die Ladezustandsanzeigen 160 lassen sich durch einen Bediener von dieser ersten Querseite 48 her ablesen.

Die Batterieeinheiten 122, 124 lassen sich über diese erste Querseite 48 einsetzen bzw. entnehmen.

Die Batterieeinrichtung 120 ist spiegelsymmetrisch zu der Mittelebene 116 angeordnet. Der Massenschwerpunkt 118 des Gerätekörpers 12 liegt mindestens näherungsweise auf der Mittelebene 116.

Durch die symmetrische Anordnung der Batterieeinrichtung 120 zu der Mittelebene 116 wird auch bei an den Aufnahmen 126, 128 fixierten Batterieeinheiten 122, 124 dieser Massenschwerpunkt nicht wesentlich aus der Mittelebene verschoben.

Es ergibt sich dadurch kein oder höchstens ein sehr geringes Kippmoment bezogen auf eine fiktive Kippachse, welche senkrecht zur Höhenachse 58 und dabei in der Mittelebene 116 liegt.

Es ergibt sich dadurch eine hohe Standfestigkeit für das Sauggerät 10.

Ferner lässt sich der Gerätekörper 12 ohne wesentliches Anheben bzw. Absenken bzw. Halten.

Durch die oben genannte dreieckförmige Linienkontur ergibt sich eine optimierte Platznutzung mit Minimierung eines Kippmoments. Auch ein Kippmoment in einer fiktiven Kippachse senkrecht zur Mittelebene 116 ist minimiert.

Für einen Bediener ergibt sich eine einfache Bedienbarkeit. Der Sauger 10 lässt sich auch mit Filterabreinigungseinrichtung 88 kompakt ausbilden.

Durch die den Aufnahmen 126, 128 zugeordneten Aussparungen bzw. Freiräumen 660a, 660b lassen sich die Batterieeinheiten 122, 124 bündig oder zurückgesetzt bezüglich der ersten Querseite 58 und den Längsseiten 38, 40 an dem Gerätekörper 12 positionieren. Die Batterieeinheiten 122, 124 ragen nicht über eine Einhüllende des Gerätekörpers 12 hinaus; sie ragen insbesondere nicht über die erste Querseite 48 und über die Längsseiten 38, 40 hinaus.

Ferner lässt sich bei an der jeweiligen Aufnahme 126 bzw. 128 positionierter Batterieeinheit 122, 124 über die Griffeinrichtung 672, welche über die Aussparung bzw. den Freiraum 660a, 660b zugänglich ist, für einen Bediener auf einfache Weise die entsprechende Batterieeinheit 122, 124 von dem Gerätekörper 12 aus der jeweiligen Aufnahme 126, 128 herausziehen.

Es ist dabei grundsätzlich möglich, dass die Bedienbarkeit über die erste Querseite 48 auch bei einer Ausführungsform eines Sauggeräts erfolgt, welche keine Filterabreinigungseinrichtung 88 aufweist.

Es ist grundsätzlich möglich, dass das Sauggerät 10 nur über die Batterieeinrichtung 120 betrieben werden kann. Alternativ ist es möglich, dass das Sauggerät 10 auch über Netzstrom betrieben werden kann.

Es ist insbesondere vorgesehen, dass eine Ladung der wiederaufladbaren Batterieeinheiten 122, 124 außerhalb des Sauggeräts 10 erfolgt und entsprechend die Batterieeinheiten 122, 124 abnehmbar sind.

Es kann auch vorgesehen sein, dass zwar die Batterieeinheiten 122, 124 abnehmbar sind, dass jedoch ein Ladegerät in das Sauggerät 10 integriert ist.

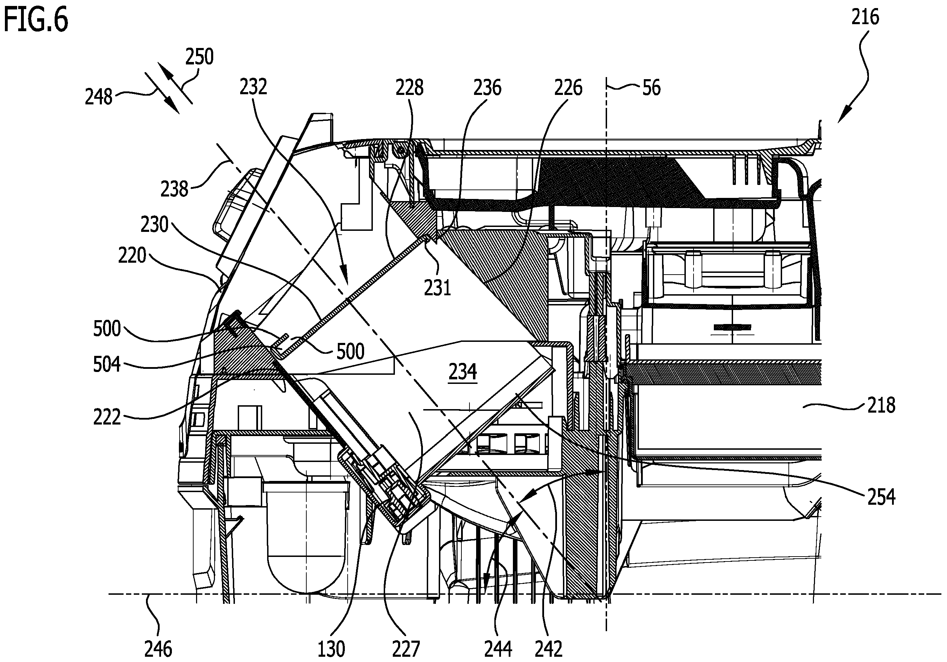

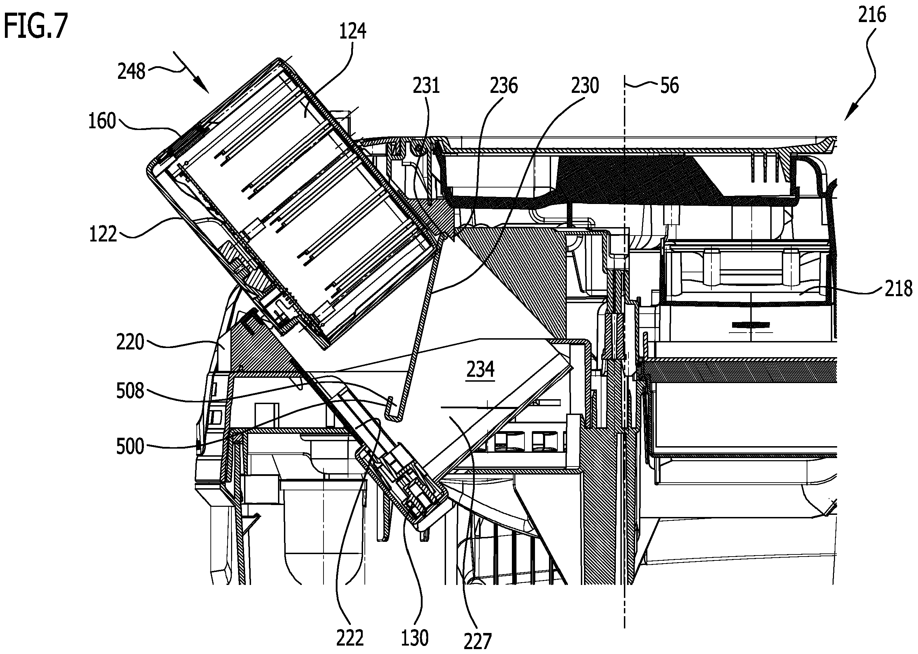

Ein zweites Ausführungsbeispiel eines erfindungsgemäßen Sauggeräts 216, welches in den Figuren 5 bis 7 gezeigt ist, wobei in den Figuren 6, 7 Teildarstellungen gezeigt sind, unterscheidet sich in der Ausbildung der Aufnahmen für die Batterieeinrichtung 120 von dem Sauggerät 10. Für gleiche Elemente wie beim Sauggerät 10 werden gleiche Bezugszeichen verwendet.

An einem entsprechenden Sauggutbehälter 14 sitzt ein Saugkopf 218.

Der Saugkopf 218 weist einen Mittelblock 220 auf. An dem Mittelblock 220 sitzt eine Bedienungstafel 112 mit einem Drehknopf 114, und sitzt ein Sauganschluss 106.

Der Mittelblock 220 hat eine I-Form und ist wie der Mittelblock 132 des Sauggeräts 10 an einer entsprechenden ersten Querseite 48 geneigt zu der Wandung 20 des Sauggutbehälters.

(Der Mittelblock 220 weist im Vergleich zu dem Mittelblock 132 keinen Steg 134 auf.)

Seitlich zu dem Mittelblock 220 ist an dem Saugkopf 218 jeweils eine erste Aufnahme 222 und eine zweite Aufnahme 224 angeordnet. Die Anordnung ist dabei wie oben anhand des Sauggeräts 10 beschrieben spiegelsymmetrisch zu einer geometrischen Mittelebene des Gerätekörpers des Sauggeräts 216 entsprechend der Mittelebene 116.

Die erste Aufnahme 222 und die zweite Aufnahme 224 umfassen jeweils eine Kammer 226 mit einem Aufnahmeschacht 227, welche bis auf eine Einführöffnung 228 geschlossen ist.

An der Kammer 226 sitzt an der Einführöffnung 228 ein schwenkbar angeordneter Verschluss 230. Der Verschluss 230 ist insbesondere als Klappe ausgebildet. Er ist an der Kammer 226 um eine Schwenkachse 231 derart schwenkbar gelagert, dass er in einen Innenraum 234 (vergleiche Figur 7) der Kammer 226 verschwenkbar ist. Insbesondere ist er an einer Oberseite 236 der Kammer 226 gelagert.

Er weist eine erste Stellung 232 auf, in welcher er die Kammer 226 an der Einführöffnung 228 verschließt (vergleiche Figuren 5 und 6).

In der ersten Stellung 232 des Verschlusses 230 ist die Kammer 226 vollständig verschlossen und dadurch ist der Innenraum insbesondere staubgeschützt. Eine elektrische Kontakteinrichtung 130, welcher an der Kammer 226 angeordnet ist, ist dadurch ebenfalls staubgeschützt.

Es ist insbesondere vorgesehen, dass dem Verschluss 230 eine Federeinrichtung zugeordnet ist, welche dafür sorgt, dass der Verschluss 230 in der ersten Stellung 232 gehalten wird, und automatisch (wenn eine entsprechende Batterieeinheit 122 bzw. 124 entnommen wird) in die erste Stellung 232 zurücckehrt. Dem Verschluss 230 ist ein Anschlag zur Definierung der ersten Stellung 232 zugeordnet.

Der Verschluss 230 (die entsprechende Klappe) weist eine zweite Stellung auf, welche eine Schwenkstellung ist und in welcher sich der Verschluss 230 befindet, wenn die entsprechende Batterieeinheit 122 bzw. 124 elektrisch wirksam in die Kammer 226 eingesetzt ist.

Die diesbezügliche Ausbildung der Kammer 226 mit dem Verschluss 230 und deren Funktionsweise sind grundsätzlich gleich wie oben anhand des Sauggeräts 10 beschrieben.

Die Kammern 226 der Aufnahmen 222, 224 weisen jeweils eine Längsachse 238 auf (Figur 6).

Die Kammer 226 erstreckt sich längs dieser Längsachse 238. Eine Längswandung 240 der entsprechenden Kammer 226 ist im Wesentlichen parallel zu dieser Längsachse 238 ausgerichtet.

Die Kammer 226 ist in einem spitzen Winkel 242 zu der Höhenachse 56 orientiert (vergleiche Figur 6). Der spitze Winkel 242 liegt beispielsweise im Bereich zwischen 30° und 60° und insbesondere im Bereich zwischen 40° und 50°. Vorzugsweise liegt er bei ca. 45°.

Entsprechend liegt die Längsachse 238 in einem spitzen Winkel 244 zu einer Ebene 246, welche parallel zu der Standebene 56 ist.

Insbesondere setzt sich der spitze Winkel 242 und der spitze Winkel 244 zu einem 90°-Winkel zusammen.

Der spitze Winkel 242 liegt entsprechend vorzugsweise im Bereich zwischen 30° und 60° und insbesondere im Bereich zwischen 40° und 50°.

Bei einer konkreten Ausführungsform liegt er bei ca. 45°.

Die entsprechende Batterieeinheit 122 bzw. 124 lässt sich an der entsprechenden Aufnahme 222 bzw. 224 mit einer Einführrichtung 248 an der Einführöffnung 228 in die entsprechende Kammer 226 der Aufnahme 222 bzw. 224 einschieben. Die Einführrichtung 248 ist parallel zur Längsachse 238 der jeweiligen Kammer 226.

Entsprechend liegt die Einführrichtung 248 in dem spitzen Winkel 242 zu der Höhenachse 58, und liegt in dem spitzen Winkel 244 zu der Ebene 246.

Eine Gegenrichtung 250 zum Herausnehmen der entsprechenden Batterieeinheit 122, 124 aus der Aufnahme 222, 224 ist antiparallel zu der Einführrichtung 248.

Das Sauggerät 216 hat über die Fahreinrichtung 24 eine Verschiebungsrichtung 252 (vergleiche Figur 5) auf einem Untergrund 29. Die Verschiebungsrichtung 252 kann dabei aufgrund der Lenkrollen 44, 46 in einem variablen Winkel zu der Radachse 36 liegen.

Die erste Aufnahme 222 und die zweite Aufnahme 224 sind aufgrund der schrägen Anordnung zu der Höhenachse 58 auch in einem spitzen Winkel, welcher im Wesentlichen dem spitzen Winkel 244 entspricht zu der Verschiebungsrichtung 252 orientiert.

Die Einführrichtung 248 liegt in einem spitzen Winkel (entsprechend dem spitzen Winkel 244) zu der Verschiebungsrichtung 252.

Die Einführrichtung 248 liegt in einem spitzen Winkel entsprechend dem spitzen Winkel 244 zu der Radachse 36.

Durch die schräge Anordnung der Kammern 226 der Aufnahmen 222, 224 wird beim Einsetzen einer Batterieeinheit ein Verschieben und insbesondere Verfahren des Sauggeräts 216 verhindert bzw. verringert. Es wird dadurch gewissermaßen verhindert, dass beim Einsetzen einer Batterieeinheit an der entsprechenden Aufnahme 222, 224 das Sauggerät "wegfährt".

In der ersten Stellung 232 ist der Verschluss 230 geschlossen (siehe dazu Figur 5 an der ersten Aufnahme 222 oder Figur 6).

Wenn eine Batterieeinheit wie beispielsweise die erste Batterieeinheit 122 eingesetzt wird, dann wird dadurch der Deckel 230 in den Innenraum 234 geklappt (Figur 7). Die entsprechende Batterieeinheit 122 lässt sich in den Innenraum 234 bringen, bis elektrischer Kontakt mit der elektrischen Kontakteinrichtung 130 vorliegt und eine entsprechende Fixierungsstellung erreicht ist.

Es wird dabei weitgehend eine Verschiebung des Sauggeräts 216 als Ganzes auf dem Untergrund 29 verhindert.

Wenn die entsprechende Batterieeinheit eingesetzt ist, dann ragt sie über die Kammer 226 hinaus, sodass insbesondere eine Ladezustandsanzeige 160 für einen Bediener von der ersten Querseite 48 her erkennbar ist.

An dem Saugkopf 218 ist vor der jeweiligen Aufnahme 222, 224 eine Aussparung oder ein Freiraum 255 (vergleiche beispielsweise Figur 5) gebildet. Diese Aussparung oder Freiraum 255 hat grundsätzlich die gleiche Funktion wie die Aussparung oder Freiraum 660a, 660b wie oben beschrieben.

Die Aussparung oder der Freiraum 255 ist aufgrund der I-förmigen Ausbildung des Mittelblocks 220 nach oben nicht begrenzt.

Wenn die entsprechende Batterieeinheit 122, 124 in der jeweiligen Kammer 226 sitzt, dann ragt diese mit einem Teilbereich in die Aussparung oder den Freiraum 255, und zwar derart, dass eine Griffeinrichtung 672 für einen Bediener zugänglich ist.

Es ist insbesondere vorgesehen, dass die entsprechende Batterieeinheit 122 bzw. 124, wenn sie an der Kammer 226 eingesetzt ist, nicht über eine Einhüllende des Saugkopfs 118 hinausragt und dabei nicht über die erste Querseite hinausragt und auch nicht über eine entsprechende Längsseite hinausragt.

Auch das Einsetzen bzw. Entnehmen der entsprechenden Batterieeinheit 122, 124 erfolgt von der ersten Querseite 48 her.

In Figur 5 ist eine eingesetzte zweite Batterieeinheit 124 gezeigt.

Wenn eine entsprechende Batterieeinheit 122 bzw. 124 aus der Kammer 226 entnommen wird, dann klappt der entsprechende Verschluss 230 aufgrund seiner Federbeaufschlagung in die erste Stellung 232 zurück und die Kammer 226 ist auch an der Einführöffnung 228 verschlossen.

Bei dem Sauggerät 216 liegen die Einführöffnungen 228 der Aufnahmen 222, 224 auf gleicher Höhe wie die Bedienungstafel 112 (vergleiche Figur 5). Bezogen auf die Höhenachse 58 liegt der Sauganschluss 106 niedriger als die Einführöffnungen 228.

Aufgrund der schrägen Anordnung der Kammern 226 ist es dabei möglich, dass ein hinterer Bereich 254 (vergleiche Figur 6) der Kammern 226 bezogen auf die Höhenachse 58 auf gleicher Höhe wie der Sauganschluss 106 liegt.

Ansonsten ist die geometrische Ausbildung des Saugkopfs 216 gleich wie oben anhand des Saugkopfs 16 beschrieben.

Insbesondere liegen die Aufnahmen 222, 224 symmetrisch zu einer geometrischen Mittelebene des Saugkopfs 218. An dieser Mittelebene liegen entsprechend die Bedienungstafel 112 und der Sauganschluss 106.

Weiterhin ist die geometrische Anordnung in Relation zu weiteren Komponenten des Sauggeräts 10, wie der Gebläseeinrichtung 72 und der Filtereinrichtung 88 wie oben beschrieben.

Die Klappe des Verschlusses 230 ist in der ersten Stellung 232 quer und insbesondere senkrecht zu der Einführrichtung 248 orientiert; der Verschluss 230 ist insbesondere einstückig ausgebildet und umfasst eine Platte, welche bei einer Ausführungsform mindestens näherungsweise eben ausgebildet ist. Eine Normale zu der entsprechenden Plattenebene liegt parallel zur Einführrichtung 248, wenn der Verschluss 230 in der ersten Stellung 232 ist.

An der Außenseite des Verschlusses 230 ist ein Sammelelement und/oder Abführungselement 500 angeordnet. Das Sammelelement und/oder Abführungselement 500 ist als Rinne 502 ausgebildet.

Bei einem Ausführungsbeispiel ist das Sammelelement und/oder Abführungselement 500 (als Rinne 502) einstückig an dem Verschluss 230 gebildet.

Das Sammelelement und/oder Abführungselement 500 dient dazu, Fluid (insbesondere Schmutzfluid bzw. Flüssigkeit) von dem direkten Kontakt mit der elektrischen Kontakteinrichtung 130 abzuhalten. Das Sammelelement und/oder Abführungselement 500 weist dazu einen Aufnahmeraum 504 (vergleiche Figur 6) als Rinnenraum für Fluid auf.

Das Sammelelement und/oder Abführungselement 500 ist an einem unteren Bereich 506 des Verschlusses 230 angeordnet. Insbesondere ist es an einem Bereich angeordnet, welcher gegenüberliegend zu dem Bereich ist, mit dem der Verschluss 230 über ein Schwenklager an der Kammer 226 gelagert ist. Beim Übergang in die zweite Stellung des Verschlusses 230 taucht der Verschluss 230 in den Innenraum 234 der Kammer 226 ein (vergleiche Figur 7, wobei eine Zwischenstellung zwischen der ersten Stellung 232 und der zweiten Stellung gezeigt ist).

Grundsätzlich kann dann Fluid, welches sich in der ersten Stellung 232 des Verschlusses 230 auf diesem gesammelt hat, in den Innenraum 234 der Kammer 226 gelangen. Insbesondere besteht die grundsätzliche Möglichkeit, dass Fluid von dem Verschluss 230 abströmt und auf die elektrische Kontakteinrichtung 130 tropft.

Das Sammelelement und/oder Abführungselement 500 ist mit seinem Aufnahmeraum 504 so angeordnet und ausgebildet, dass eine oder mehrere Öffnungen 508 der Rinne 502 insbesondere in der zweiten Stellung so angeordnet und ausgebildet sind, dass bei der Abströmung von Fluid kein direkter Strömungspfad auf die elektrische Kontakteinrichtung 130 vorliegt, sondern eventuell abströmendes Fluid zumindest nicht direkt auf die elektrische Kontakteinrichtung 130 gelangt.

Dementsprechend ist die Öffnung 508 oder sind die Öffnungen 508 so angeordnet, dass ein entsprechender direkter Strömungspfad beim Abströmen von Fluid in dem Innenraum 234 beabstandet zu der elektrischen Kontakteinrichtung 130 ist.

Eine solche Öffnung 508 ist insbesondere eine Öffnung, über welche die Rinne 502 weg von dem unteren Bereich 506 und insbesondere in einer Richtung zu dem entsprechenden Schwenklager der Schwenkbarkeit des Verschlusses offen ist.

Es kann zusätzlich oder alternativ vorgesehen sein, dass das Sammelelement und/oder Abführungselement 500 eine oder mehrere seitliche Öffnungen 510 aufweist, über die ebenfalls Fluid abströmen kann.

Das Sammelelement und/oder Abführungselement 500 bildet eine Art von "Dachrinne", welche verhindert, dass Fluid (Staub, Wassertropfen) beim Einklappen des Verschlusses 230 in die zweite Stellung direkt auf die elektrische Kontakteinrichtung 130 fällt.

Ein Sammelelement und/oder Abführungselement 500 kann auch an dem Verschluss 398 (der Klappe 400) angeordnet sein (in den Figuren 1 bis 4 nicht gezeigt).

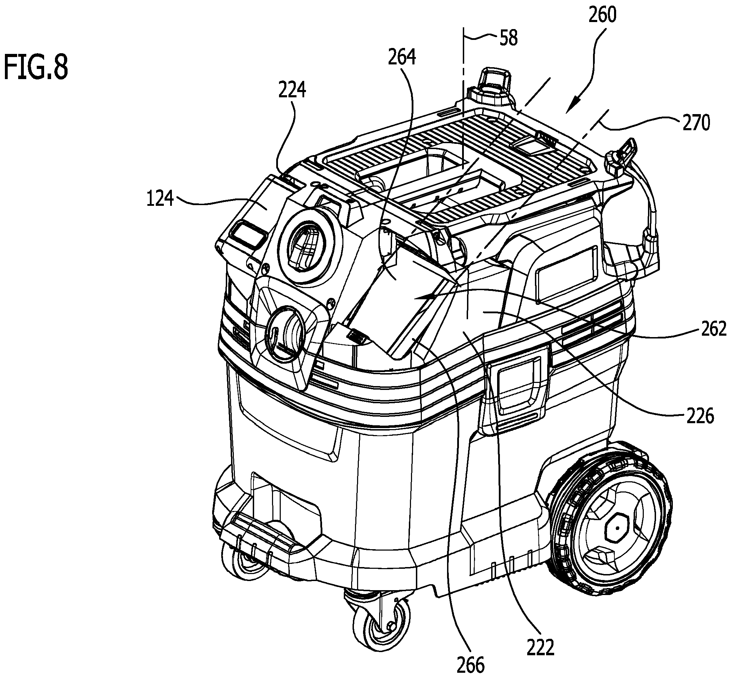

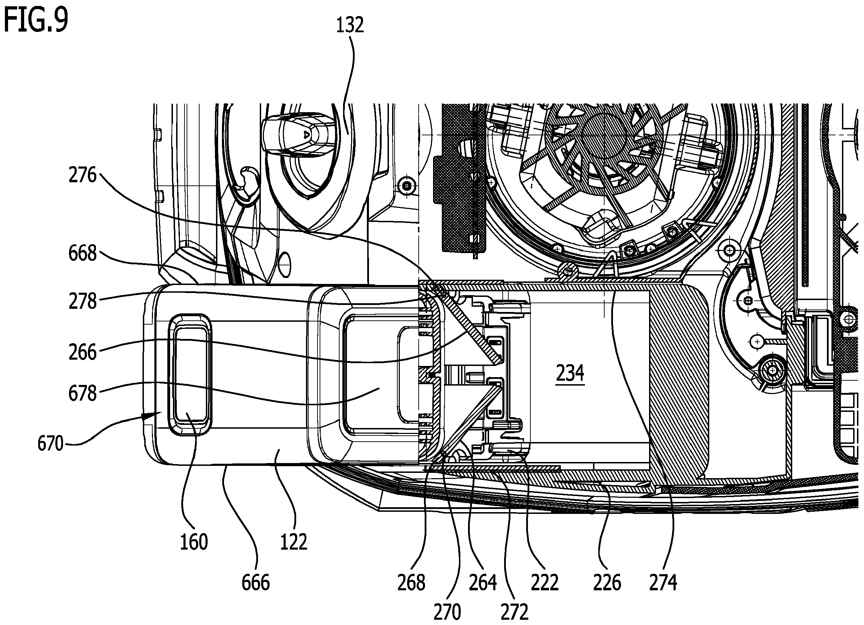

Ein drittes Ausführungsbeispiel eines erfindungsgemäßen Sauggeräts, welches in den Figuren 8 und 9 (in Figur 9 in einer Teildarstellung) gezeigt ist, ist im Wesentlichen gleich aufgebaut wie das Sauggerät 216. Für gleiche Elemente werden gleiche Bezugszeichen verwendet.

Das Sauggerät 260 unterscheidet sich von dem Sauggerät 216 in der Anordnung und Ausbildung eines jeweiligen Verschlusses 262, welcher an der entsprechenden Kammer 226 der Aufnahme 222 bzw. 224 angeordnet ist.

Der Verschluss 262 umfasst eine erste Klappe 264 und eine zweite Klappe 266. Der Verschluss 262 ist dadurch mehrteilig ausgebildet, nämlich mit der ersten Klappe 264 als erstem Teil und der zweiten Klappe 266 als zweitem Teil.

Die erste Klappe 264 ist über ein erste Schwenklager 268 um eine erste Schwenkachse 270 schwenkbar an der Kammer 226 angelenkt. Das erste Schwenklager 268 sitzt an einer ersten Längswandung 272 der Kammer 226.

Die Kammer 226 weist eine der ersten Längswandung 272 gegenüberliegende zweite Längswandung 274 auf.

Zwischen der ersten Längswandung 272 und der zweiten Längswandung 274 ist der Innenraum 234 und dementsprechend auch der Aufnahmeschacht der entsprechenden Aufnahme 226 bzw. 228 gebildet.

An der zweiten Längswandung 274 ist die zweite Klappe 266 an einem zweiten Schwenklager 276 um eine zweite Schwenkachse 278 schwenkbar angeordnet.

Die erste Schwenkachse 270 und die zweite Schwenkachse 278 liegen parallel zueinander.

Bei dem Ausführungsbeispiel des Sauggeräts 260 sind die erste Schwenkachse 270 und die zweite Schwenkachse 278 in einem spitzen Winkel (insbesondere kleiner als 60°) zu der Höhenachse 58 orientiert.

Dieser spitze Winkel entspricht dem spitzen Winkel, mit welchem in einer ersten Stellung der ersten Klappe 264 und der zweiten Klappe 266 diese zu der Höhenachse 58 orientiert sind.

Die erste Stellung des Verschlusses 262 (der ersten Klappe 264 und der zweiten Klappe 266) ist diejenige Stellung, in welcher die Kammer 226 (der Aufnahmeschacht) geschlossen ist und dadurch eine elektrische Kontakteinrichtung insbesondere staubgeschützt ist.

Dem ersten Schwenklager 268 und dem zweiten Schwenklager 276 ist jeweils eine Rückstelleinrichtung zugeordnet, welche automatisch dafür sorgt, dass die erste Klappe 264 und die zweite Klappe 266 in der ersten Stellung sind, wenn auf sie keine Kraft über die entsprechende Batterieeinheit 122, 124 ausgeübt wird.

Die erste Klappe 264 und die zweite Klappe 266 weisen ausgehend von der ersten Stellung (vergleiche Figur 8 bei der ersten Aufnahme 226) einen Schwenkbereich auf, welcher innerhalb der Kammer 226 liegt (vergleiche Figur 9, wobei in Figur 9 eine Zwischenstellung beim Einschub der Batterieeinheit 122 gezeigt ist).

Die erste Klappe 264 und die zweite Klappe 266 sind an gegenüberliegenden Seiten der Kammer 226 angelenkt. Die erste Klappe 264 verschwenkt ausgehend von der ersten Stellung zu der ersten Längswandung 272 hin, und die zweite Klappe 266 verschwenkt ausgehend von der ersten Stellung zu der zweiten Längswandung 274 hin (vergleiche Figur 9).

Die Batterieeinheit 122 bzw. 124 ist ausgehend von der ersten Stellung der ersten Klappe 264 und der zweiten Klappe 266 und einer Verschwenkung von diesen zwischen der ersten Klappe 264 und der zweiten Klappe 266 in den Innenraum der Kammer 226 bringbar (vergleiche Figur 9).

Ansonsten funktioniert der Verschluss 262 wie oben anhand des Verschlusses 230 beschrieben.

Die erste Schwenkachse 270 und die zweite Schwenkachse 278 sind quer und insbesondere senkrecht zu der Radachse 36 orientiert.

Sie sind quer und insbesondere senkrecht zu einer Einführrichtung der entsprechenden Batterieeinheit 122 bzw. 124 in die jeweilige Kammer 226 orientiert.

Es ist dabei möglich, dass ein mehrteiliger Verschluss 262, welcher insbesondere eine erste schwenkbare Klappe und eine zweite schwenkbare Klappe mit einem Durchgang zwischen den Klappen hat, bei Einführung der Batterieeinheit 122 bzw. 124 auch bei dem Sauggerät gemäß Figur 1 realisiert ist. In diesem Falle sind dann die Schwenkachsen der Klappen mindestens näherungsweise parallel zu der Höhenachse 58.

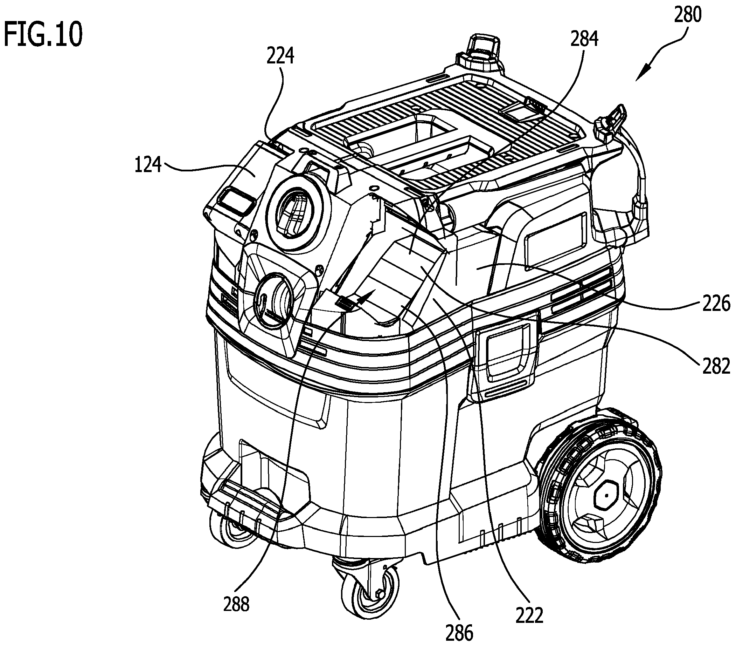

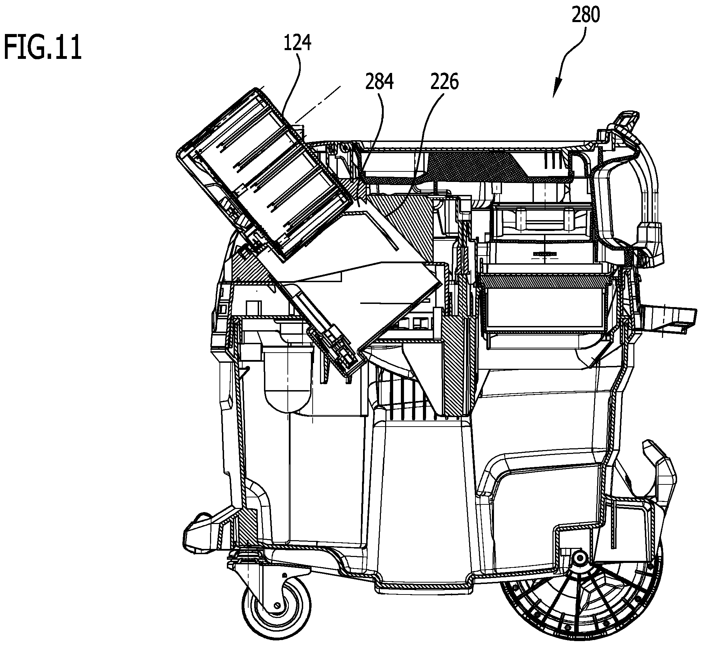

Ein viertes Ausführungsbeispiel eines erfindungsgemäßen Sauggeräts, welches in den Figuren 10 und 11 gezeigt und mit 280 bezeichnet ist, ist grundsätzlich gleich ausgebildet wie das Sauggerät 216. Für gleiche Elemente werden gleiche Bezugszeichen verwendet.

Das Sauggerät 280 unterscheidet sich von dem Sauggerät 216 durch die Ausbildung und Anordnung eines entsprechenden Verschlusses 282 an der jeweiligen ersten Aufnahme 222 und 224.

Der Verschluss 282 ist mehrteilig als Jalousie 284 mit einer Mehrzahl von Lamellen 286 ausgebildet.

Der Verschluss 282 weist eine erste Stellung 288 (Figur 10) für die erste Aufnahme 226 auf, in welcher er die entsprechende Kammer 226 verschließt. Es ist dann keine Batterieeinheit eingesetzt.

Wenn eine Batterieeinheit (gemäß Figur 11 die Batterieeinheit 124) eingesetzt wird, dann fährt über einen entsprechenden Kopplungsmechanismus die Jalousie 284 in den Innenraum der Kammer 226; in Figur 11 ist dazu eine Zwischenstellung gezeigt.

Das Einschieben der Batterieeinheit treibt dabei die Bewegung der Jalousie 284 ausgehend von der ersten Stellung 288 an, bis eine zweite Stellung erreicht ist (in den Zeichnungen nicht gezeigt). In dieser zweiten Stellung befindet sich die Jalousie 284, wenn die entsprechende Batterieeinheit elektrisch wirksam an der entsprechenden Aufnahme 222 bzw. 224 positioniert ist.

Insbesondere ist dann die Batterieeinheit mit einem ersten Teilbereich in der Kammer 226 eingetaucht und mit dem zweiten Teilbereich liegt sie außerhalb.

Die Jalousie 284 ist insbesondere vollständig dann in dem Innenraum der Kammer 226 angeordnet.

Es ist eine Rückstelleinrichtung vorgesehen, welche die Jalousie 284 ausgehend von dieser zweiten Stellung in die erste Stellung 288 bringt, wenn die Batterieeinheit aus der entsprechenden Kammer 226 entfernt wird.

Es ist beispielsweise auch möglich (in den Zeichnungen nicht gezeigt), dass der Verschluss als Schieber ausgebildet ist, welcher beispielsweise längs der Führungsbahn 138 linear beweglich ist. Eine Rückstelleinrichtung bringt diesen Schieber in eine erste Stellung, bei welcher der entsprechende Einführschacht geschlossen ist und insbesondere eine elektrische Kontakteinrichtung 130 staubdicht geschützt ist.

Wenn eine Batterieeinheit in den jeweiligen Einführschacht eingeführt wird, dann wirkt diese auf den Schieber und führt diesen gewissermaßen vor sich her in seine Endposition (eine zweite Stellung).

Es ist ferner eine Rückstelleinrichtung und insbesondere Federeinrichtung vorhanden, welche bestrebt ist, automatisch den Schieber als Verschluss von der zweiten Stellung wieder in die erste Stellung zu bringen.

Wenn die Batterieeinheit entfernt wird, dann kehrt der Schieber als Verschluss der entsprechenden Kammer automatisch von dieser zweiten Stellung in die erste Stellung zurück.

Ein fünftes Ausführungsbeispiel eines erfindungsgemäßen Sauggeräts 290 (Figur 12) umfasst einen Sauggutbehälter 292 und einen Saugkopf 294. An dem Saugkopf 294 sind eine erste Aufnahme 296 und eine zweite Aufnahme 298 für eine jeweilige Batterieeinheit angeordnet. In Figur 12 sitzt in der ersten Aufnahme 296 die erste Batterieeinheit 122, und in der zweiten Aufnahme 296 sitzt die zweiten Batterieeinheit 124.

Die erste Aufnahme 296 und die zweite Aufnahme 298 sind so ausgerichtet, dass eine Einführrichtung 300 mindestens näherungsweise parallel zu einer Höhenachse 58 des Sauggeräts 290 ist.

Die erste Aufnahme 296 und die zweite Aufnahme 298 sind jeweils mit einem Verschluss versehen (in Figur 12 aufgrund der eingesetzten Batterieeinheiten nicht sichtbar).

Der entsprechende Verschluss kann eine einteilige Klappe sein, wie bei dem Sauggerät 10, oder eine Doppelklappe, wie bei dem Sauggerät 260, oder eine Jalousie wie bei dem Sauggerät 280, oder ein Schieber.

Grundsätzlich ist es bei dem Sauggerät 290 wie bei den anderen Sauggeräten vorgesehen, dass der entsprechende Verschluss eine erste Stellung aufweist, in welcher eine entsprechende Kammer 302 der ersten Aufnahme 296 bzw. der zweiten Aufnahme 298 geschlossen ist und insbesondere ein staubdichter Verschluss (insbesondere zum Schutz einer elektrischen Kontakteinrichtung) erreicht ist.

Durch Einsetzen der jeweiligen Batterieeinheit wird der Verschluss in einen Innenraum der Kammer 302 gebracht.

Es ist eine Rückstelleinrichtung vorgesehen, welche automatisch dann den Verschluss von einer zweiten Stellung, in welcher der Verschluss ist, wenn die Batterieeinheit eingesetzt ist, in die erste Stellung bringt, welche gewissermaßen eine Verschlussstellung für die jeweiligen Aufnahmen 296, 298 ist.

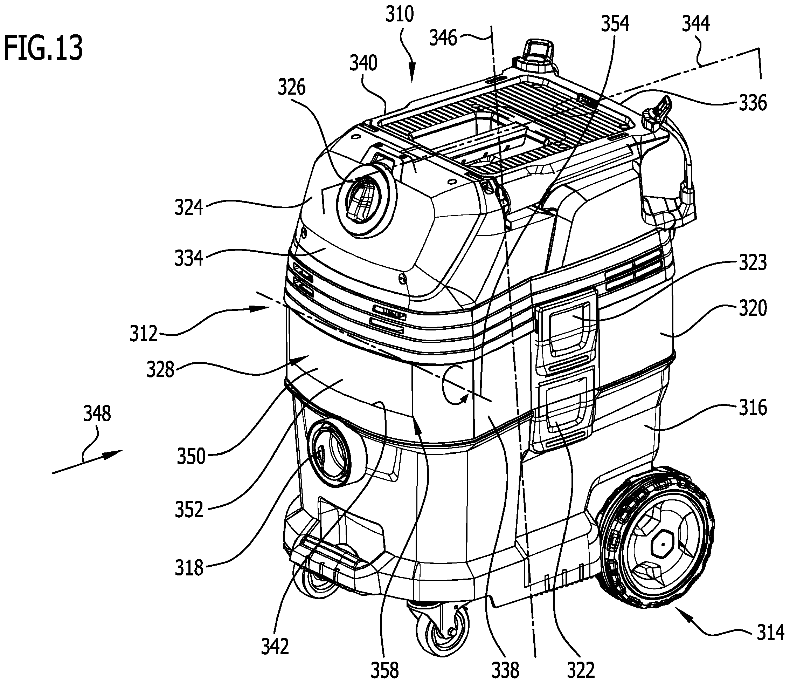

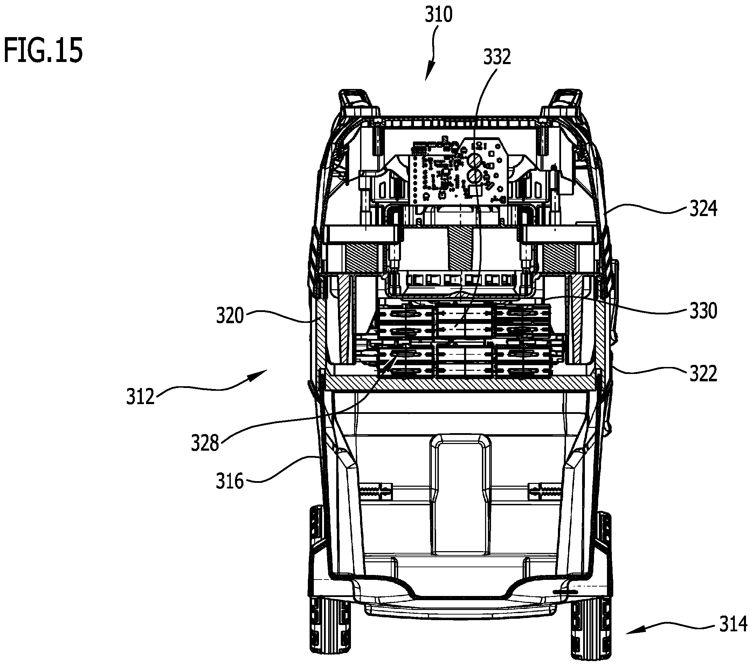

Ein sechstes Ausführungsbeispiel eines erfindungsgemäßen Sauggeräts, welches in den Figuren 13 bis 15 gezeigt und mit 310 bezeichnet ist, umfasst einen Gerätekörper 312. Der Gerätekörper 312 kann über eine Fahreinrichtung 314 an einem Untergrund fahrbar abgestützt sein.

Der Gerätekörper 312 weist einen Sauggutbehälter 316 auf. An dem Sauggutbehälter 316 ist ein Sauganschluss 318 angeordnet. An dem Sauganschluss 318 ist über eine entsprechende Hülse ein Saugschlauch oder ein Saugrohr fixierbar.

An dem Sauggutbehälter 316 sitzt ein Zwischenring 320. Der Zwischenring 320 ist insbesondere lösbar angeordnet. Der Zwischenring 320 ist beispielsweise durch eine Rastklappeneinrichtung 322 lösbar mit dem Sauggutbehälter 316 fixiert.

An dem Zwischenring 320 sitzt wiederum lösbar ein Saugkopf 324. Der Zwischenring 320 ist insbesondere über eine Rastklappeneinrichtung 323 lösbar mit dem Saugkopf 324 verbunden.

An dem Saugkopf 324 sitzt eine Bedienungstafel 326. An dem Saugkopf 324 ist eine Gebläseeinrichtung angeordnet. Fakultativ sitzt an dem Saugkopf 324 eine Filterabreinigungseinrichtung.

Der Zwischenring 320 zwischen dem Saugkopf 324 und dem Sauggutbehälter 316 weist eine Aufnahmeeinrichtung 328 für eine Batterieeinheit auf. Insbesondere weist die Aufnahmeeinrichtung 328 eine Mehrzahl von Aufnahmen 330 auf, wobei jede Aufnahme 330 eine Batterieeinheit 332 wieder entfernbar aufnehmen kann.

Bei dem gezeigten Ausführungsbeispiel weist die Aufnahmeeinrichtung 328 drei Aufnahmen auf. Entsprechend können drei Batterieeinheiten 332 aufgenommen werden. Es können auch mehr als drei Aufnahmen oder weniger als drei Aufnahmen vorgesehen sein.

Der Gerätekörper 312 hat eine erste Querseite 334. Gegenüberliegend zu der ersten Querseite 334 weist er eine zweite Querseite 336 auf. Zwischen der ersten Querseite 334 und der zweiten Querseite 336 liegen eine erste Längsseite 338 und eine zu der ersten Längsseite 338 gegenüberliegende zweite Längsseite 340.

Die Bedienungstafel 326 ist an der ersten Querseite 334 angeordnet. Ebenso ist der Sauganschluss 318 an der ersten Querseite 334 angeordnet.

Die Aufnahmeeinrichtung 328 weist eine Einführöffnung 342 auf, welche an der ersten Querseite 334 angeordnet ist.

Der Gerätekörper 312 hat eine geometrische Mittelebene 344, welche quer zu der ersten Querseite 334 und quer zu der zweiten Querseite 336 orientiert ist. Die geometrische Mittelebene 344 liegt mittig zwischen der ersten Längsseite 338 und der zweiten Längsseite 340.

Die Bedienungstafel 326 und der Sauganschluss 318 liegen an der geometrischen Mittelebene 344.

Die Aufnahmeeinrichtung 328 liegt ebenfalls an der geometrischen Mittelebene 344 und ist insbesondere spiegelsymmetrisch zu der Mittelebene 344 ausgebildet. Eine mittlere Aufnahme der Aufnahmeeinrichtung 328 liegt auf der Mittelebene 344.

Der Zwischenring 320 ist im Wesentlichen ein Halter für die Batterieeinrichtung. Er ist so angeordnet, dass er eine Filterabreinigung durch die gegebenenfalls vorhandene Filterabreinigungseinrichtung nicht behindert.

Der Gerätekörper 312 hat eine Höhenachse 346. Die Aufnahmeeinrichtung 328 liegt bezogen auf die Höhenachse 346 zwischen dem Sauganschluss 318 und der Bedienungstafel 326. Entsprechend sind an der Aufnahmeeinrichtung 328 eingesetzte Batterieeinheiten 332 zwischen dem Sauganschluss 318 und der Bedienungstafel 326 positioniert.

Ein Massenschwerpunkt des Gerätekörpers 312 liegt auf der Mittelebene 344.

Ein Massenschwerpunkt der Gesamtheit der Batterieeinheiten 332, wenn diese in die Aufnahmeeinrichtung 328 eingesetzt sind, liegt ebenfalls auf der Mittelebene 344.

Insbesondere liegt eine Gebläseeinrichtung und auch eine gegebenenfalls vorhandene Filterabreinigungseinrichtung an der Mittelebene 344.

Die Batterieeinheiten lassen sich in einer Einführrichtung 348 in die jeweiligen Aufnahmen 330 bringen. In einer Gegenrichtung dazu lassen sich die Batterieeinheiten 332 aus der Aufnahmeeinrichtung 328 entfernen.

Das Einführen bzw. Entfernen erfolgt dabei von der erste Querseite 334 her.

Die Bedienungstafel 326 lässt sich von der erste Querseite 334 her bedienen. Der Sauganschluss 318 ist von der erste Querseite 334 her zugänglich.

Eine Ladezustandsanzeige, welche an den jeweiligen Batterieeinheiten 332 oder an den Aufnahmen 330 angeordnet ist, ist über die erste Querseite 334 her ablesbar.

Der Aufnahmeeinrichtung 328 ist ein Verschluss 350 zugeordnet. Der Verschluss 350 sitzt an dem Zwischenring 320.

Es ist insbesondere vorgesehen, dass ein Verschluss 350 für eine Mehrzahl von Aufnahmen 330 vorgesehen ist.

Bei dem gezeigten Ausführungsbeispiel ist der Verschluss 350 durch eine Klappe 352 gebildet. Diese sitzt über ein Schwenklager 354 mit einer Schwenkachse 356 schwenkbar an dem Zwischenring 320.

Der Verschluss 350 weist eine erste Stellung 358 auf (Figur 13), in welcher er die Aufnahmen 330 nach außen schließt und insbesondere für einen staubdichten Verschluss sorgt.

Wenn irgendeine Batterieeinheit 332 in einen entsprechenden Aufnahmeschacht 360 der Aufnahmeeinrichtung 328 eingeschoben wird, dann wird dadurch eine Schwenkung des Verschlusses 350 (der Klappe 352) ausgehend von der ersten Stellung 358 in den Aufnahmeschacht 360 bewirkt.

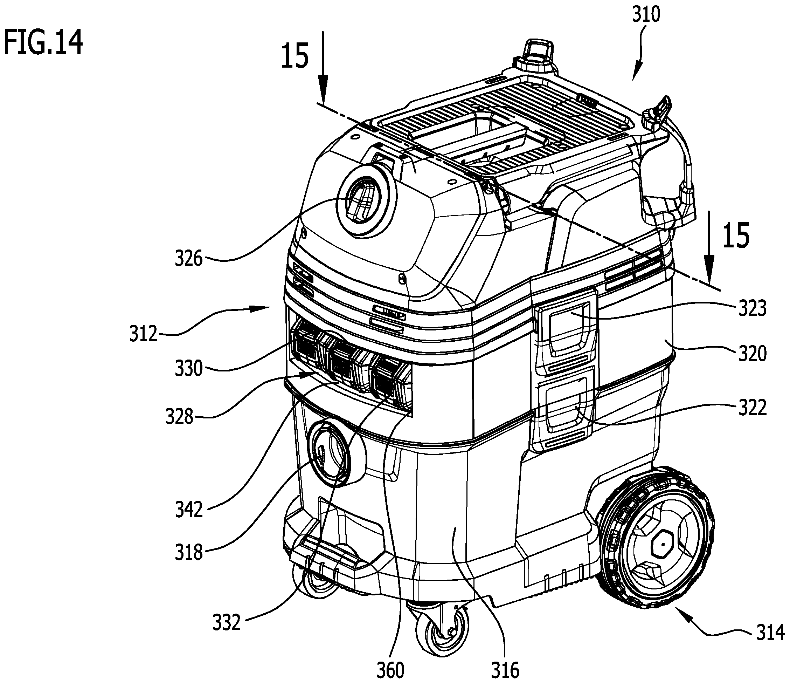

Wenn die entsprechende Batterieeinheit 332 ihre Endposition erreicht hat, dann hat der Verschluss 350 seine Endstellung erreicht, welche eine zweite Stellung und dabei Schwenkstellung ist (vergleiche Figur 14).

Durch das Einschieben der entsprechenden Batterieeinheit 332 in den jeweiligen Aufnahmeschacht 360 geht der Verschluss 350 automatisch von seiner ersten Stellung 358 in die zweite Stellung über.

Wenn irgendeine Batterieeinheit 332 sich in der Aufnahmeeinrichtung 328 befindet und dabei ordnungsgemäß positioniert ist, ist der gemeinsame Verschluss 350 in der zweiten Stellung.

Wenn alle Batterieeinheiten 332 aus der Aufnahmeeinrichtung 328 entfernt werden bzw. entfernt sind, befindet sich der Verschluss 350 in der ersten Stellung 358 bzw. geht durch die entsprechende Rückstelleinrichtung automatisch in die erste Stellung 358.

### Bezugszeichenliste

- 10: Sauggerät (Erste Ausführungsform)
- 12: Gerätekörper
- 14: Sauggutbehälter
- 16: Saugkopf
- 18: Boden
- 20: Wandung
- 22: Innenraum
- 24: Fahreinrichtung
- 26: Rahmen
- 28: Aufnahme
- 29: Untergrund
- 30: Radeinrichtung
- 32: Linkes Rad
- 34: Rechtes Rad
- 36: Radachse
- 38: Erste Längsseite
- 40: Zweite Längsseite
- 42: Rolleneinrichtung
- 44: Erste Lenkrolle
- 46: Zweite Lenkrolle
- 48: Erste Querseite
- 50: Zweite Querseite
- 52: Aufnahme
- 54: Rastklappeneinrichtung
- 56: Standebene
- 58: Höhenachse
- 60: Saugkopfkörper
- 62: Erste Saugkopf-Querseite
- 64: Zweite Saugkopf-Querseite
- 66: Erste Saugkopf-Längsseite
- 68: Zweite Saugkopf-Längsseite
- 70: Aufnahmeraum
- 72: Gebläseeinrichtung
- 74: Laufrad
- 76: Drehachse
- 78: Gebläsemotor
- 82: Filtereinrichtung
- 84: Filterhalter
- 86: Aufnahmeraum
- 88: Filterabreinigungseinrichtung
- 90: Fremdluftventileinrichtung
- 94: Reinseite
- 96: Steuerungseinrichtung
- 98: Strömungsrichtung
- 100: Schmutzseite
- 102: Oberseite
- 104: Deckel
- 106: Sauganschluss
- 110: Stutzen
- 112: Bedienungstafel
- 114: Drehknopf
- 116: Mittelebene
- 118: Massenschwerpunkt
- 120: Batterieeinrichtung
- 122: Erste Batterieeinheit
- 124: Zweite Batterieeinheit
- 126: Erste Aufnahme
- 128: Zweite Aufnahme
- 130: Elektrische Kontakteinrichtung
- 132: Mittelblock
- 134: Steg
- 136: Winkel
- 138: Führungsbahn
- 140: Ausnehmung
- 142: Boden
- 144: Wandung
- 146: Wandung
- 150: Einführrichtung
- 152: Ausführrichtung
- 154: Mittelachse
- 160: Ladezustandsanzeige
- 164: Unterseite
- 166: Oberseite
- 178: Tragegriff
- 180: Steg

- 380: Kammer
- 382: Wandung
- 384: Öffnung
- 386: Innenraum
- 388: Aufnahmeschacht
- 390: Erstes Ende
- 392: Zweites Ende
- 394: Erster Teilbereich
- 396: Zweiter Teilbereich
- 398: Verschluss
- 400: Klappe
- 402: Schwenklager
- 404: Schwenkachse
- 406: Schwenkbereich
- 408: Erste Stellung
- 410: Zweite Stellung
- 412: Rückstelleinrichtung
- 414: Angriffsfläche
- 416: Anlagefläche
- 660a, 660b: Aussparung oder Freiraum
- 664: Gehäuse
- 666: Erste Längsseite
- 668: Zweite Längsseite
- 670: Vorderseite
- 672: Griffeinrichtung
- 678: Oberseite

- 216: Sauggerät (Zweite Ausführungsform)
- 218: Saugkopf
- 220: Mittelblock
- 222: Erste Aufnahme
- 224: Zweite Aufnahme
- 226: Kammer
- 227: Aufnahmeschacht
- 228: Einführöffnung
- 230: Verschluss
- 231: Schwenkachse
- 232: Erste Stellung
- 234: Innenraum
- 236: Oberseite
- 238: Längsachse
- 240: Längswand
- 242: Spitzer Winkel
- 244: Spitzer Winkel
- 246: Ebene
- 248: Einführrichtung
- 250: Gegenrichtung
- 252: Verschiebungsrichtung
- 254: Hinterer Bereich
- 255: Aussparung oder Freiraum
- 500: Sammelelement
- 502: Rinne
- 504: Aufnahmeraum
- 506: unterer Bereich
- 508: Öffnung
- 510: Öffnung

- 260: Sauggerät (Dritte Ausführungsform)
- 262: Verschluss
- 264: erste Klappe
- 266: zweite Klappe
- 268: erstes Schwenklager
- 270: erste Schwenkachse
- 272: erste Längswandung
- 274: zweite Längswandung
- 276: zweites Schwenklager
- 278: zweite Schwenkachse

- 280: Sauggerät (Vierte Ausführungsform)
- 282: Verschluss
- 284: Jalousie
- 286: Lamellen
- 288: erste Stellung

- 290: Sauggerät (Fünfte Ausführungsform)
- 292: Sauggutbehälter
- 294: Saugkopf
- 296: Erste Aufnahme
- 298: Zweite Aufnahme
- 300: Einführrichtung
- 302: Kammer
- 310: Sauggerät (Sechste Ausführungsform)
- 312: Gerätekörper
- 314: Fahreinrichtung
- 316: Sauggutbehälter
- 318: Sauganschluss
- 320: Zwischenring
- 322: Rastklappeneinrichtung
- 323: Rastklappeneinrichtung
- 324: Saugkopf
- 326: Bedienungstafel
- 328: Aufnahmeeinrichtung
- 330: Aufnahme
- 332: Batterieeinheit
- 334: Erste Querseite
- 336: Zweite Querseite
- 338: Erste Längsseite
- 340: Zweite Längsseite
- 342: Einführöffnung
- 344: geometrische Mittelebene
- 346: Höhenachse
- 348: Einführrichtung
- 350: Verschluss
- 352: Klappe
- 354: Schwenklager
- 358: Erste Stellung
- 360: Aufnahmeschacht

## Patentansprüche

1. Sauggerät, umfassend einen Gerätekörper (12; 312), eine Gebläseeinrichtung (72) zur Erzeugung eines Saugstroms, eine Batterieeinrichtung (120) mit mindestens einer Batterieeinheit (122; 124) zur Bereitstellung elektrischer Energie, und mindestens eine Aufnahme (126, 128; 222, 224; 296, 298; 330) für eine Batterieeinheit (122; 124), welche an dem Gerätekörper (12; 312) angeordnet ist, wobei die mindestens eine Aufnahme (126, 128; 222, 224; 296, 298; 330) eine Kammer (380; 226) umfasst, dass an der Kammer (380; 226) ein beweglicher Verschluss (398; 230; 262; 282; 350) angeordnet ist, wobei der Verschluss (398; 230; 262; 282; 350) eine erste Stellung (408; 232; 358) aufweist, in welcher die Kammer (380; 226) durch den Verschluss (398; 230; 262; 282; 350) geschlossen ist, und eine zweite Stellung (410) aufweist, wenn die Batterieeinheit (122; 124) an der mindestens einen Aufnahme (126, 128; 222, 224; 296, 298; 330) elektrisch wirksam positioniert ist, **dadurch gekennzeichnet dass** der Verschluss (398; 230; 262; 282; 350) so angeordnet und ausgebildet ist, dass bei Entnahme der Batterieeinheit (122; 124) von der mindestens einen Aufnahme (126, 128; 222, 224; 296, 298; 330) der Verschluss (398; 230; 262; 282; 350) automatisch von der zweiten Stellung (410) in die erste Stellung (408; 232; 358) geht, und beim Einführen der Batterieeinheit (122; 124) in die mindestens eine Aufnahme (126, 128; 222, 224; 296, 298; 330) der Verschluss (398; 230; 262; 282; 350) automatisch von der ersten Stellung (408; 232; 358) in die zweite Stellung (410) geht.

2. Sauggerät nach Anspruch 1, **dadurch gekennzeichnet, dass** die Kammer (380) einen Innenraum (386) aufweist, und dass in der zweiten Stellung (410) der Verschluss (350) in dem Innenraum (386) positioniert ist.

3. Sauggerät nach Anspruch 1 oder 2, **dadurch gekennzeichnet, dass** eine Bewegung des Verschlusses (398; 230; 262; 282; 350) von der ersten Stellung (408; 232; 358) in die zweite Stellung (410) durch eine Bewegung der Batterieeinheit (122; 124) angetrieben ist.

4. Sauggerät nach einem der vorangehenden Ansprüche, **dadurch gekennzeichnet, dass** der Verschluss (398; 230; 262; 282; 350) mindestens eine Angriffsfläche (414) für die Batterieeinheit (122; 124) aufweist, wobei bei Anlage der Batterieeinheit (122; 124) an die mindestens eine Angriffsfläche (414) und Bewegung der Batterieeinheit (122; 124) in die Kammer (380; 226) der Verschluss (398; 230; 262; 282; 350) von der ersten Stellung (408; 232; 358) in die zweite Stellung (410) übergeht.

5. Sauggerät nach einem der vorangehenden Ansprüche, **gekennzeichnet durch** eine Rückstelleinrichtung (412), welche eine Bewegung des Verschlusses (398; 230; 262; 282; 350) von der zweiten Stellung (410) in die erste Stellung (408; 232; 358) antreibt, und insbesondere **dadurch gekennzeichnet, dass** die Rückstelleinrichtung (412) eine Federeinrichtung ist oder umfasst.

6. Sauggerät nach einem der vorangehenden Ansprüche, **dadurch gekennzeichnet, dass** der Verschluss (398; 230; 262; 282; 350) mindestens eine Anlagefläche (416) für die Batterieeinheit (122; 124) aufweist, wobei in der zweiten Stellung (410) der Verschluss (398; 230; 262; 282; 350) mit der mindestens einen Anlagefläche (416) an der Batterieeinheit (122; 124) anliegt und durch die Anlage eine Beweglichkeit des Verschlusses (398; 230; 262; 282; 350) zu der Batterieeinheit (122; 124) gesperrt ist.

7. Sauggerät nach einem der vorangehenden Ansprüche, **dadurch gekennzeichnet, dass** an der Kammer (380; 226) eine elektrische Kontakteinrichtung (130) für die Batterieeinheit (122; 124) angeordnet ist und bei elektrisch wirksamer Positionierung der Batterieeinheit (122; 124) an der Kammer (380; 226) eine elektrische Verbindung zwischen der Batterieeinheit (122; 124) und der elektrischen Kontakteinrichtung (130) hergestellt ist, insbesondere mit mindestens einem der Folgenden:
- die elektrische Kontakteinrichtung (130) weist in einen Innenraum (386) der Kammer (380; 226) und/oder ist in dem Innenraum (386) der Kammer (380; 226) angeordnet;
- die elektrische Kontakteinrichtung (130) ist in einem Bereich eines Endes (390) der Kammer (380) angeordnet, welches abgewandt ist zu einem Ende (392) der Kammer (380), an welchem der Verschluss (350) angeordnet ist.

8. Sauggerät nach einem der vorangehenden Ansprüche, **dadurch gekennzeichnet, dass** an dem Verschluss (230) mindestens ein Sammelelement und/oder Abführungselement (500) für Fluid sitzt, welches insbesondere mit dem Verschluss (230) beweglich ist, und insbesondere **gekennzeichnet durch** mindestens eines der Folgenden:
- das mindestens eine Sammelelement und/oder Abführungselement (500) ist als Rinne (502) ausgebildet;
- das mindestens eine Sammelelement und/oder Abführungselement (500) sitzt an einer Außenseite des Verschlusses (230);
- das mindestens eine Sammelelement und/oder Abführungselement (500) weist mindestens einen Aufnahmeraum (504) für Fluid auf;
- das mindestens eine Sammelelement und/oder Abführungselement (500) ist so an dem Verschluss (230) angeordnet, dass eine oder mehrere Öffnungen (508, 510) des mindestens einen Sammelelements und/oder Abführungselements (500), über die Fluid abströmen kann, in der zweiten Stellung (410) des Verschlusses (230) beabstandet zu einer elektrischen Kontakteinrichtung (130), welche an der Kammer (226) sitzt, positioniert sind, und insbesondere ein direkter Strömungspfad für Fluid, welches über eine Öffnung (508; 510) des mindestens einen Sammelelements und/oder Abführungselements (500) abströmt, beabstandet zu der elektrischen Kontakteinrichtung (130) ist;
- das mindestens eine Sammelelement und/oder Abführungselement (500) ist mindestens einseitig seitlich offen.

9. Sauggerät nach einem der vorangehenden Ansprüche, **dadurch gekennzeichnet, dass** bei an der mindestens einen Aufnahme (126, 128; 222, 224; 296, 298; 330) positionierter Batterieeinheit (122; 124) die Batterieeinheit (122; 124) mit einem ersten Teilbereich (394) innerhalb der Kammer (380) positioniert ist, und mit einem zweiten Teilbereich (396) außerhalb der Kammer (380) positioniert ist.

10. Sauggerät nach einem der vorangehenden Ansprüche, **dadurch gekennzeichnet, dass** der Verschluss (398; 230; 262; 282; 350) einteilig oder mehrteilig ausgebildet ist.

11. Sauggerät nach einem der vorangehenden Ansprüche, **dadurch gekennzeichnet, dass** der Verschluss (398; 230; 262; 282; 350) mindestens eine Klappe (400; 264, 266; 352) ist oder aufweist, welche um eine Schwenkachse (404; 270; 278) schwenkbar an der Kammer (380; 226) angeordnet ist, und insbesondere **gekennzeichnet durch** mindestens eines der Folgenden:
- die Schwenkachse (404; 270; 278) ist quer zu einer Einführrichtung (150; 248) der Batterieeinheit (122; 124) in die Kammer (380; 226) orientiert;
- die mindestens eine Klappe (400; 264, 266; 352) weist einen Schwenkbereich (406) auf, welcher in einem Innenraum (386) der Kammer (380; 226) liegt;
- die mindestens eine Klappe (400) ist an einer Seite der Kammer (380) angeordnet, welche gegenüberliegend zu einer Seite ist, an welcher eine elektrische Kontakteinrichtung (130) an der Kammer (380) sitzt;
- bezogen auf eine Höhenachse (58) des Gerätekörpers (12) ist die mindestens eine Klappe (400) in der zweiten Stellung (410) entweder oberhalb oder unterhalb der Batterieeinheit (122; 124) positioniert;
- eine Anlagefläche der Batterieeinheit (122; 124), an welcher die mindestens eine Klappe (400) in der zweiten Stellung (410) anliegt, liegt an einer Oberseite (678) oder einer Unterseite der Batterieeinheit (122; 124);
- es gibt genau eine Klappe (400);
- die Schwenkachse (404) der mindestens einen Klappe (400) ist quer und insbesondere senkrecht zu der Höhenachse (58) orientiert;
- die Schwenkachse (404) ist mindestens näherungsweise parallel zu einer Radachse (36) orientiert;
- die mindestens eine Klappe (264, 266) ist bezogen auf eine Höhenachse (58) des Gerätekörpers (12) in der zweiten Stellung neben der Batterieeinheit (122; 124) positioniert;
- eine Anlagefläche der Batterieeinheit (122; 124), an welcher die mindestens eine Klappe (264; 266) in der zweiten Stellung anliegt, liegt an einer Längsseite (666; 668) der Batterieeinheit (122; 124), und insbesondere **gekennzeichnet durch** mindestens eines der Folgenden:
- die Schwenkachse (270; 278) ist mindestens näherungsweise parallel oder in einem spitzen Winkel kleiner 60° zu der Höhenachse (58) orientiert;
- die Schwenkachse (270; 278) ist quer zu der Radachse (36) orientiert;
- eine erste Klappe (264) und eine zweite Klappe (266), zwischen welchen die Batterieeinheit (122; 124) durchführbar ist und in die Kammer (226) bringbar ist.

12. Sauggerät nach einem der Ansprüche 1 bis 10, **dadurch gekennzeichnet, dass** der Verschluss (282) als Jalousie (284) ausgebildet ist oder dass der Verschluss als Schieber ausgebildet ist.

13. Sauggerät nach einem der vorangehenden Ansprüche, **dadurch gekennzeichnet, dass** die Kammer (380) als Aufnahmeschacht (388) für die Batterieeinheit (122; 124) ausgebildet ist.

14. Sauggerät nach einem der vorangehenden Ansprüche, **dadurch gekennzeichnet, dass** der Gerätekörper (12) eine Aussparung oder einen Freiraum (660a; 660b) aufweist, welcher der mindestens einen Aufnahme (126, 128; 222, 224; 296, 298; 330) zugeordnet ist, wobei die mindestens eine Aufnahme (126, 128; 222, 224; 296, 298; 330) sich an den zugeordneten Freiraum oder der zugeordneten Aussparung (660a; 660b) in einer Einführrichtung (150; 248) für die Batterieeinheit (122; 124) in die zugeordnete Aufnahme (126, 128; 222, 224; 296, 298; 330) anschließt, und insbesondere
**gekennzeichnet durch** mindestens eines der Folgenden:
- der Freiraum oder die Aussparung (660a; 660b) liegt vor der zugeordneten mindestens einen Aufnahme (126, 128; 222, 224; 296, 298; 330);
- der Freiraum oder die Aussparung (660a; 660b) ist durch einen Boden und insbesondere durch einen ebenen Boden (142) an dem Gerätekörper (12) nach unten begrenzt;
- der Freiraum oder die Aussparung (660a; 660b) ist zu einer ersten Seite hin durch einen Mittelblock (132) begrenzt;
- der Freiraum oder die Aussparung (660a; 660b) ist zu einer zweiten Seite hin, welche eine Längsseite (38; 40) des Gerätekörpers (12) ist, offen, wobei die Längsseite (38; 40) quer zu einer Querseite (48) orientiert ist;
- eine Batterieeinheit (122; 124) ist mit einer Griffeinrichtung (672) versehen, wobei bei an der mindestens einen Aufnahme (126, 128; 222, 224; 296, 298; 330) positionierter Batterieeinheit (122; 124) die Griffeinrichtung (672) in dem Freiraum oder der Aussparung (660a; 660b) positioniert ist und insbesondere über den Freiraum oder die Aussparung (660a; 660b) für einen Bediener zugänglich ist;
- die Griffeinrichtung (672) ist an einer Längsseite (666; 668) oder einer Oberseite (678) der Batterieeinheit (122; 124) angeordnet, wobei die Längsseite (666; 668) bei an der mindestens einen Aufnahme (126, 128; 222, 224; 296, 298; 330) positionierter Batterieeinheit (122; 124) quer zu der Querseite (48) des Gerätekörpers (12) orientiert ist und insbesondere nach außen weist;
- an einer ersten Längsseite (666) und an einer gegenüberliegenden zweiten Längsseite (668) der Batterieeinheit (122; 124) ist jeweils eine Griffeinrichtung (672) angeordnet und insbesondere ist die Batterieeinheit (122; 124) bezüglich ihrer äußeren Form spiegelsymmetrisch ausgebildet.

15. Sauggerät nach einem der vorangehenden Ansprüche, **dadurch gekennzeichnet, dass** das Sauggerät eine Standebene (56) aufweist, und dass der Gerätekörper (12) eine Höhenachse (58) aufweist, welche senkrecht zu der Standebene (56) orientiert ist, und wobei der mindestens einen Aufnahme (126, 128; 222, 224; 296, 298; 330) eine Einführrichtung (150; 248) für eine entsprechende Batterieeinheit (122; 124) zugeordnet ist, mit mindestens einem der Folgenden:
- die mindestens eine Aufnahme (126, 128; 222, 224; 296, 298; 330) ist so angeordnet, dass die Einführrichtung (150; 248) quer zu der Höhenachse (58) oder parallel zu der Höhenachse (58) orientiert ist;
- die mindestens eine Aufnahme (126, 128; 222, 224; 296, 298; 330) ist so angeordnet, dass die Einführrichtung (150; 248) parallel oder in einem spitzen Winkel oder senkrecht zu der Standebene (56) liegt;
- in der ersten Stellung (408; 232) ist der Verschluss (398; 230) quer und insbesondere senkrecht zu der Einführrichtung (150; 248) ausgerichtet;
- die Einführrichtung (150; 248) ist quer oder parallel zu einer Querseite (48) des Gerätekörpers (12) orientiert;
- die Einführrichtung (150; 248) ist quer und insbesondere senkrecht zu einer Radachse (36) einer Radeinrichtung (30) orientiert, wobei die Radeinrichtung (30) an dem Gerätekörper (12) angeordnet ist;
- die Einführrichtung (150; 248) ist parallel zu einer geometrischen Mittelebene (116) des Gerätekörpers (12) orientiert;
- die Einführrichtung (150; 248) ist parallel oder liegt in einem spitzen Winkel oder ist senkrecht zu einer Einsteckrichtung eines Saugschlauchs in einen Sauganschluss (106)
und insbesondere
**dadurch gekennzeichnet, dass** die Einführrichtung (150) senkrecht zu der Höhenachse (58) oder parallel zu der Standebene (56) ist, oder **dadurch gekennzeichnet, dass** ein spitzer Winkel (244) der Einführrichtung (248) zu der Standebene (56) im Bereich zwischen 30° und 60° liegt und insbesondere im Bereich zwischen 40° und 50° liegt.

16. Sauggerät nach einem der vorangehenden Ansprüche, **dadurch gekennzeichnet, dass** die mindestens eine Aufnahme (222; 224) eine Einführrichtung (248) für eine Batterieeinheit (122; 124) aufweist, welche in einem spitzen Winkel (244) zu einer Verschiebungsrichtung (252) des Sauggeräts an einem Untergrund (29) liegt, wobei insbesondere der Gerätekörper (12) über eine Radeinrichtung (30) mit einer Radachse (36) an einem Untergrund (29) abgestützt ist, und wobei die Verschiebungsrichtung (252) senkrecht zu der Radachse (36) orientiert ist, und insbesondere **dadurch gekennzeichnet, dass** der spitze Winkel (244) im Bereich zwischen 30° und 60° liegt und insbesondere im Bereich zwischen 40° und 50° liegt.

17. Sauggerät nach einem der vorangehenden Ansprüche, **gekennzeichnet durch** mindestens eines der Folgenden:
- eine Bedienungstafel (112), welche an einer Querseite (48) des Gerätekörpers (12) angeordnet ist,
- einen Sauganschluss (106), welcher an einer Querseite (48) des Gerätekörpers (12) angeordnet ist;
- die mindestens eine Aufnahme (126; 128) an dem Gerätekörper (12) ist bezüglich der Querseite (48) so angeordnet, dass die der mindestens einen Aufnahme (126; 128) zugeordnete Batterieeinheit (122; 124) von der Querseite (48) her in die mindestens eine Aufnahme (126; 128) bringbar ist;
- die mindestens eine Aufnahme (126; 128) ist an dem Gerätekörper (12) so bezüglich der Querseite (48) angeordnet, dass eine Ladezustandsanzeige (160) von der Querseite (48) her durch einen Bediener ablesbar ist, wobei die Ladezustandsanzeige (160) an der Batterieeinheit (122; 124) angeordnet ist oder an der mindestens einen Aufnahme (126; 128) angeordnet ist;
- eine Batterieeinheit (122; 124) ist in einer Einführrichtung (150; 248) lösbar an der zugeordneten mindestens einen Aufnahme (126, 128; 222, 224; 296, 298; 330) positionierbar und in einer Gegenrichtung (152; 250) zu der Einführrichtung (150; 248) von der mindestens einen Aufnahme (126, 128; 222, 224; 296, 298; 330) entnehmbar;
- die mindestens eine Aufnahme (126, 128; 222, 224; 296, 298; 330) umfasst eine Fixierungseinrichtung für die zugeordnete Batterieeinheit (122; 124);
- die mindestens eine Aufnahme (126, 128; 222, 224; 296, 298; 330) umfasst eine Führungsbahn (138) für die zugeordnete Batterieeinheit (122; 124);
- durch die mindestens eine Aufnahme (126, 128; 222, 224; 296, 298; 330) ist eine Batterieeinheit aufnehmbar, welche ein Ausgleichsgewicht für eine elektrisch wirksame Batterieeinheit (122; 124) ist und gewichtsmäßig der elektrisch wirksamen Batterieeinheit (122; 124) entspricht;
- die Bedienungstafel (112) und der Sauganschluss (106) sind an der gleichen Querseite (48) angeordnet.

18. Sauggerät nach einem der vorangehenden Ansprüche, **gekennzeichnet durch** mindestens eine erste Aufnahme (126; 222) und eine zweite Aufnahme (128; 224), und insbesondere
**gekennzeichnet durch** mindestens eines der Folgenden:
- die erste Aufnahme (126; 222) und die zweite Aufnahme (128; 224) sind symmetrisch und insbesondere spiegelsymmetrisch zu einer geometrischen Mittelebene (116) des Gerätekörpers (12) an dem Gerätekörper (12) angeordnet, oder sind an der Mittelebene (116) an dem Gerätekörper (12) angeordnet, wobei die Mittelebene (116) quer zu einer Querseite (48) orientiert ist;
- die erste Aufnahme (126; 222) und die zweite Aufnahme (128; 224) sind beabstandet in einer Querrichtung zu einer geometrischen Mittelebene (116) des Gerätekörpers (12);
- die Gebläseeinrichtung (72) ist mindestens mit einem Teilbereich zwischen der ersten Aufnahme (126; 222) und der zweiten Aufnahme (128; 224) an dem Gerätekörper (12) angeordnet;
- eine Steuerungseinrichtung (96) ist zwischen der ersten Aufnahme (126; 222) und der zweiten Aufnahme (128; 224) an dem Gerätekörper (12) angeordnet;
- die Bedienungstafel (112) ist zwischen der ersten Aufnahme (126; 222) und der zweiten Aufnahme (128; 224) an dem Gerätekörper (12) angeordnet;
- der Sauganschluss (106) ist zwischen der ersten Aufnahme (126; 222) und der zweiten Aufnahme (128; 224) an dem Gerätekörper (12) angeordnet;
- die erste Aufnahme (126; 222) und die zweite Aufnahme (128; 224) sind an einem Saugkopf (16; 218) des Gerätekörpers (12) angeordnet, insbesondere mit mindestens einem der Folgenden:
- eine Bedienungstafel (112) ist an dem Saugkopf (16; 218) angeordnet;
- ein Sauganschluss (106) ist an dem Saugkopf (16; 218) oder an einem Sauggutbehälter angeordnet.

19. Sauggerät nach einem der vorangehenden Ansprüche, **dadurch gekennzeichnet, dass** an dem Gerätekörper (12) ein Mittelblock (132) angeordnet ist, an welchem eine Bedienungstafel (112) positioniert ist, und dass beidseitig zu dem Mittelblock (132) an dem Gerätekörper (12) jeweils eine Aufnahme (126, 128; 222, 224) angeordnet ist, und insbesondere
**gekennzeichnet durch** mindestens eines der Folgenden:
- an dem Mittelblock (132) sitzt ein Sauganschluss (106);
- der Mittelblock (132) weist eine Außenseite auf, welche einen Teil einer Querseite (48) bildet;
- der Mittelblock (132) umfasst einen Steg (134), welcher bezogen auf eine Höhenachse (58) des Gerätekörpers (12) über den Aufnahmen (126, 128; 222, 224; 296, 298; 330) positioniert ist;
- der Mittelblock (132) ist I-förmig oder T-förmig;
- der Mittelblock (132) sitzt an einem Saugkopf (16) des Gerätekörpers (12);
- an dem Mittelblock (132) ist eine Steuerungseinrichtung (96) angeordnet;
- der Mittelblock (132) ist spiegelsymmetrisch zu einer geometrischen Mittelebene (116) des Gerätekörpers (12) ausgebildet;
- ein beweglicher Deckel (104) für einen Aufnahmeraum (86) des Gerätekörpers (12), in welchem eine Filterabreinigungseinrichtung (88) für eine Filtereinrichtung (82) und/oder die Filtereinrichtung (82) angeordnet sind, ist an dem Mittelblock (132) abgestützt;
- an dem beweglichen Deckel (104) ist ein Tragegriff (178) angeordnet;
- die mindestens eine Aufnahme (126; 128) erstreckt sich in einen Bereich unterhalb des Deckels (104);
- die mindestens eine Aufnahme (126; 128) ist mindestens in einem Teilbereich seitlich zu der Gebläseeinrichtung (72) an dem Gerätekörper (12) positioniert.

20. Sauggerät nach einem der Ansprüche 1 bis 17, **dadurch gekennzeichnet, dass** mindestens eine Aufnahme (330) bezogen auf eine Höhenachse (346) des Gerätekörpers (312) zwischen einem Sauganschluss (318) und einer Bedienungstafel (326) angeordnet ist, und insbesondere
**dadurch gekennzeichnet, dass** die Bedienungstafel (326) an einem Saugkopf (324) des Gerätekörpers (312) angeordnet ist und der Sauganschluss (318) an einem Sauggutbehälter (316) des Gerätekörpers (312) angeordnet ist, wobei insbesondere die mindestens eine Aufnahme (330) an einem Zwischenring (320) angeordnet ist, welcher zwischen dem Sauggutbehälter (316) und dem Saugkopf (324) angeordnet ist, insbesondere mit mindestens einem der Folgenden:
- der Zwischenring (320) ist lösbar von dem Sauggutbehälter (316);
- der Zwischenring (320) ist lösbar von dem Saugkopf (324);
- an dem Zwischenring (320) ist ein Aufnahmeraum angeordnet, an welchem eine Mehrzahl von Aufnahmen (330) sitzen, wobei insbesondere der Aufnahmeraum zur Aufnahme einer Mehrzahl von Batterieeinheiten (332) ausgebildet ist.

21. Sauggerät nach einem der vorangehenden Ansprüche, **dadurch gekennzeichnet, dass** an einer geometrischen Mittelebene (116) des Gerätekörpers (12), welche zwischen einer ersten Aufnahme (126) und einer zweiten Aufnahme (128) liegt, eine Filterabreinigungseinrichtung (88) für eine Filtereinrichtung (82) und/oder die Filtereinrichtung (82) angeordnet sind.

22. Sauggerät nach einem der vorangehenden Ansprüche, **gekennzeichnet durch** eine Filtereinrichtung (82) und eine Filterabreinigungseinrichtung (88) für die Filtereinrichtung (82), wobei dem Gerätekörper (12) eine geometrische Mittelebene (116) zugeordnet ist, welche senkrecht zu einer Standebene (56) des Gerätekörpers (12) orientiert ist, wobei ein Massenschwerpunkt (118) des Gerätekörpers (12) mindestens näherungsweise auf der Mittelebene (116) liegt, wobei die Filterabreinigungseinrichtung (88) so an dem Gerätekörper (12) angeordnet ist, dass ein Massenschwerpunkt der Filterabreinigungseinrichtung (88) mindestens näherungsweise auf der Mittelebene (116) liegt, und wobei die Batterieeinrichtung (120) so an dem Gerätekörper (12) angeordnet ist, dass mindestens näherungsweise ein Massenschwerpunkt der Batterieeinrichtung (120) auf der Mittelebene (116) liegt, und insbesondere
**gekennzeichnet durch** mindestens eines der Folgenden:
- die Batterieeinrichtung (120) ist an der Mittelebene (116) angeordnet und/oder ist symmetrisch zu der Mittelebene (116) an dem Gerätekörper (12) angeordnet;
- die Batterieeinrichtung (120) weist eine Mehrzahl von Batterieeinheiten (122; 124) auf, welche an der Mittelebene (116) angeordnet sind und/oder symmetrisch zu der Mittelebene (116) angeordnet sind;
- die Filterabreinigungseinrichtung (88) ist an der Mittelebene (116) angeordnet und/oder symmetrisch zu der Mittelebene (116) ausgebildet;
- die Filterabreinigungseinrichtung (88) weist eine Mehrzahl von Fremdluftventilen (92) auf, welche an der Mittelebene (116) angeordnet sind und/oder symmetrisch zu der Mittelebene (116) an dem Gerätekörper (12) angeordnet sind.

## Claims

1. Suction appliance, comprising an appliance body (12; 312), a blower device (72) for generating a suction flow, a battery device (120) with at least one battery unit (122; 124) for providing electrical energy, and at least one receptacle (126, 128; 222, 224; 296, 298; 330) for a battery unit (122; 124), which is arranged on the appliance body (12; 312), wherein the at least one receptacle (126, 128; 222, 224; 296, 298; 330) comprises a chamber (380; 226), in that a movable closure (398; 230; 262; 282; 350) is arranged on the chamber (380; 226), wherein the closure (398; 230; 262; 282; 350) has a first position (408; 232; 358), in which the chamber (380; 226) is closed by the closure (398; 230; 262; 282; 350), and a second position (410) when the battery unit (122; 124) is electrically-operatively positioned on the at least one receptacle (126, 128; 222, 224; 296, 298; 330), **characterized in that** the closure (398; 230; 262; 282; 350) is arranged and configured such that the closure (398; 230; 262; 282; 350) automatically goes from the second position (410) into the first position (408; 232; 358) when the battery unit (122; 124) is removed from the at least one receptacle (126, 128; 222, 224; 296, 298; 330), and the closure (398; 230; 262; 282; 350) automatically goes from the first position (408; 232; 358) into the second position (410) when the battery unit (122; 124) is inserted into the at least one receptacle (126, 128; 222, 224; 296, 298; 330).

2. Suction appliance in accordance with Claim 1, **characterized in that** the chamber (380) has an inner space (386), and **in that** in the second position (410) the closure (350) is positioned in the inner space (386).

3. Suction appliance in accordance with Claim 1 or 2, **characterized in that** a movement of the closure (398; 230; 262; 282; 350) from the first position (408; 232; 358) into the second position (410) is driven by a movement of the battery unit (122; 124).

4. Suction appliance in accordance with any one of the preceding Claims, **characterized in that** the closure (398; 230; 262; 282; 350) has at least one engagement surface (414) for the battery unit (122; 124), wherein the closure (398; 230; 262; 282; 350) transitions from the first position (408; 232; 358) into the second position (410) when the battery unit (122; 124) abuts against the at least one engagement surface (414) and the battery unit (122; 124) moves into the chamber (380; 226).

5. Suction appliance in accordance with any one of the preceding Claims, **characterized by** a restoring device (412), which drives a movement of the closure (398; 230; 262; 282; 350) from the second position (410) into the first position (408; 232; 358), and in particular **characterized in that** the restoring device (412) is or comprises a spring device.

6. Suction appliance in accordance with any one of the preceding Claims, **characterized in that** the closure (398; 230; 262; 282; 350) has at least one abutment surface (416) for the battery unit (122; 124), wherein in the second position (410) the closure (398; 230; 262; 282; 350) abuts with the at least one abutment surface (416) against the battery unit (122; 124) and a mobility of the closure (398; 230; 262; 282; 350) to the battery unit (122; 124) is blocked by the abutment.

7. Suction appliance in accordance with any one of the preceding Claims, **characterized in that** an electrical contact device (130) for the battery unit (122; 124) is arranged on the chamber (380; 226) and an electrical connection between the battery unit (122; 124) and the electrical contact device (130) is established when the battery unit (122; 124) is electrically-operatively positioned on the chamber (380; 226), in particular with at least one of the following:
- the electrical contact device (130) points into an inner space (386) of the chamber (380; 226) and/or is arranged in the inner space (386) of the chamber (380; 226);
- the electrical contact device (130) is arranged in a region of an end (390) of the chamber (380), which is remote from an end (392) of the chamber (380) at which the closure (350) is arranged.

8. Suction appliance in accordance with any one of the preceding Claims, **characterized in that** seated on the closure (230) is at least one collection element and/or discharge element (500) for fluid is, which, in particular, is movable with the closure (230), and in particular
**characterized by** at least one of the following:
- the at least one collection element and/or discharge element (500) is configured as a channel (502);
- the at least one collection element and/or discharge element (500) is seated on an outer side of the closure (230);
- the at least one collection element and/or discharge element (500) has at least one receiving space (504) for fluid;
- the at least one collection element and/or discharge element (500) is arranged on the closure (230) such that one or more openings (508, 510) of the at least one collection element and/or discharge element (500) via which fluid is able to be discharged, in the second position (410) of the closure (230), are positioned at a distance from an electrical contact device (130) that is seated on the chamber (226), and in particular a direct flow path for fluid that is discharged via an opening (508; 510) of the at least one collection element and/or discharge element (500) is spaced at a distance from the electrical contact device (130);
- the at least one collection element and/or discharge element (500) is laterally open at least on one side.

9. Suction appliance in accordance with any one of the preceding Claims, **characterized in that** the battery unit (122; 124) is positioned with a first partial region (394) within the chamber (380) and is positioned with a second partial region (396) outside of the chamber (380) when the battery unit (122; 124) is positioned on the at least one receptacle (126, 128; 222, 224; 296, 298; 330).

10. Suction appliance in accordance with any one of the preceding Claims, **characterized in that** the closure (398; 230; 262; 282; 350) is of one-part or multi-part configuration.

11. Suction appliance in accordance with any one of the preceding Claims, **characterized in that** the closure (398; 230; 262; 282; 350) is or has at least one flap (400; 264, 266; 352), which is arranged on the chamber (380; 226) so as to be pivotable about a pivot axis (404; 270; 278), and in particular **characterized by** at least one of the following:
- the pivot axis (404; 270; 278) is oriented transversely to an insertion direction (150; 248) of the battery unit (122; 124) into the chamber (380; 226);
- the at least one flap (400; 264, 266; 352) has a pivoting region (406), which is located in an inner space (386) of the chamber (380; 226);
- the at least one flap (400) is arranged on a side of the chamber (380) that is opposite a side on which an electrical contact device (130) is seated on the chamber (380);
- the at least one flap (400) in the second position (410) is positioned either above or below the battery unit (122; 124) relative to a height axis (58) of the appliance body (12);
- an abutment surface of the battery unit (122; 124) against which the at least one flap (400) abuts in the second position (410) is located on a top side (678) or a bottom side of the battery unit (122; 124);
- there is exactly one flap (400);
- the pivot axis (404) of the at least one flap (400) is oriented transversely and, in particular, perpendicularly to the height axis (58);
- the pivot axis (404) is oriented at least approximately in parallel to a wheel axis (36);
- the at least one flap (264, 266) in the second position is positioned next to the battery unit (122; 124) relative to a height axis (58) of the appliance body (12);
- an abutment surface of the battery unit (122; 124) against which the at least one flap (264; 266) abuts in the second position is located on a longitudinal side (666; 668) of the battery unit (122; 124), and in particular **characterized by** at least one of the following:
- the pivot axis (270; 278) is oriented at least approximately in parallel or at an acute angle smaller than 60° to the height axis (58);
- the pivot axis (270; 278) is oriented transversely to the wheel axis (36);
- a first flap (264) and a second flap (266), between which the battery unit (122; 124) is able to be passed through and is able to be brought into the chamber (226).

12. Suction appliance in accordance with any one of Claims 1 to 10, **characterized in that** the closure (282) is configured as a shutter (284) or **in that** the closure is configured as a slider.

13. Suction appliance in accordance with any one of the preceding Claims, **characterized in that** the chamber (380) is configured as a receiving slot (388) for the battery unit (122; 124).

14. Suction appliance in accordance with any one of the preceding Claims, **characterized in that** the appliance body (12) has a recess or a free space (660a; 660b), which is associated which the at least one receptacle (126, 128; 222, 224; 296, 298; 330), wherein the at least one receptacle (126, 128; 222, 224; 296, 298; 330) adjoins the associated free space or the associated recess (660a; 660b) in an insertion direction (150; 248) for the battery unit (122; 124) into the associated receptacle (126, 128; 222, 224; 296, 298; 330), and in particular
**characterized by** at least one of the following:
- the free space or the recess (660a; 660b) is located in front of the associated at least one receptacle (126, 128; 222, 224; 296, 298; 330);
- the free space or the recess (660a; 660b) is delimited downward by a base and, in particular, by a planar base (142) on the appliance body (12);
- the free space or the recess (660a; 660b) is delimited toward a first side by a center block (132);
- the free space or the recess (660a; 660b) is open toward a second side, which is a longitudinal side (38; 40) of the appliance body (12), wherein the longitudinal side (38; 40) is oriented transversely to a transverse side (48);
- a battery unit (122; 124) is provided with a gripping device (672), wherein the gripping device (672) is positioned in the free space or the recess (660a; 660b) and, in particular, is accessible to an operator by way of the free space or the recess (660a; 660b) when the battery unit (122; 124) is positioned on the at least one receptacle (126, 128; 222, 224; 296, 298; 330);
- the gripping device (672) is arranged on a longitudinal side (666; 668) or a top side (678) of the battery unit (122; 124), wherein the longitudinal side (666; 668) is oriented transversely to the transverse side (48) of the appliance body (12) and, in particular, faces outwards when the battery unit (122; 124) is positioned on the at least one receptacle (126, 128; 222, 224; 296, 298; 330);
- a respective gripping device (672) is arranged on a first longitudinal side (666) and on an opposite second longitudinal side (668) of the battery unit (122; 124) and, in particular, the battery unit (122; 124) is of mirror-symmetrical configuration with respect to its outer shape.

15. Suction appliance in accordance with any one of the preceding Claims, **characterized in that** the suction appliance has a standing plane (56), and **in that** the appliance body (12) has a height axis (58), which is oriented perpendicularly to the standing plane (56), and wherein the at least one receptacle (126, 128; 222, 224; 296, 298; 330) has associated therewith an insertion direction (150; 248) for a corresponding battery unit (122; 124), with at least one of the following:
- the at least one receptacle (126, 128; 222, 224; 296, 298; 330) is arranged such that the insertion direction (150; 248) is oriented transversely to the height axis (58) or in parallel to the height axis (58);
- the at least one receptacle (126, 128; 222, 224; 296, 298; 330) is arranged such that the insertion direction (150; 248) lies parallel or at an acute angle or perpendicular to the standing plane (56);
- in the first position (408; 232) the closure (398; 230) is oriented transversely and, in particular, perpendicularly to the insertion direction (150; 248);
- the insertion direction (150; 248) is oriented transversely or in parallel to a transverse side (48) of the appliance body (12);
- the insertion direction (150; 248) is oriented transversely and, in particular, perpendicularly to a wheel axis (36) of a wheel device (30), wherein the wheel device (30) is arranged on the appliance body (12);
- the insertion direction (150; 248) is oriented in parallel to a geometric midplane (116) of the appliance body (12);
- the insertion direction (150; 248) is parallel or lies at an acute angle or is perpendicular to a plug-in direction of a suction hose into a suction connection (106),
and in particular
**characterized in that** the insertion direction (150) is perpendicular to the height axis (58) or parallel to the standing plane (56), or **characterized in that** an acute angle (244) of the insertion direction (248) to the standing plane (56) is in the range between 30° and 60° and, in particular, in the range between 40° and 50°.

16. Suction appliance in accordance with any one of the preceding Claims, **characterized in that** the at least one receptacle (222; 224) has an insertion direction (248) for a battery unit (122; 124), which lies at an acute angle (244) to a displacement direction (252) of the suction appliance on a base (29), wherein, in particular, the appliance body (12) is supported on a base (29) by way of a wheel device (30) having a wheel axis (36), and wherein the displacement direction (252) is oriented perpendicularly to the wheel axis (36), and in particular **characterized in that** the acute angle (244) is in the range between 30° and 60° and, in particular, in the range between 40° and 50°.

17. Suction appliance in accordance with any one of the preceding Claims, **characterized by** at least one of the following:
- an operating panel (112), which is arranged on a transverse side (48) of the appliance body (12),
- a suction connection (106), which is arranged on a transverse side (48) of the appliance body (12);
- the at least one receptacle (126; 128) is arranged on the appliance body (12) relative to the transverse side (48) such that the battery unit (122; 124) associated with the at least one receptacle (126; 128) is bringable from the transverse side (48) into the at least one receptacle (126; 128);
- the at least one receptacle (126; 128) is arranged on the appliance body (12) relative to the transverse side (48) such that a charge state indicator (160) is readable by an operator from the transverse side (48), wherein the charge state indicator (160) is arranged on the battery unit (122; 124) or is arranged on the at least one receptacle (126; 128);
- a battery unit (122; 124) is releasably positionable on the associated at least one receptacle (126, 128; 222, 224; 296, 298; 330) in an insertion direction (150; 248) and is removable from the at least one receptacle (126, 128; 222, 224; 296, 298; 330) in an opposite direction (152; 250) to the insertion direction (150; 248);
- the at least one receptacle (126, 128; 222, 224; 296, 298; 330) comprises a fixing device for the associated battery unit (122; 124);
- the at least one receptacle (126, 128; 222, 224; 296, 298; 330) comprises a guideway (138) for the associated battery unit (122; 124);
- a battery unit is able to be accommodated by the at least one receptacle (126, 128; 222, 224; 296, 298; 330), said battery unit being a balancing weight for an electrically-operative battery unit (122; 124) and corresponding in weight to the electrically-operative battery unit (122; 124);
- the operating panel (112) and the suction connection (106) are arranged on the same transverse side (48).

18. Suction appliance in accordance with any one of the preceding Claims, **characterized by** at least one first receptacle (126; 222) and a second receptacle (128; 224), and in particular
**characterized by** at least one of the following:
- the first receptacle (126; 222) and the second receptacle (128; 224) are arranged on the appliance body (12) symmetrically and, in particular, mirror-symmetrically to a geometric midplane (116) of the appliance body (12), or are arranged on the appliance body (12) on the midplane (116), wherein the midplane (116) is oriented transversely to a transverse side (48);
- the first receptacle (126; 222) and the second receptacle (128; 224) are spaced at a distance in a transverse direction from a geometric midplane (116) of the appliance body (12);
- the blower device (72) is arranged on the appliance body (12) at least with a partial region between the first receptacle (126; 222) and the second receptacle (128; 224);
- a control device (96) is arranged on the appliance body (12) between the first receptacle (126; 222) and the second receptacle (128; 224);
- the operating panel (112) is arranged on the appliance body (12) between the first receptacle (126; 222) and the second receptacle (128; 224);
- the suction connection (106) is arranged on the appliance body (12) between the first receptacle (126; 222) and the second receptacle (128; 224);
- the first receptacle (126; 222) and the second receptacle (128; 224) are arranged on a suction head (16; 218) of the appliance body (12), in particular with at least one of the following:
- an operating panel (112) is arranged on the suction head (16; 218);
- a suction connection (106) is arranged on the suction head (16; 218) or on a suctioned material container.

19. Suction appliance in accordance with any one of the preceding Claims, **characterized in that** arranged on the appliance body (12) is a center block (132), on which an operating panel (112) is positioned, and **in that** a respective receptacle (126, 128; 222, 224) is arranged on the appliance body (12) on both sides of the center block (132), and in particular
**characterized by** at least one of the following:
- a suction connection (106) is seated on the center block (132);
- the center block (132) has an outer side, which forms part of a transverse side (48);
- the center block (132) comprises a web (134), which is positioned over the receptacles (126, 128; 222, 224; 296, 298; 330) relative to a height axis (58) of the appliance body (12);
- the center block (132) is I-shaped or T-shaped;
- the center block (132) is seated on a suction head (16) of the appliance body (12);
- a control device (96) is arranged on the center block (132);
- the center block (132) is of mirror-symmetrical configuration relative to a geometric midplane (116) of the appliance body (12);
- a movable lid (104) for a receiving space (86) of the appliance body (12) in which a filter cleaning device (88) for a filter device (82) and/or the filter device (82) are arranged is supported on the center block (132);
- a carrying handle (178) is arranged on the movable lid (104);
- the at least one receptacle (126; 128) extends into a region below the lid (104);
- the at least one receptacle (126; 128) is positioned on the appliance body (12) laterally to the blower device (72) at least in a partial region.

20. Suction appliance in accordance with any one of Claims 1 to 17, **characterized in that** at least one receptacle (330) is arranged between a suction connection (318) and an operating panel (326) relative to a height axis (346) of the appliance body (312), and in particular
**characterized in that** the operating panel (326) is arranged on a suction head (324) of the appliance body (312) and the suction connection (318) is arranged on a suctioned material container (316) of the appliance body (312), wherein, in particular, the at least one receptacle (330) is arranged on an intermediate ring (320), which is arranged between the suctioned material container (316) and the suction head (324), in particular with at least one of the following:
- the intermediate ring (320) is releasable from the suctioned material container (316);
- the intermediate ring (320) is releasable from the suction head (324);
- arranged on the intermediate ring (320) is a receiving space on which a plurality of receptacles (330) are seated, wherein, in particular, the receiving space is configured to accommodate a plurality of battery units (332).

21. Suction appliance in accordance with any one of the preceding Claims, **characterized in that** a filter cleaning device (88) for a filter device (82) and/or the filter device (82) are arranged on a geometric midplane (116) of the appliance body (12), which lies between a first receptacle (126) and a second receptacle (128).

22. Suction appliance in accordance with any one of the preceding Claims, **characterized by** a filter device (82) and a filter cleaning device (88) for the filter device (82), wherein the appliance body (12) has associated therewith a geometric midplane (116), which is oriented perpendicularly to a standing plane (56) of the appliance body (12), wherein a center of mass (118) of the appliance body (12) is located at least approximately on the midplane (116), wherein the filter cleaning device (88) is arranged on the appliance body (12) such that a center of mass of the filter cleaning device (88) is located at least approximately on the midplane (116), and wherein the battery device (120) is arranged on the appliance body (12) such that a center of mass of the battery device (120) is located on the midplane (116) at least approximately, and in particular
**characterized by** at least one of the following:
- the battery device (120) is arranged on the midplane (116) and/or is arranged on the appliance body (12) symmetrically to the midplane (116);
- the battery device (120) has a plurality of battery units (122; 124), which are arranged on the midplane (116) and/or are arranged symmetrically to the midplane (116);
- the filter cleaning device (88) is arranged on the midplane (116) and/or is arranged symmetrically to the midplane (116);
- the filter cleaning device (88) has a plurality of external air valves (92), which are arranged on the midplane (116) and/or are arranged on the appliance body (12) symmetrically to the midplane (116).

## Revendications

1. Aspirateur, comprenant un corps d'appareil (12 ; 312), un dispositif de soufflante (72) pour générer un flux d'aspiration, un dispositif de batterie (120) avec au moins une unité de batterie (122 ; 124) pour fournir de l'énergie électrique, et au moins un logement (126, 128 ; 222, 224 ; 296, 298 ; 330) destiné à une unité de batterie (122 ; 124) agencée au niveau du corps d'appareil (12 ; 312), dans lequel le au moins un logement (126, 128 ; 222, 224 ; 296, 298 ; 330) comprend une chambre (380 ; 226), dans lequel un obturateur mobile (398 ; 230 ; 262 ; 282 ; 350) est agencé au niveau de la chambre (380 ; 226), dans lequel l'obturateur (398 ; 230 ; 262 ; 282 ; 350) présente une première position (408 ; 232 ; 358) dans laquelle la chambre (380 ; 226) est fermée par l'obturateur (398 ; 230 ; 262 ; 282 ; 350) et une seconde position (410) dans laquelle l'unité de batterie (122 ; 124) est positionnée de manière électriquement fonctionnelle au niveau du au moins un logement (126, 128 ; 222, 224 ; 296, 298 ; 330), **caractérisé en ce que** l'obturateur (398 ; 230 ; 262 ; 282 ; 350) est agencé et réalisé de telle manière que, lorsque l'unité de batterie (122 ; 124) est retirée du au moins un logement (126, 128 ; 222, 224 ; 296, 298 ; 330), l'obturateur (398 ; 230 ; 262 ; 282 ; 350) passe automatiquement de la seconde position (410) à la première position (408 ; 232 ; 358), et, lorsque l'unité de batterie (122 ; 124) est insérée dans le au moins un logement (126, 128 ; 222, 224 ; 296, 298 ; 330), l'obturateur (398 ; 230 ; 262 ; 282 ; 350) passe automatiquement de la première position (408 ; 232 ; 358) à la seconde position (410) .

2. Aspirateur selon la revendication 1, **caractérisé en ce que** la chambre (380) présente un espace intérieur (386) et **en ce que**, dans la seconde position (410), l'obturateur (350) est positionné dans l'espace intérieur (386).

3. Aspirateur selon la revendication 1 ou 2, **caractérisé en ce qu'**un déplacement de l'obturateur (398 ; 230 ; 262 ; 282 ; 350) à partir de la première position (408 ; 232 ; 358) jusqu'à la seconde position (410) est entraîné par un déplacement de l'unité de batterie (122 ; 124).

4. Aspirateur selon l'une quelconque des revendications précédentes, **caractérisé en ce que** l'obturateur (398 ; 230 ; 262 ; 282 ; 350) présente au moins une surface d'application de force (414) pour l'unité de batterie (122 ; 124), dans lequel l'obturateur (398 ; 230 ; 262 ; 282 ; 350) passe de la première position (408 ; 232 ; 358) à la seconde position (410) lors de la mise en place de l'unité de batterie (122 ; 124) contre la au moins une surface d'application de force (414) et du déplacement de l'unité de batterie (122 ; 124) jusque dans la chambre (380 ; 226).

5. Aspirateur selon l'une quelconque des revendications précédentes, **caractérisé par** un dispositif de rappel (412) qui entraîne un déplacement de l'obturateur (398 ; 230 ; 262 ; 282 ; 350) à partir de la seconde position (410) jusqu'à la première position (408 ; 232 ; 358), et en particulier
**caractérisé en ce que** le dispositif de rappel (412) est ou comprend un dispositif à ressort.

6. Aspirateur selon l'une quelconque des revendications précédentes, **caractérisé en ce que** l'obturateur (398 ; 230 ; 262 ; 282 ; 350) présente au moins une surface de mise en place (416) destinée à l'unité de batterie (122 ; 124), dans lequel la au moins une surface de mise en place (416) de l'obturateur (398 ; 230 ; 262 ; 282 ; 350) vient en place contre l'unité de batterie (122 ; 124) dans la seconde position (410) et la mobilité de l'obturateur (398 ; 230 ; 262 ; 282 ; 350) par rapport à l'unité de batterie (122 ; 124) est bloquée du fait de la mise en place.

7. Aspirateur selon l'une quelconque des revendications précédentes, **caractérisé en ce qu'**un dispositif de contact électrique (130) destiné à l'unité de batterie (122 ; 124) est agencé au niveau de la chambre (380 ; 226) et une connexion électrique est établie entre l'unité de batterie (122 ; 124) et le dispositif de contact électrique (130) en cas de positionnement électriquement fonctionnel de l'unité de batterie (122 ; 124) au niveau de la chambre (380 ; 226), en particulier avec au moins une des caractéristiques ci-dessous :
- le dispositif de contact électrique (130) apparait dans un espace intérieur (386) de la chambre (380 ; 226) et/ou est agencé dans l'espace intérieur (386) de la chambre (380 ; 226) ;
- le dispositif de contact électrique (130) est agencé dans une région d'une extrémité (390) de la chambre (380) qui est opposée à l'extrémité (392) de la chambre (380) où est agencé l'obturateur (350).

8. Aspirateur selon l'une quelconque des revendications précédentes, **caractérisé en ce qu'**au moins un élément de collecte et/ou élément d'évacuation (500) destiné à un fluide et pouvant en particulier être déplacé avec l'obturateur (230) se trouve au niveau de l'obturateur (230), et en particulier
**caractérisé par** au moins une des caractéristiques ci-dessous :
- le au moins un élément de collecte et/ou élément d'évacuation (500) est réalisé sous la forme d'une gouttière (502) ;
- le au moins un élément de collecte et/ou élément d'évacuation (500) se trouve sur un côté extérieur de l'obturateur (230) ;
- le au moins un élément de collecte et/ou élément d'évacuation (500) présente au moins un espace de réception (504) destiné à un fluide ;
- le au moins un élément de collecte et/ou élément d'évacuation (500) est agencé au niveau de l'obturateur (230) de telle manière qu'une ou plusieurs ouverture (s) (508, 510) du au moins un élément de collecte et/ou élément d'évacuation (500), par laquelle ou lesquelles du fluide peut s'écouler, sont positionnées, dans la seconde position (410) de l'obturateur (230), à distance d'un dispositif de contact électrique (130) qui se trouve au niveau de la chambre (226), et en particulier de telle manière qu'un trajet d'écoulement direct pour un fluide qui s'écoule par une ouverture (508 ; 510) du au moins un élément de collecte et/ou élément d'évacuation (500) se trouve à distance du dispositif de contact électrique (130) ;
- le au moins un élément de collecte et/ou élément d'évacuation (500) est ouvert latéralement au moins d'un côté.

9. Aspirateur selon l'une quelconque des revendications précédentes, **caractérisé en ce que**, lorsque l'unité de batterie (122 ; 124) est positionnée au niveau du au moins un logement (126, 128 ; 222, 224 ; 296, 298 ; 330), une première sous-région (394) de l'unité de batterie (122 ; 124) est positionnée à l'intérieur de la chambre (380) et une seconde sous-région (396) est positionnée à l'extérieur de la chambre (380).

10. Aspirateur selon l'une quelconque des revendications précédentes, **caractérisé en ce que** l'obturateur (398 ; 230 ; 262 ; 282 ; 350) est réalisé d'un seul tenant ou en plusieurs parties.

11. Aspirateur selon l'une quelconque des revendications précédentes, **caractérisé en ce que** l'obturateur (398 ; 230 ; 262 ; 282 ; 350) est ou présente au moins un clapet (400 ; 264, 266 ; 352) qui est agencé au niveau de la chambre (380 ; 226) de manière à pouvoir pivoter autour d'un axe de pivotement (404 ; 270 ; 278), et en particulier **caractérisé par** au moins une des caractéristiques ci-dessous :
- l'axe de pivotement (404 ; 270 ; 278) est orienté de manière transversale par rapport à un sens d'introduction (150 ; 248) de l'unité de batterie (122 ; 124) dans la chambre (380 ; 226) ;
- ledit au moins un clapet (400 ; 264, 266 ; 352) présente une région de pivotement (406) située dans un espace intérieur (386) de la chambre (380 ; 226) ;
- le au moins un clapet (400) est agencé d'un côté de la chambre (380) qui est opposé au côté duquel un dispositif de contact électrique (130) se trouve au niveau de la chambre (380) ;
- dans la seconde position (410), le au moins un clapet (400) est positionné par rapport à un axe vertical (58) du corps d'appareil (12) soit au-dessus, soit au-dessous de l'unité de batterie (122 ; 124) ;
- une surface de mise en place, contre laquelle le au moins un clapet (400) s'appuie dans la seconde position (410), de l'unité de batterie (122 ; 124) se trouve sur un côté supérieur (678) ou un côté inférieur de l'unité de batterie (122 ; 124) ;
- il y a exactement un clapet (400) ;
- l'axe de pivotement (404) du au moins un clapet (400) est orienté de manière transversale et en particulier de manière perpendiculaire par rapport à l'axe vertical (58) ;
- l'axe de pivotement (404) est orienté de manière au moins approximativement parallèle à un axe de roue (36) ;
- dans la seconde position, le au moins un clapet (264, 266) est positionné à côté de l'unité de batterie (122 ; 124) par rapport à un axe vertical (58) du corps d'appareil (12) ;
- une surface de mise en place, contre laquelle le au moins un clapet (264 ; 266) s'appuie dans la seconde position, de l'unité de batterie (122 ; 124) se trouve sur un côté longitudinal (666 ; 668) de l'unité de batterie (122 ; 124), et en particulier **caractérisé par** au moins une des caractéristiques ci-dessous :
- l'axe de pivotement (270 ; 278) est orienté de manière au moins approximativement parallèle, ou selon un angle aigu inférieur à 60°, par rapport à l'axe vertical (58) ;
- l'axe de pivotement (270 ; 278) est orienté de manière transversale par rapport à l'axe de roue (36) ;
- un premier clapet (264) et un second clapet (266), entre lesquels il est possible de faire passer l'unité de batterie (122 ; 124) et de l'amener dans la chambre (226).

12. Aspirateur selon l'une quelconque des revendications 1 à 10, **caractérisé en ce que** l'obturateur (282) est réalisé sous forme de persienne (284) ou **en ce que** l'obturateur est réalisé sous forme de coulisseau.

13. Aspirateur selon l'une quelconque des revendications précédentes, **caractérisé en ce que** la chambre (380) est réalisée sous la forme d'un puits de réception (388) destiné à l'unité de batterie (122 ; 124).

14. Aspirateur selon l'une quelconque des revendications précédentes, **caractérisé en ce que** le corps d'appareil (12) présente un évidement ou un espace libre (660a ; 660b) qui est associé au au moins un logement (126, 128 ; 222, 224 ; 296, 298 ; 330), dans lequel le au moins un logement (126, 128 ; 222, 224 ; 296, 298 ; 330) se connecte à l'espace libre ou à l'évidement (660a ; 660b) associé dans un sens d'introduction (150 ; 248) de l'unité de batterie (122 ; 124) dans le logement (126, 128 ; 222, 224 ; 296, 298 ; 330) associé, et en particulier
**caractérisé par** au moins une des caractéristiques ci-dessous :
- l'espace libre ou l'évidement (660a ; 660b) se situe devant le au moins un logement (126, 128 ; 222, 224 ; 296, 298 ; 330) associé ;
- l'espace libre ou l'évidement (660a ; 660b) est délimité vers le bas au niveau du corps d'appareil (12) par un fond et en particulier par un fond plat (142) ;
- l'espace libre ou l'évidement (660a ; 660b) est délimité d'un premier côté par un bloc central (132) ;
- l'espace libre ou l'évidement (660a ; 660b) est ouvert sur un second côté, qui est un côté longitudinal (38 ; 40) du corps d'appareil (12), dans lequel le côté longitudinal (38 ; 40) est orienté de manière transversale par rapport à un côté transversal (48) ;
- une unité de batterie (122 ; 124) est munie d'un dispositif formant poignée (672), dans lequel, lorsque l'unité de batterie (122 ; 124) est positionnée au niveau du au moins un logement (126, 128 ; 222, 224 ; 296, 298 ; 330), le dispositif formant poignée (672) est positionné dans l'espace libre ou l'évidement (660a ; 660b) et est en particulier accessible à un opérateur par l'intermédiaire de l'espace libre ou l'évidement (660a ; 660b) ;
- le dispositif formant poignée (672) est agencé sur un côté longitudinal (666 ; 668) ou un côté supérieur (678) de l'unité de batterie (122 ; 124), dans lequel le côté longitudinal (666 ; 668) est orienté de manière transversale par rapport au côté transversal (48) du corps d'appareil (12) et regarde en particulier vers l'extérieur lorsque l'unité de batterie (122 ; 124) est positionnée au niveau du au moins un logement (126, 128 ; 222, 224 ; 296, 298 ; 330) ;
- un dispositif formant poignée (672) est respectivement agencé sur un premier côté longitudinal (666) et sur un second côté longitudinal (668) opposé de l'unité de batterie (122 ; 124) et l'unité de batterie (122 ; 124) est en particulier réalisée de manière symétrique pour ce qui est de sa forme extérieure.

15. Aspirateur selon l'une quelconque des revendications précédentes, **caractérisé en ce que** l'appareil d'aspiration présente un plan d'appui (56), et **en ce que** le corps d'appareil (12) présente un axe vertical (58) qui est orienté de manière perpendiculaire au plan d'appui (56), et dans lequel un sens d'introduction (150 ; 248) pour une unité de batterie (122 ; 124) correspondante est associé au au moins un logement (126, 128 ; 222, 224 ; 296, 298 ; 330), avec au moins une des caractéristiques ci-dessous :
- le au moins un logement (126, 128 ; 222, 224 ; 296, 298 ; 330) est agencé de telle manière que le sens d'introduction (150 ; 248) est orienté de manière transversale par rapport à l'axe vertical (58) ou de manière parallèle par rapport à l'axe vertical (58) ;
- le au moins un logement (126, 128 ; 222, 224 ; 296, 298 ; 330) est agencé de telle manière que le sens d'introduction (150 ; 248) est parallèle ou forme un angle aigu ou est perpendiculaire par rapport au plan d'appui (56) ;
- dans la première position (408 ; 232), l'obturateur (398 ; 230) est orientée de manière transversale et en particulier perpendiculaire par rapport au sens d'introduction (150 ; 248) ;
- le sens d'introduction (150 ; 248) est orienté de manière transversale ou parallèle par rapport à un côté transversal (48) du corps d'appareil (12) ;
- le sens d'introduction (150 ; 248) est orienté de manière transversale et en particulier perpendiculaire par rapport à un axe de roue (36) d'un dispositif de roue (30), dans lequel le dispositif de roue (30) est agencé au niveau du corps d'appareil (12) ;
- le sens d'introduction (150 ; 248) est orienté de manière parallèle par rapport à un plan géométrique médian (116) du corps d'appareil (12) ;
- le sens d'introduction (150 ; 248) est parallèle ou forme un angle aigu ou est perpendiculaire par rapport à un sens d'introduction d'un tuyau d'aspiration dans un connecteur d'aspiration (106) et en particulier
**caractérisé en ce que** le sens d'introduction (150) est perpendiculaire par rapport à l'axe vertical (58) ou parallèle par rapport au plan d'appui (56), ou **caractérisé en ce qu'**un angle aigu (244) du sens d'introduction (248) par rapport au plan d'appui (56) se situe dans la plage comprise entre 30° et 60° et en particulier dans la plage comprise entre 40° et 50°.

16. Aspirateur selon l'une quelconque des revendications précédentes, **caractérisé en ce que** le au moins un logement (222 ; 224) présente un sens d'introduction (248) pour une unité de batterie (122 ; 124), qui forme au niveau du sol (29) un angle aigu (244) par rapport à une direction de déplacement (252) de l'aspirateur, dans lequel le corps d'appareil (12) est en particulier supporté au niveau du sol (29) par un dispositif de roue (30) présentant un axe de roue (36), et dans lequel la direction de déplacement (252) est orientée de manière perpendiculaire par rapport à l'axe de roue (36), et en particulier **caractérisé en ce que** l'angle aigu (244) se situe dans la plage comprise entre 30° et 60° et se situe en particulier dans la plage comprise entre 40° et 50°.

17. Aspirateur selon l'une quelconque des revendications précédentes, **caractérisé par** au moins une des caractéristiques ci-dessous :
- un tableau de commande (112), qui est agencé sur un côté transversal (48) du corps d'appareil (12),
- un connecteur d'aspiration (106), qui est agencé sur un côté transversal (48) du corps d'appareil (12) ;
- le au moins un logement (126 ; 128) est agencé au niveau du corps d'appareil (12) par rapport au côté transversal (48) de telle manière que l'unité de batterie (122 ; 124) associée au au moins un logement (126 ; 128) peut être amenée à partir du côté transversal (48) jusque dans le au moins un logement (126 ; 128) ;
- le au moins un logement (126 ; 128) est agencé au niveau du corps d'appareil (12) par rapport au côté transversal (48) de telle manière qu'un indicateur d'état de charge (160) peut être lu par un opérateur à partir du côté transversal (48), dans lequel l'indicateur d'état de charge (160) est agencé au niveau de l'unité de batterie (122 ; 124) ou est agencé au niveau du au moins un logement (126 ; 128) ;
- une unité de batterie (122 ; 124) peut être positionnée de manière amovible au niveau du au moins un logement (126, 128 ; 222, 224 ; 296, 298 ; 330) associé dans un sens d'introduction (150 ; 248) et peut être retirée du au moins un logement (126, 128 ; 222, 224 ; 296, 298 ; 330) dans le sens inverse (152 ; 250) du sens d'introduction (150 ; 248) ;
- le au moins un logement (126, 128 ; 222, 224 ; 296, 298 ; 330) comprend un dispositif d'immobilisation destiné à l'unité de batterie (122 ; 124) associée ;
- le au moins un logement (126, 128 ; 222, 224 ; 296, 298 ; 330) comprend une glissière de guidage (138) destinée à l'unité de batterie (122 ; 124) associée ;
- le au moins un logement (126, 128 ; 222, 224 ; 296, 298 ; 330) permet d'accueillir une unité de batterie qui est un poids d'équilibrage pour une unité de batterie électriquement fonctionnelle (122 ; 124) et dont le poids correspond à celui l'unité de batterie électriquement fonctionnelle (122 ; 124) ;
- le panneau de commande (112) et le connecteur d'aspiration (106) sont agencés sur le même côté transversal (48).

18. Aspirateur selon l'une quelconque des revendications précédentes, **caractérisé par** au moins un premier logement (126 ; 222) et un second logement (128 ; 224), et en particulier
**caractérisé par** au moins une des caractéristiques ci-dessous :
- le premier logement (126 ; 222) et le second logement (128 ; 224) sont agencés au niveau du corps d'appareil (12) de manière symétrique et en particulier de manière symétrique par rapport à un plan géométrique médian (116) du corps d'appareil (12), ou sont agencés au niveau du corps d'appareil (12) sur le plan médian (116), dans lequel le plan médian (116) est orienté de manière transversale par rapport à un côté transversal (48) ;
- le premier logement (126 ; 222) et le second logement (128 ; 224) sont espacés dans une direction transversale par rapport à un plan géométrique médian (116) du corps d'appareil (12) ;
- au moins une sous-région du dispositif de soufflante (72) est agencée au niveau du corps d'appareil (12) entre le premier logement (126 ; 222) et le second logement (128 ; 224) ;
- un dispositif de commande (96) est agencé au niveau du corps d'appareil (12) entre le premier logement (126 ; 222) et le second logement (128 ; 224) ;
- le panneau de commande (112) est agencé au niveau du corps d'appareil (12) entre le premier logement (126 ; 222) et le second logement (128 ; 224) ;
- le connecteur d'aspiration (106) est agencé au niveau du corps d'appareil (12) entre le premier logement (126 ; 222) et le second logement (128 ; 224) ;
- le premier logement (126 ; 222) et le second logement (128 ; 224) sont agencés au niveau d'une tête d'aspiration (16 ; 218) du corps d'appareil (12), en particulier avec au moins une des caractéristiques ci-dessous :
- un tableau de commande (112) est agencé au niveau de la tête d'aspiration (16 ; 218) ;
- un connecteur d'aspiration (106) est agencé au niveau de la tête d'aspiration (16 ; 218) ou au niveau d'un réservoir de produit d'aspiration.

19. Aspirateur selon l'une quelconque des revendications précédentes, **caractérisé en ce qu'**un bloc central (132), sur lequel est positionné un tableau de commande (112), est agencé au niveau du corps d'appareil (12), et **en ce que** respectivement un logement (126, 128 ; 222, 224) est agencé au niveau du corps d'appareil (12) des deux côtés du bloc central (132), et en particulier
**caractérisé par** au moins une des caractéristiques ci-dessous :
- un connecteur d'aspiration (106) se trouve au niveau du bloc central (132) ;
- le bloc central (132) présente un côté extérieur qui forme une partie d'un côté transversal (48) ;
- le bloc central (132) comprend une traverse (134) qui est positionnée au-dessus des logements (126, 128 ; 222, 224 ; 296, 298 ; 330) par rapport à un axe vertical (58) du corps d'appareil (12) ;
- le bloc central (132) est en forme de I ou en forme de T ;
- le bloc central (132) se trouve au niveau d'une tête d'aspiration (16) du corps d'appareil (12) ;
- un dispositif de commande (96) est agencé au niveau du bloc central (132) ;
- le bloc central (132) est réalisé de manière symétrique par rapport à un plan géométrique médian (116) du corps d'appareil (12) ;
- un couvercle mobile (104), destiné à un espace de réception (86) du corps d'appareil (12) au sein duquel est/sont agencé(s) un dispositif de nettoyage de filtre (88) destiné à un dispositif de filtration (82) et/ou le dispositif de filtration (82), est en appui sur le bloc central (132) ;
- une poignée (178) est agencée au niveau du couvercle mobile (104) ;
- le au moins un logement (126 ; 128) s'étend dans une région située sous le couvercle (104) ;
- le au moins un logement (126 ; 128) est positionné au niveau du corps d'appareil (12) de manière latérale par rapport au dispositif de soufflante (72) au moins dans une sous-région.

20. Aspirateur selon l'une quelconque des revendications 1 à 17, **caractérisé en ce qu'**au moins un logement (330) est agencé entre un connecteur d'aspiration (318) et un panneau de commande (326) par rapport à un axe vertical (346) du corps d'appareil (312), et en particulier
**caractérisé en ce que** le panneau de commande (326) est agencé au niveau d'une tête d'aspiration (324) du corps d'appareil (312) et le connecteur d'aspiration (318) est agencé au niveau d'un réservoir de produit d'aspiration (316) du corps d'appareil (312), dans lequel le au moins un logement (330) est en particulier agencé au niveau d'une bague intermédiaire (320) qui est agencée entre le réservoir de produit d'aspiration (316) et la tête d'aspiration (324), en particulier avec au moins une des caractéristiques ci-dessous :
- la bague intermédiaire (320) est amovible par rapport au réservoir de produit d'aspiration (316) ;
- la bague intermédiaire (320) est amovible par rapport à la tête d'aspiration (324) ;
- un espace de réception où se trouvent une pluralité de logements (330) est agencé au niveau de la bague intermédiaire (320), dans lequel l'espace de réception est en particulier conçu pour accueillir une pluralité d'unités de batterie (332).

21. Aspirateur selon l'une quelconque des revendications précédentes, **caractérisé en ce qu'**un dispositif de nettoyage de filtre (88) destiné à un dispositif de filtration (82) et/ou le dispositif de filtration (82) est/sont agencé(s) au niveau d'un plan géométrique médian (116) du corps d'appareil (12) qui se situe entre un premier logement (126) et un second logement (128).

22. Aspirateur selon l'une quelconque des revendications précédentes, **caractérisé par** un dispositif de filtration (82) et un dispositif de nettoyage de filtre (88) destiné au dispositif de filtration (82), dans lequel un plan géométrique médian (116) orienté de manière perpendiculaire à un plan d'appui (56) du corps d'appareil (12) est associé au corps d'appareil (12), dans lequel un centre de gravité (118) du corps d'appareil (12) se trouve au moins approximativement sur le plan médian (116), dans lequel le dispositif de nettoyage de filtre (88) est agencé au niveau du corps d'appareil (12) de telle manière qu'un centre de gravité du dispositif de nettoyage de filtre (88) se trouve au moins approximativement sur le plan médian (116), et dans lequel le dispositif de batterie (120) est agencé au niveau du corps d'appareil (12) de telle manière qu'un centre de gravité du dispositif de batterie (120) se trouve au moins approximativement sur le plan médian (116), et en particulier
**caractérisé par** au moins une des caractéristiques ci-dessous :
- le dispositif de batterie (120) est agencé sur le plan médian (116) et/ou est agencé au niveau du corps d'appareil (12) de manière symétrique par rapport au plan médian (116) ;
- le dispositif de batterie (120) présente une pluralité d'unités de batterie (122 ; 124) qui sont agencées sur le plan médian (116) et/ou qui sont agencées de manière symétrique par rapport au plan médian (116) ;
- le dispositif de nettoyage de filtre (88) est agencé sur le plan médian (116) et/ou est réalisé de manière symétrique par rapport au plan médian (116) ;
- - le dispositif de nettoyage de filtre (88) présente une pluralité de vannes d'air extérieur (92) qui sont agencées sur le plan médian (116) et/ou qui sont agencées au niveau du corps d'appareil (12) de manière symétrique par rapport au plan médian (116).
